# EUROPEAN PATENT SPECIFICATION

(11) **EP 1 688 466 B1**
(45) Date of publication and mention of the grant of the patent: **26.11.2008**
(21) Application number: 06000905.7
(22) Date of filing: 17.01.2006
(51) Int. Cl.: C09D 11/00

(54) **Ink composition, ink jet recording method, printed material, method of producing planographic printing plate, and planographic printing plate**
Tintenzusammensetzung, Verfahren zum Tintenstrahldruck, bedrucktes Material, Verfahren zum Herstellen einer planographischen Druckplatte, planographische Druckplatte
Composition d'encre, méthode d'enregistrement par jet d'encre, produit imprimé, procédé de fabrication d'une plaque d'impression planographique, plaque d'impression planograpgique

(30) Priority: 04.02.2005 JP 2005029559
(43) Date of publication of application: 09.08.2006
(73) Proprietor: FUJIFILM Corporation, Minato-ku Tokyo (JP)
(72) Inventor: Tsuchimura, Tomokata, Yoshida-cho Haibara-gun Shizuoka-ken (JP)
(74) Representative: HOFFMANN EITLE

(56) References cited:
- US-A1- 2004 106 700
- US-A1- 2004 244 641
- PATENT ABSTRACTS OF JAPAN vol. 016, no. 063 (C-0911), 18 February 1992 (1992-02-18) & JP 03 259968 A (RICOH CO LTD), 20 November 1991 (1991-11-20)
- PATENT ABSTRACTS OF JAPAN vol. 2003, no. 01, 14 January 2003 (2003-01-14) & JP 2002 256192 A (FUJI PHOTO FILM CO LTD), 11 September 2002 (2002-09-11)

## Description

### BACKGROUND OF THE INVENTION

### FIELD OF THE INVENTION

The present invention relates to an ink composition used preferably in ink jet recording, an ink jet recording method, and printed material using the same; and further relates to a planographic printing plate obtained by using the ink, and a method of producing the planographic printing plate. The invention relates more specifically to an ink composition used preferably in ink jet recording that hardens at ha high sensitivity when exposed to radiation had has good preservation stability characteristics, an ink jet recording method, and printed material using the same; and to a planographic printing plate obtained by using the ink, and a method of producing the planographic printing plate.

### DESCRIPTION OF THE RELATED ART

As an image recording method wherein an image is formed on a support such as paper or the like based on an image data signal, there are the electrophotographic method, sublimation-type and fusion-type thermal transfer methods, the ink jet method and the like. Among these, ink jet method can be carried out with an inexpensive apparatus to directly form an image by discharging an ink onto only the necessary image sections on a support, thus can be used efficiently and the running cost is low. Further, the ink jet method is excellent in that the apparatus is simple and generates less noise.

As one of the image recording methods in the ink jet method, there is a technique of using an ink curable by irradiation with radiation such as ultraviolet light or the like to fix the ink on a support. The ink jet recording ink is curable by irradiation with radiation such as ultraviolet light, is characterized by relatively less odor and quick-drying properties, capable of forming an image with high sensitivity and high adhesiveness without bleeding, even on a support (for example, a plastic sheet and a metal plate) on which direct recording is usually difficult due to lack of ink absorptivity (see, for example, Japanese Patent Application Laid-Open (JP- A) No. 63-235382, JP-A No. 3-216379, JP-A No. 5-214280, Japanese Patent Application Publication (JP-B) No. 6-21256 and JP-B No. 6-62905.).

For the purpose of providing an ink jet recording ink not only having the properties described above but also being highly safe without irritant properties or sensitizing properties even upon application onto the skin, a composition comprising polymerizable compounds consisting of a specific radical polymerizable acrylate compound group and a coloring material has been proposed (see, for example, JP-A 2003-192943 and JP-A 2003-192944).

When such a radiation-curable ink for ink jet recording is used, higher sensitization toward radiation and higher qualities of an image formed by the fixed ink are demanded. This is because, when the sensitivity to radiation is sufficiently high, there are many advantages such as high curability, a reduction in the electric power consumed by a radiation source, longer longevity of the radiation source due to a reduction in the load on the radiation power source, and prevention of the generation of low-molecular materials attributable to insufficient curing. Also, when an image section on a planographic printing plate for offset printing is formed, particularly using the ink jet recording ink, the strength of the cured image section is increased by achieving higher sensitization to provide a planographic printing plate with high printing durability.

As a method of generally improving the sensitivity of a radiation-curable polymerizable compound to radiation, the use of various polymerization initiation systems is disclosed (see, for example, Bruce M. Monroe et al.: Chemical Review, Vol. 93, pp. 435-448 (1993)). However, there is no example where a polymerization initiation system satisfying storage stability and sufficient sensitivity in scanning light exposure is used in an ink for use in ink jet recording. Application of a radiation-curable ink for use in ink jet recording on a planographic printing plate which achieves storage stability and formation of a high-quality image with high printing durability (high adhesiveness) is not known.

US 2004/0106700 teaches an inkjet ink comprising a coloring fine particle dispersion containing at least one oil-soluble dye, a polymerizable hydrophobic ethylenic unsaturated monomer, and a polymerization initiator. The oil-soluble dye has an oxidation potential of 1.0 V or more.

### SUMMARY OF THE INVENTION

The inventors made extensive study, and as a result they found that a specific initiation system using a sensitizing colorant in combination with a polymerization initiator can be used to achieve the object described above, and the present invention was thereby competed.

That is, the invention is as follows:
<1> An ink composition comprising:
   a polymerizable compound; and
   an electron transfer photo-initiation system having at least one of (i) a combination of an electron donating initiator and a sensitizing colorant having a reduction potential of -1.0 V or more represented by any one of the formulae (1) to (4) and (ii) a combination of an electron accepting initiator and a sensitizing colorant having an oxidation potential of 1.6V or less represented by any one of the formulae (1), (2), (3) and (6): 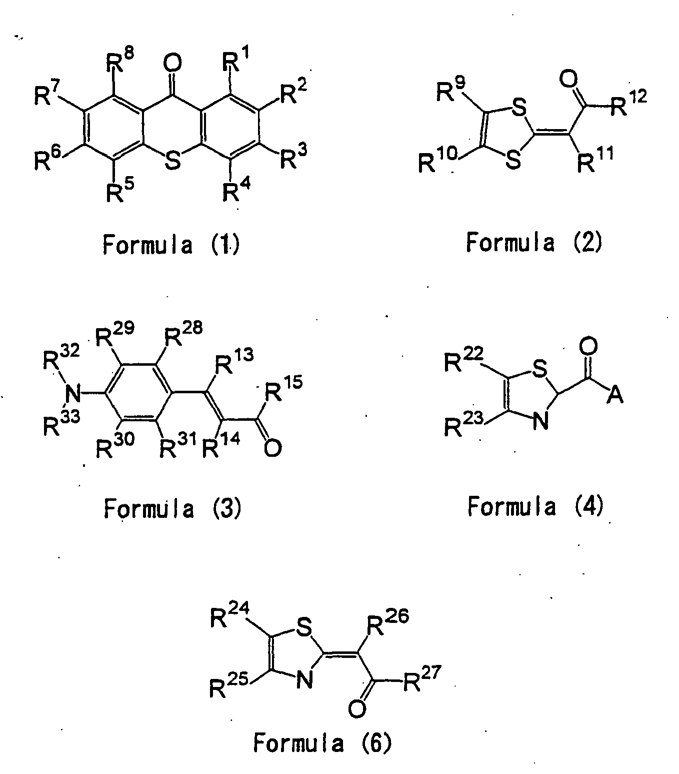
   wherein R¹ to R¹⁵ and R²² to R³³ independently represent a monovalent nonmetallic atomic group, and A represents an optionally substituted aromatic ring or an optionally substituted heterocycle; adjacent groups out-of R¹ to R¹⁵ and R²² to R³³ may be bound to each other to form a ring structure, and particularly R¹¹ and R¹², R¹³ to R¹⁵ or R²⁶ and R²⁷, may be bound to each other to form an acidic nucleus of the colorant.
<2> The ink composition of the above-mentioned <1>, wherein the sensitizing colorant having a reduction potential of -1.0 V or more has a structure represented by any one of the following formulae (7) to (10): 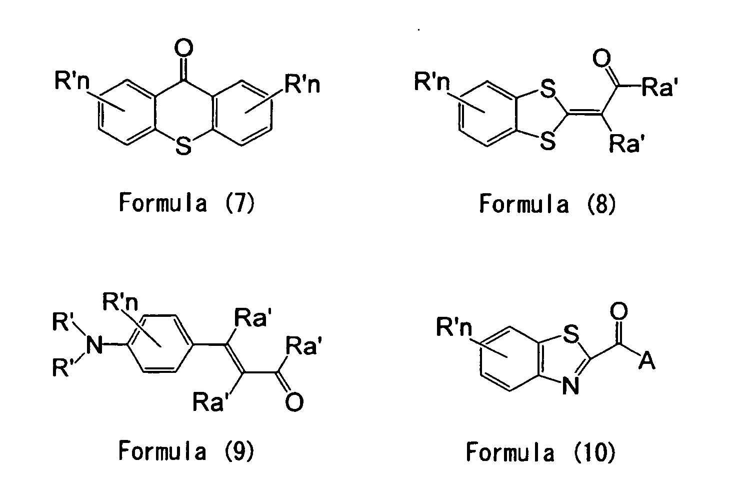 wherein R' and Ra' independently represent a monovalent nonmetallic atomic group, n represents 1 to 4, and A represents an aromatic ring which is allowed to have a substituent group or a heteroring which is allowed to have a substituent group; and adjacent R' groups may be bound to each other to form a ring structure, and adjacent Ra' groups may be bound to each other to form an acidic nucleus of the colorant, provided that at least one of R' and Ra' is an electron attractive substituent group having a Hammett's rule σₚ value of greater than 0.05.
<3> The ink composition of the above-mentioned <1>, which comprises the polymerizable compound and an electron transfer photo-initiation system having (ii) the combination of an electron accepting initiator and a sensitizing colorant having an oxidation potential of 1.6 V or less.
<4> The ink composition of the above-mentioned <3>, wherein the sensitizing colorant having an oxidation potential of 1.6 V or less has a structure represented by any one of the following formulae (11) to (14): 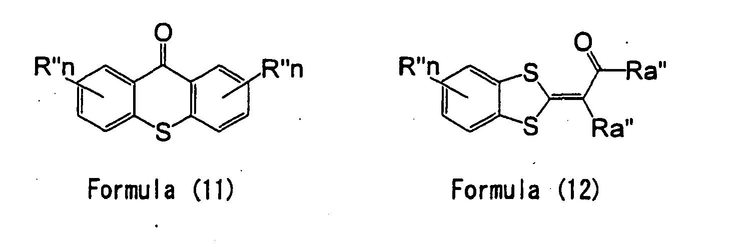 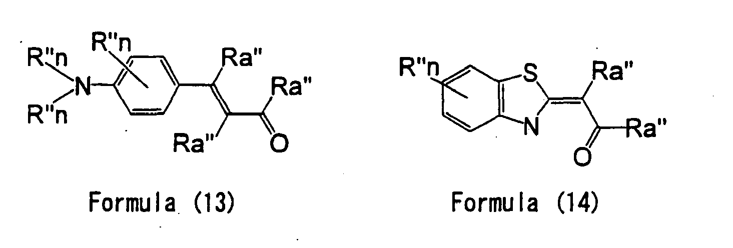 wherein R" and Ra" independently represent a monovalent nonmetallic atomic group, and n represents 1 to 4; and adjacent R" groups may be bound to each other to form a ring structure, and adjacent Ra" groups may be bound to each other to form an acidic nucleus of the colorant, provided that at least one of R" and Ra" is an electron donating substituent group having a Hammett's rule σₚ value of less than -0.1.
<5> The ink composition of the above-mentioned <3>, wherein the electron accepting initiator is a compound selected from the group consisting of a compound having a carbon-halogen bond, a compound having a nitrogen-nitrogen bond or a nitrogenous heterocycle-nitrogenous heterocycle bond, an onium compound, an active ester compound, a ferrocene or iron-allene complex compound, and a disulfone compound.
<6> The ink composition of the above-mentioned <5>, wherein the onium compound is an onium salt represented by any one of the following formulae (I) to (III):

   Formula (I) Ar¹¹-I⁺-Ar¹² (Z¹¹)⁻

   Formula (II) Ar²¹-N⁺≡N (Z²¹)⁻

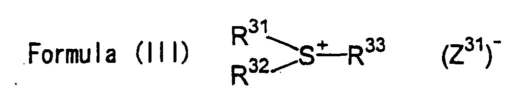

   wherein Ar¹¹ and Ar¹² independently represent an aryl group containing 20 or less carbon atoms and which is allowed to have a substituent group, and (Z¹¹)⁻ represents a counterion selected from the group consisting of a halogen ion, a perchlorate ion, a tetrafluoroborate ion, a hexafluorophosphate ion, and a sulfonate ion;
   wherein Ar²¹ represents an aryl group having 20 or less carbon atoms and which is allowed to have a substituent group, and (Z²¹)⁻ represents one of the same selection of counterions as (Z¹¹)⁻ ; and
   wherein R³¹, R³² and R³³ may the same or different, and each represent an aryl group having 20 or less carbon atoms and which is allowed to have a substituent group, and (Z³¹)⁻ represents one of the same selection of counterions as (Z¹¹)⁻.
<7> The ink composition of any one of the above-mentioned <1> to <6>, which further comprises a colorant.
<8> The ink composition of the above-mentioned <7>, wherein the colorant is a pigment or an oil-soluble dye.
<9> The ink composition of the above-mentioned <8>, wherein the oxidation potential of the oil-soluble dye is 1.0 V or more with respect to a saturated calomel electrode (SCE).
<10> The ink composition of any one of the above-mentioned <1> to <9>, which is for use in ink jet recording.
<11> An ink jet recording method, comprising: discharging the ink composition of any one of the above-mentioned <1> to <10> through an ink jet printer onto a recording medium; and curing the discharged ink composition by irradiation with radiation.
<12> The ink jet recording method of the above-mentioned <11>, wherein the radiation is emitted from a light-emitting diode generating ultraviolet rays having an emission wavelength peak between 360 and 420 nm and a maximum luminous intensity of 10 to 1,000 mW/cm² on the surface of the recording medium.
<13> A printed material prepared by discharging the ink composition of any one of the above-mentioned <1> to <10> through an ink jet printer onto a recording medium and curing the discharged ink composition by irradiation with active radiation.
<14> A method of producing a planographic printing plate, which comprises discharging the ink composition of any one of the above-mentioned <1> to <10> onto a hydrophilic support and then curing the ink composition by irradiation, with radiation thereby forming a hydrophobic region.
<15> A planographic printing plate having a hydrophobic region formed by discharging the ink composition of any one of the above-mentioned <1> to <10> onto a hydrophilic support and then curing the ink composition by irradiation with radiation.

### DETAILED DESCRIPTION OF THE INVENTION

The ink composition of the present invention can be used in usual printing to form a high-quality image and high-strength image thus giving a high-quality printed material, and can be preferably used in production of resists, color filters and optical disks, and is useful as an optical shaping material.

By applying the ink jet recording method, the ink composition of the invention can be cured with high sensitivity on even a non-absorptive recording medium to form a high-strength image region directly on the basis of digital data, and is thus used preferably in production of a planographic printing plate, particularly a planographic printing plate of larger area (A2 or more in size), and the resulting planographic printing plate is excellent in printing durability.

According to the invention, there can be provided an ink composition excellent in storage stability and curable with high sensitivity upon irradiation with radiation to form a high-quality image excellent in adhesion to a recording medium, an ink jet recording method using the ink composition, and a printed material obtained by the ink jet recording method.

According to the invention, the ink composition of the invention can be used to provide a planographic printing plate excellent in printing durability, having a high-strength and high-quality image region based on digital data, as well as a method of producing the same.

The ink composition of the invention comprises (b) a polymerizable compound and (a) an electron transfer photo-initiation system having (i) a combination of an electron donating initiator and a sensitizing colorant having a reduction potential of -1.0 V or more and/or (ii) a combination of an electron accepting initiator and a sensitizing colorant having an oxidation potential of 1.6 V or less.

The ink composition of the invention is cured by applying energy capable of generating an active species from the electron transfer photo-initiation system (a). This energy is preferably radiation, and the radiation encompasses α-rays, γ-rays, X-rays, UV rays, visible light, infrared light and electron rays, among which UV rays and electron rays are preferable from the viewpoint of curing sensitivity and easy availability of an apparatus, and particularly UV rays are preferable. Accordingly, the ink composition of the invention is preferably an ink composition curable by irradiation with UV rays as the radiation.

Hereinafter, the respective constituent ingredients used in the ink composition of the invention are described respectively.

### [(a) Electron transfer initiation system]

An electron transfer initiation system (a) constituting the ink composition of the invention comprises at least one of the following combinations (i) and (ii):
(i) a combination of an electron donating initiator and a sensitizing colorant having a reduction potential of -1.0 V or more; and
(ii) a combination of an electron accepting initiator and a sensitizing colorant having an oxidation potential of 1.6 V or less.

It is considered that in the electron transfer initiation system in the invention, the sensitizing colorant absorbs light to execute electron donation and acceptance (electron transfer) with the coexisting initiator thereby bringing about a colorant-sensitizing process of promoting generation of an active species attributable to polymerization. The efficiency of electron transfer plays an important role in the sensitivity of the electron transfer initiation system. The inventors found that the above-mentioned combination (i) or (ii) of a colorant having a certain potential characteristic and an initiator can be used in the electron transfer initiation system to significantly increase the efficiency of electron transfer thereby significantly improving the sensitivity.

For improving the efficiency of electron transfer, the amount of free energy changed due to electron transfer between the initiator and the sensitizing colorant in an excited state should be increased. In this case, the oxidation potential or reduction potential of the sensitizing colorant can suitably selected to increase the efficiency of sensitization (sensitizing ability) of the initiator.

The ink composition of the invention can achieve high sensitization because the electron transfer initiation system excellent in the efficiency of electron transfer is used as described above. By using this electron transfer initiation system, polymerization is not generated and dark polymerization in the ink composition is suppressed insofar as the sensitizing colorant does not absorb light, so the ink composition of the invention also has an effect of excellent storage stability.

When the ink composition of the invention is cured on a recording medium, the efficiency of light absorption in the direction of depth is improved due to use of the highly sensitive electron transfer initiation system, and thus the efficiency of decomposition of the initiator in the interface on the recording medium is increased, thus resulting in bringing about an effect of excellent adhesion of the ink after curing to the recording medium.

The ink composition of the invention makes use of the highly sensitive electron transfer initiation system, and can thus reduce the amount of the initiator, as compared with an ink composition using an initiator decomposed directly with light. Accordingly, the ink composition of the invention suppresses precipitation of crystals in the ink composition, and is thus excellent in discharge stability and suppresses generation of a bad smell attributable to the initiator, and furthermore, a coating of the ink composition after curing is excellent in strength.

### (Sensitizing colorant having a reduction potential of -1.0 V or more)

In the case of the combination (i) above, that is, in the case where an electron donating initiator is used as the initiator, a sensitizing colorant which in an excited state accepts an electron easily from the electron donating initiator, has a high sensitizing ability, and for high sensitizing ability, the reduction potential of the sensitizing colorant is -1.0 V or more, preferably -0.85 V or more, more preferably -0.7 V or more, still more preferably -0.5 V or more.

It is effective to decrease the HOMO level of the colorant molecule in order to allow the colorant to easily accept an electron. Accordingly, the sensitizing colorant is particularly preferably the one having the HOMO level decreased by introducing an electron attractive substituent group having preferably a Hammett's rule σₚ value of greater than 0.05, more preferably a σₚ value of greater than 0.1, into an atom participating in the HOMO orbital in its molecule. For the sensitizing colorant, not only the potential but also the structure is important for sensitizing ability, and colorants having the structures represented by the following formulae (1) to (4) are used.

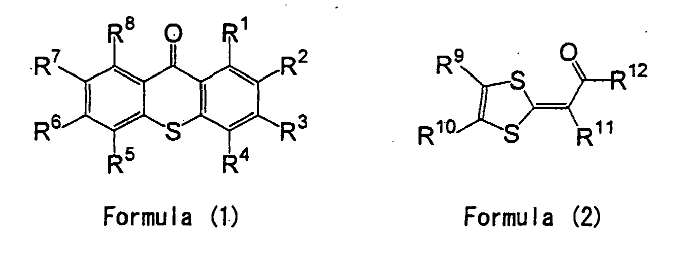

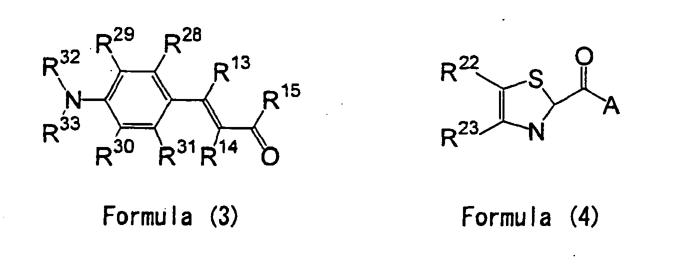

In the formulae (1) to (4) above, R¹ to R³³ independently represent a monovalent nonmetallic atomic group, and A represents an optionally substituted aromatic ring and an optionally substituted heterocycle. Adjacent groups out of R¹ to R³³ may be bound to each other to form a ring structure, and particularly R¹¹ and R¹², and R¹³ to R¹⁵, may be bound to each other to form an acidic nucleus of the colorant.

Hereinafter, the sensitizing colorants represented by the formulae (1) to (4) are described in more detail.

In the formulae (1) to (4), R¹ to R³³ independently represent a monovalent nonmetallic atomic group. The monovalent nonmetallic atomic group includes, for example, a hydrogen atom, a substituted or unsubstituted alkyl group, a substituted or unsubstituted aryl group, a halogen atom (-F, -Br, -Cl, -I), hydroxyl group, alkoxy group, aryloxy group, mercapto group, alkylthio group, arylthio group, alkyldithio group, aryldithio group, amino group, N-alkylamino group, N,N-dialkylamino group, N-arylamino group, N,N-diarylamino group, N-alkyl-N-arylamino group, acyloxy group, carbamoyloxy group, N-alkylcarbamoyloxy group, N-arylcarbamoyloxy group, N,N-dialkylcarbamoyloxy group, N,N-diarylcarbamoyloxy group, N-alkyl-N-arylcarbamoyloxy group, alkyl sulfoxy group, aryl sulfoxy group, acylthio group, acylamino group, N-alkyl acylamino group, N-aryl acylamino group, ureido group, N'-alkyl ureido group, N',N'-dialkyl ureido group, N'-aryl ureido group, N',N'-diaryl ureido group, N'-alkyl-N'-aryl ureido group, N-alkyl ureido group, N-aryl ureido group, N'-alkyl-N-alkyl ureido group, N'-alkyl-N-aryl ureido group, N',N'-dialkyl-N-alkyl ureido group, N',N'-dialkyl-N-aryl ureido group, N'-aryl-N-alkyl ureido group, N'-aryl-N-aryl ureido group, N',N'-diaryl-N-alkyl ureido group, N',N'-diaryl-N-aryl ureido group, N'-alkyl-N'-aryl-N-alkyl ureido group, N'-alkyl-N'-aryl-N-aryl ureido group, alkoxycarbonylamino group, aryloxycarbonylamino group, N-alkyl-N-alkoxycarbonylamino group, N-alkyl-N-aryloxycarbonylamino group, N-aryl-N-alkoxycarbonylamino group, N-aryl-N-aryloxycarbonylamino group, formyl group, acyl group, carboxyl group, alkoxycarbonyl group, aryloxycarbonyl group, carbamoyl group, N-alkylcarbamoyl group, N,N-dialkylcarbamoyl group, N-arylcarbamoyl group, N,N-diarylcarbamoyl group, N-alkyl-N-arylcarbamoyl group, alkyl sulfinyl group, aryl sulfinyl group, alkyl sulfonyl group, aryl sulfonyl group, sulfo group (-SO₃H) and its conjugated basic group (referred to hereinafter as sulfonato group), alkoxy sulfonyl group, aryloxy sulfonyl group, sulfinamoyl group, N-alkyl sulfinamoyl group, N,N-dialkyl sulfinamoyl group, N-aryl sulfinamoyl group, N,N-diaryl sulfinamoyl group, N-alkyl-N-aryl sulfinamoyl group, sulfamoyl group, N-alkylsulfamoyl group, N,N-dialkylsulfamoyl group, N-arylsulfamoyl group, N,N-diarylsulfamoyl group, N-alkyl-N-arylsulfamoyl group, pohsphono group (-PO₃H₂) and its conjugated basic group (referred to hereinafter as phosphonato group), dialkyl phosphono group (-PO₃(alkyl)₂), diaryl phosphono group (-PO₃(aryl)₂), alkyl aryl phosphono group (-PO₃(alkyl)(aryl)), monoalkyl phosphono group (-PO₃H(alkyl)) and its conjugated basic group (referred to hereinafter as alkyl phosphonato group), monoaryl phosphono group (-PO₃H(aryl)) and its conjugated basic group (referred to hereinafter as aryl phosphonato group), phosphonoxy group (-OPO₃H₂) and its conjugated basic group (referred to hereinafter as phosphonatoxy group), dialkyl phosphonoxy group (-OPO₃(alkyl)₂), diaryl phosphonoxy group (-OPO₃(aryl)₂), alkyl aryl phosphonoxy group (-OPO₃(alkyl)(aryl)), monoalkyl phosphonoxy group (-OPO₃H(alkyl)) and its conjugated basic group (referred to hereinafter as alkyl phosphonatoxy group), monoaryl phosphonoxy group (-OPO₃H(aryl)) and its conjugated basic group (referred to hereinafter as aryl phosphonatoxy group), cyano group, nitro group, heteroaryl group, alkenyl group and alkynyl group, and more specific examples are shown below.

When each of R¹ to R³³ is an alkyl group, preferable examples thereof include C1 to C20 linear, branched or cyclic alkyl groups, and specific examples include a methyl group, ethyl group, propyl group, butyl group, pentyl group, hexyl group, heptyl group, octyl group, nonyl group, decyl group, undecyl group, dodecyl group, tridecyl group, hexadecyl group, octadecyl group, eicosyl group, isopropyl group, isobutyl group, sec-butyl group, tert-butyl group, isopentyl group, neopentyl group, 1-methylbutyl group, isohexyl group, 2-ethylhexyl group, 2-methylhexyl group, cyclohexyl group, cyclopentyl group, and 2-norbornyl group.

Among these groups, C1 to C12 linear, C3 to C12 branched or C5 to C10 cyclic alkyl groups are more preferable.

When each of R¹ to R³³ is a substituted alkyl group, its substituent group includes monovalent nonmetallic atomic groups excluding hydrogen, and preferable examples include a halogen atom (-F, -Br, -Cl, -I), hydroxyl group, alkoxy group, aryloxy group, mercapto group, alkylthio group, arylthio group, alkyldithio group, aryldithio group, amino group, N-alkylamino group, N,N-dialkylamino group, N-arylamino group, N,N-diarylamino group, N-alkyl-N-arylamino group, acyloxy group, carbamoyloxy group, N-alkylcarbamoyloxy group, N-arylcarbamoyloxy group, N,N-dialkylcarbamoyloxy group, N,N-diarylcarbamoyloxy group, N-alkyl-N-arylcarbamoyloxy group, alkyl sulfoxy group, aryl sulfoxy group, acylthio group, acylamino group, N-alkyl acylamino group, N-aryl acylamino group, ureido group, N'-alkyl ureido group, N',N'-dialkyl ureido group, N'-aryl ureido group, N',N'-diaryl ureido group, N'-alkyl-N'-aryl ureido group, N-alkyl ureido group, N-aryl ureido group, N'-alkyl-N-alkyl ureido group, N'-alkyl-N-aryl ureido group, N',N'-dialkyl-N-alkyl ureido group, N',N'-dialkyl-N-aryl ureido group, N'-aryl-N-alkyl ureido group, N'-aryl-N-aryl ureido group, N',N'-diaryl-N-alkyl ureido group, N',N'-diaryl-N-aryl ureido group, N'-alkyl-N'-aryl-N-alkyl ureido group, N'-alkyl-N'-aryl-N-aryl ureido group, alkoxycarbonylamino group, aryloxycarbonylamino group, N-alkyl-N-alkoxycarbonylamino group, N-alkyl-N-aryloxycarbonylamino group, N-aryl-N-alkoxycarbonylamino group, N-aryl-N-aryloxycarbonylamino group, formyl group, acyl group, carboxyl group, alkoxycarbonyl group, aryloxycarbonyl group, carbamoyl group, N-alkylcarbamoyl group, N,N-dialkylcarbamoyl group, N-arylcarbamoyl group, N,N-diarylcarbamoyl group, N-alkyl-N-arylcarbamoyl group, alkyl sulfinyl group, aryl sulfinyl group, alkyl sulfonyl group, aryl sulfonyl group, sulfo group (-SO₃H) and its conjugated basic group (referred to hereinafter as sulfonato group), alkoxy sulfonyl group, aryloxy sulfonyl group, sulfinamoyl group, N-alkyl sulfinamoyl group, N,N-dialkyl sulfinamoyl group, N-aryl sulfinamoyl group, N,N-diaryl sulfinamoyl group, N-alkyl-N-aryl sulfinamoyl group, sulfamoyl group, N-alkylsulfamoyl group, N,N-dialkylsulfamoyl group, N-arylsulfamoyl group, N,N-diarylsulfamoyl group, N-alkyl-N-arylsulfamoyl group, pohsphono group (-PO₃H₂) and its conjugated basic group (referred to hereinafter as phosphonato group), dialkyl phosphono group (-PO₃(alkyl)₂), diaryl phosphono group (-PO₃(aryl)₂), alkyl aryl phosphono group (-PO₃(alkyl)(aryl)), monoalkyl phosphono group (-PO₃H(alkyl)) and its conjugated basic group (referred to hereinafter as alkyl phosphonato group), monoaryl phosphono group (-PO₃H(aryl)) and its conjugated basic group (referred to hereinafter as aryl phosphonato group), phosphonoxy group (-OPO₃H₂) and its conjugated basic group (referred to hereinafter as phosphonatoxy group), dialkyl phosphonoxy group (-OPO₃(alkyl)₂), diaryl phosphonoxy group (-OPO₃(aryl)₂), alkyl aryl phosphonoxy group (-OPO₃(alkyl)(aryl)), monoalkyl phosphonoxy group (-OPO₃H(alkyl)) and its conjugated basic group (referred to hereinafter as alkyl phosphonatoxy group), monoaryl phosphonoxy group (-OPO₃H(aryl)) and its conjugated basic group (referred to hereinafter as aryl phosphonatoxy group), cyano group, nitro group, aryl group, heteroaryl group, alkenyl group and alkynyl group.

Examples of the aryl group in these substituent groups include a phenyl group, biphenyl group, naphthyl group, tolyl group, xylyl group, mesityl group, cumenyl group, chlorophenyl group, bromophenyl group, chloromethylphenyl group, hydroxyphenyl group, methoxyphenyl group, ethoxyphenyl group, phenoxyphenyl group, acetoxyphenyl group, benzoyloxyphenyl group, methylthiophenyl group, phenylthiophenyl group, methylaminophenyl group, dimethylaminophenyl group, acetylaminophenyl group, carboxyphenyl group, methoxycarbonylphenyl group, ethoxyphenylcarbonyl group, phenoxycarbonylphenyl group, N-phenylcarbamoylphenyl group, cyanophenyl group, sulfophenyl group, sulfonatophenyl group, phosphonophenyl group, phosphonatophenyl group etc.

Examples of the heteroaryl group in the substituent groups described above include a monocyclic or polycyclic aromatic ring containing at least one of nitrogen, oxygen and sulfur atoms, preferably a 5- or 6-memberred aromatic substituent group such as furan, pyrrole, pyridine etc.

Examples of the alkenyl group in the substituent groups described above include a vinyl group, 1-propenyl group, 1-butenyl group, cinnamyl group, 2-chloro-1-ethenyl group etc., and examples of the alkynyl group include an ethynyl group, 1-propynyl group, 1-butynyl group, trimethylsilylethynyl group etc.

In the acyl group (G₁CO-) as one of the substituent groups described above, G₁ includes hydrogen, the alkyl group and aryl group described above.

Among the substituent groups described above, more preferable examples include a halogen atom (-F, -Br, -Cl, -I), alkoxy group, aryloxy group, alkylthio group, arylthio group, N-alkylamino group, N,N-dialkylamino group, acyloxy group, N-alkylcarbamoyloxy group, N-arylcarbamoyloxy group, acylamino group, formyl group, acyl group, carboxyl group, alkoxycarbonyl group, aryloxycarbonyl group, carbamoyl group, N-alkylcarbamoyl group, N,N-dialkylcarbamoyl group, N-arylcarbamoyl group, N-alkyl-N-arylcarbamoyl group, sulfo group, sulfonato group, sulfamoyl group, N-alkylsulfamoyl group, N,N-dialkylsulfamoyl group, N-arylsulfamoyl group, N-alkyl-N-arylsulfamoyl group, phosphono group, phosphonato group, dialkylphosphono group, diarylphosphono group, monoalkylphosphono group, alkylphosphonato group, monoarylphosphono group, arylphosphonato group, phosphonoxy group, phosphonatoxy group, aryl group and alkenyl group.

On one hand, the alkylene groups constituting the substituted alkyl group include the same group as the above-mentioned C1 to C20 alkyl group except that one hydrogen atom on the alkyl group is replaced to form a divalent organic residue, and preferable examples include C1 to C12 linear, C3 to C12 branched or C5 to C 10 cyclic alkylene groups.

Specific examples of substituted alkyl groups preferable as R¹ to R³³ obtained by combining the above-mentioned substituent group with the alkylene group include a chloromethyl group, bromomethyl group, 2-chloroethyl group, trifluoromethyl group, methoxymethyl group, methoxyethoxyethyl group, allyloxymethyl group, phenoxymethyl group, methylthiomethyl group, tolylthiomethyl group, ethylaminoethyl group, diethylaminopropyl group, morpholinopropyl group, acetyloxymethyl group, benzoyloxymethyl group, N-cyclohexylcarbamoyloxyethyl group, N-phenylcarbamoyloxyethyl group, acetylaminoethyl group, N-methylbenzoylaminopropyl group, 2-oxoethyl group, 2-oxopropyl group, carboxypropyl group, methoxycarbonylethyl group, allyloxycarbonylbutyl group, chlorophenoxycarbonylmethyl group, carbamoylmethyl group, N-methylcarbamoylethyl group, N,N-dipropylcarbamoylmethyl group, N-(methoxyphenyl) carbamoylethyl group, N-methyl-N-(sulfophenyl) carbamoylmethyl group, sulfobutyl group, sulfonatobutyl group, sulfamoylbutyl group, N-ethylsulfamoylmethyl group, N,N-dipropylsulfamoylpropyl group, N-tolylsulfamoylpropyl group, N-methyl-N-(phosphonophenyl) sulfamoyloctyl group, phosphonobutyl group, phosphonatohexyl group, diethylphosphonobutyl group, diphenylphosphonopropyl group, methylphosphonobutyl group, methylphosphonatobutyl group, tolylphosphonohexyl group, tolylphosphonatohexyl group, phosphonoxypropyl group, phosphonatoxybutyl group, benzyl group, phenethyl group, α-methylbenzyl group, 1-methyl-phenylethyl group, p-methylbenzyl group, cinnamyl group, allyl group, 1-propenylmethyl group, 2-butenyl group, 2-methylallyl group, 2-methylpropenylmethyl group, 2-propynyl group, 2-butynyl group, 3-butynyl group, etc.

Specific examples of the aryl group preferable as R¹ to R³³ include a group wherein 1 to 3 benzene rings form a condensed ring and a group wherein a benzene ring and a 5-memberred unsaturated ring form a condensed ring, and specific examples include a naphthyl group, anthryl group, phenanthryl group, indenyl group, acenaphthenyl group and fluorenyl group, among which a naphthyl group is more preferable.

A preferable example of the substituted aryl group preferable as R¹ to R³³ is a group having a monovalent nonmetallic atomic group (excluding hydrogen) as a substituent group on a carbon atom forming a ring of the above-mentioned aryl group. Preferable examples of the substituent group include the same alkyl group as described above, the same substituted alkyl group as described above, and groups mentioned above as the substituent groups on the substituted alkyl group.

Preferable examples of the substituted aryl group include a biphenyl group, tolyl group, xylyl group, mesityl group, cumenyl group, chlorophenyl group, bromophenyl group, fluorophenyl group, chloromethylphenyl group, trifluoromethyphenyl group, hydroxyphenyl group, methoxyphenyl group, methoxyethoxyphenyl group, allyloxyphenyl group, phenoxyphenyl group, methylthiophenyl group, tolylthiophenyl group, ethylaminophenyl group, diethylaminophenyl group, morpholinophenyl group, acetyloxyphenyl group, benozyloxyphenyl group, N-cyclohexylcarbamoyloxyphenyl group, N-phenylcarbamoyloxyphenyl group, acetylaminophenyl group, N-methylbenzoylaminophenyl group, carboxyphenyl group, methoxycarbonylphenyl group, allyloxycarbonylphenyl group, chlorophenoxycarbonylphenyl group, carbamoylphenyl group, N-methylcarbamoylphenyl group, N,N-dipropylcarbamoylphenyl group, N-(methoxyphenyl) carbamoylphenyl group, N-methyl-N-(sulfophenyl) carbamoylphenyl group, sulfophenyl group, sulfonaphthophenyl group, sulfamoylphenyl group, N-ethylsulfamoylphenyl group, N,N-dipropylsulfamoylphenyl group, N-tolylsulfamoylphenyl group, N-methyl-N-(phosphonophenyl) sulfamoylphenyl group, phosphonophenyl group, phosphonatophenyl group, diethylphosphonophenyl group, diphenylphosphonophenyl group, methylphosphonophenyl group, methylphosphonatophenyl group, tolylphosphonophenyl group, tolylphosphonatophenyl group, allyl group, 1-propenylmethyl group, 2-butenyl group, 2-methylallylphenyl group, 2-methylpropenylphenyl group, 2-propynylphenyl group, 2-butynylphenyl group, 3-butynylphenyl group, etc.

In the formulae (1) to (4), adjacent groups out of R¹ to R³³ may be bound to each other to form a ring structure. The ring structure that can be formed includes an aromatic ring, an alicyclic ring and a heterocycle.

In the formulae (1) to (4), R¹¹ and R¹², and R¹³ to R¹⁵, may be bound to each other to an acidic nucleus in L. G. Broker et al., J. Am. Chem. Soc., 73, 5326-5358 (1951) and in merocyanine dyes.

Specific examples of the acidic nucleus that can be formed include a 1,3-dicarbonyl nucleus (for example, 1,3-indane dione, 1,3-cyclohexane dione, 5,5-dimethyl cyclohexane dione, 1,3-dioxane-4,6-dione etc.), pyrazolinone nucleus (for example, 3-methyl-1-phenyl-2-pyrazolin-5-one, 1-phenyl-2-pyrazolin-5-one, 1-(2-benzothiazolyl)-3-methyl-2-pyrazolin-5-one etc.), isooxazolinone nucleus (for example, 3-phenyl-2-isooxazolin-5-one, 3-methyl-2-isooxazolin-5-one etc.), oxyindole nucleus (for example, 1-alkyl-2,3-dihydro-2-oxyindole etc.), 2,4,6-trioxohexahydropyrimidine nucleus (for example, barbituric acid or 2-thiobarbituric acid and its N-substituted derivatives, for example, 1,3-diethyl barbituric acid, 1,3-diethyl-2-thiobarbituric acid, 1,3-dibutyl barbituric acid, 1,3-dibutyl-2-thiobarbituric acid, 1,3-diphenyl barbituric acid, 1,3-diphenyl-2-thiobarbituric acid, 1,3-dimethoxycarbonylmethyl barbituric acid, 1,3-dimethoxycarbonylmethyl-2-thiobarbituric acid etc.), 2-thio-2,4-thiazolidine dione nucleus (for example, rhodamine and its N-substituted derivatives, for example, 3-methyl rhodamine, 3-ethyl rhodamine, 3-phenyl rhodamine, 3-allyl rhodamine, 3-benzyl rhodamine, 3-carboxymethyl rhodamine, 3-carboxyethyl rhodamine, 3-methoxycarbonylmethyl rhodamine, 3-hydroxyethyl rhodamine, 3-morpholinoethyl rhodamine, etc.), 2-thio-2,4-oxazolidine dione nucleus (that is, 2-thio-2,4-(3H, 4H)-oxazole dione nucleus, for example, 2-ethyl-2-thio-2,4-oxazolidine dione etc.), thianaphthene nucleus (for example, 3(2H)-thianaphthene, 3(2H)-thianaphthene-1,1-dioxide etc.), 2-thio-2,5-thiazolidine dione nucleus (for example, 3-ethyl-2-thio-2,5-thiazolidine dione), 2,4-thiazolidine dione nucleus (for example, 2,4-thiazolidine dione, 3-ethyl-2,4-thiazolidine dione, 3-phenyl-2,4-thiazolidine dione etc.), thiazolidinone nucleus (for example, 4-thiazolidinone, 3-ethyl-4-thiazolidinone, 2-ethylmercapto-4-thiazolidinone, 2-methylphenylamino-4-thiazolidinone etc.), 2-imino-2-oxazolin-4-one nucleus (that is, pseudo-hydantoin nucleus), 2,4-imidazolidine dione nucleus (that is, hydantoin nucleus, for example, 2,4-imidazolidine dione, 3-ethyl-2,4-imidazolidine dione, 1,3-diethyl-2,4-imidazolidine dione etc.), 2-thio-2,4-imidazolidine dione nucleus (that is, thiohydantoin nucleus, for example, 2-thio-2,4-imidazolidine dione, 3-ethyl-2-thio-2,4-imidazolidine dione, 1,3-diethyl-2-thio-2,4-imidazolidine dione etc.), imidazoline-5-one nucleus (for example, 2-propylmercapto-2-imidazolinon-5-one etc.), furan-5-one nucleus, 4-hydroxy-2(1H)-pyridinone nucleus (for example, N-methyl-4-hydroxy-2-(1H)-pyridinone, N-methyl-4-hydroxy-2(1H)-quinolinone, N-butyl-4-hydroxy-2(1H)-quinolinone etc.), 4-hydroxy-2H-pyran-2-one nucleus (for example, 4-hydroxy coumarin etc.), thioindoxyl nucleus (for example, 5-methyl thioindoxyl etc.) etc., and these acidic nuclei may further have a substituent group.

The sensitizing colorant in the above-mentioned (i) is more preferably a structure represented by any one of the following formulae (7) to (10):

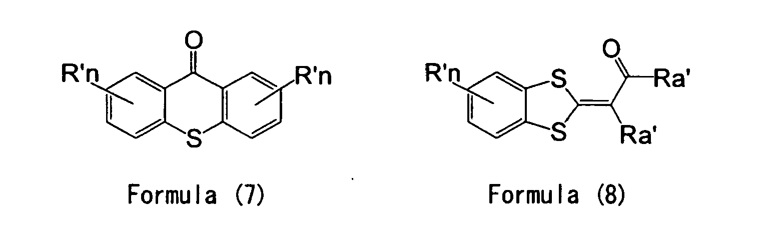

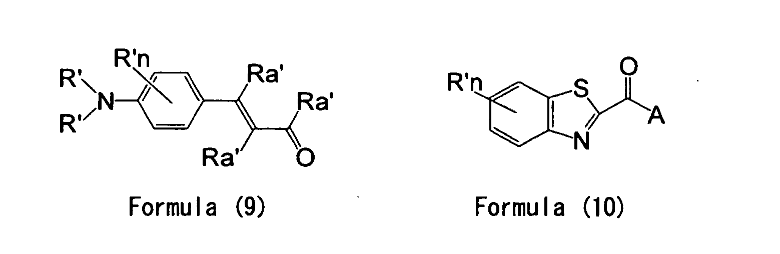

In the formulae (7) to (10) above, R' and Ra' independently represent a monovalent nonmetallic atomic group, n represents 1 to 4, and A represents an optionally substituted aromatic ring or an optionally substituted heterocycle. Adjacent R' groups may be bound to each other to form a ring structure, and adjacent Ra' groups may be bound to each other to form an acidic nucleus of the colorant. At least one of R' and Ra' is an electron attractive substituent group having a Hammett's rule σₚ value > 0.05.

A in the formulae (7) to (10) above is the same as A in the formula (4) above.

R' and Ra' in the formulae (7) to (10) are the same as R¹ to R³³ in the formulae (1) to (4) above, and at least one of R' and Ra' is an electron attractive substituent group having a Hammett's rule σₚ value > 0.05.

Specifically, the electron attractive substituent group having a Hammett's rule σₚ value > 0.05 includes -CN (0.66), -CF₃ (0.54), -COCH₃ (0.50), -COOH (0.45), -COOR (0.45), -NO₂ (0.78), -OCOCH₃ (0.31), -SH (0.15), -SOCH₃ (0.49), -SO₂CH₃ (0.72), -SO₂NH₂ (0.57), -SCOCH₃ (0.44), -F (0.06), -Cl (0.23), -Br (0.23), -I (0.18), -N⁺R₃ (0.85), -S⁺R₃ (0.90) and -PO₃H- (0.26), among which groups having σₚ values > 0.1 are preferable.

In the above-mentioned -COOR, -N⁺R₃ and -S⁺R₃, R represents an optionally substituted alkyl or aryl group.

In the formulae (7) to (10), the ring structure formed by R's and the acidic nucleus formed by Ra's have the same meanings as those of the ring structure and acidic nucleus in the formulae (1) to (4) above.

### (Sensitizing colorant having an oxidation potential of 1.6 V or less)

In the case of the combination (ii) above, that is, in the case where an electron accepting initiator is used as the initiator, the sensitizing colorant which in an excited state, gives electron easily to the electron accepting initiator, has a high sensitizing ability, and for the high sensitizing ability, the oxidation potential of the sensitizing colorant is 1.6 V or less, preferably 1.2 V or less, more preferably 0.9 V or less.

It is effective to increase the LUMO level of the sensitizing colorant in order to allow the colorant to easily give an electron. Accordingly, the sensitizing colorant is particularly preferably the one having the LUMO level increased by introducing an electron donating substituent group having preferably a Hammett's rule σₚ value of less than -0.1, more preferably a σₚ value of less than -0.3, into an atom participating in the LUMO orbital in its molecule. Structurally, the colorant is a colorant having a structure represented by any one of the formulae (1), (2) and (3) above or the following formula (6):

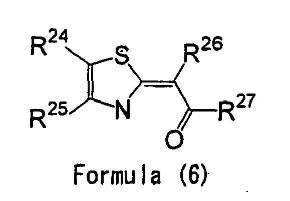

In the formula (6) above, R²⁴ to R²⁷ independently represent a monovalent nonmetallic atomic group, and R²⁶ and R²⁷ may be bound to each other to form an acidic nucleus of the colorant.

R²⁴ to R²⁷ in the formula (6) above have the same meaning as that of the monovalent nonmetallic atomic group in R¹ to R³³ in the formulae (1) to (4), and preferable examples thereof are also the same as described therein.

The acidic nucleus formed by combination of R²⁶ with R²⁷ in the formula (6) has the same meaning as that of the acidic nucleus in the formulae (1) to (4) above.

The sensitizing colorant in the above-mentioned (ii) is preferably a structure represented by any one of the following formulae (11) to (14). Among these, the formula (13) is preferable from the viewpoint of degradability of the initiator by electron transfer.

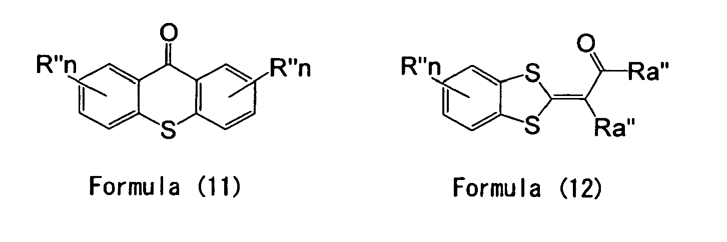

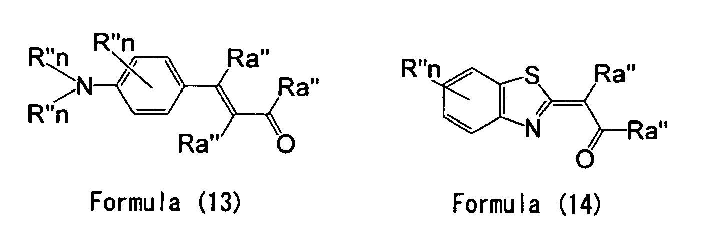

In the formulae (11) to (14) above, R" and Ra" independently represent a monovalent nonmetallic atomic group, and n represents 1 to 4. Adjacent R" groups may be bound to each other to form a ring structure, and adjacent Ra" groups may be bound to each other to form an acidic nucleus of the colorant. At least one of R" and Ra" is an electron donating substituent group having a Hammett's rule σₚ value < -0.1.

R" and Ra" in the formulae (11) to (14) above have the same meanings as those of R¹ to R³³ in the formulae (1) to (4) above, and at least one of R" and Ra" is an electron donating substituent group having a Hammett's rule σₚ value < -0.1.

Specifically, the electron donating substituent group having a Hammett's rule σₚ value < -0.1 includes -CH₃ (-0.17), -C₂H₅ (-0.15), -i-C₃H₇ (-0.15), -t-C₄H₉ (-0.20), -NH₂ (-0.66), -NR₂ (-0.83), -OH (-0.37), -OCH₃ (-0.27) and -OC₆H₅ (-0.32), among which groups having σₚ values < -0.3 are preferable.

In the above-mentioned -NR₂, R represents an optionally substituted alkyl or aryl group.

In the formulae (11) to (14), the ring structure formed by R"s and the acidic nucleus formed by Ra"s have the same meanings as those of the ring structure and acidic nucleus in the formulae (1) to (4) above.

Specific examples [(A-2) to (A-33), (B-1) to (B-67), (C-1) to (C-30), (D-1) to (D-37), and (E-1) to (E-40)] of the sensitizing colorant in the invention are shown below.

As the sensitizing colorants in the invention, those satisfying the structural requirements described above are preferably used, but the sensitizing colorants are not limited by the following specific examples.

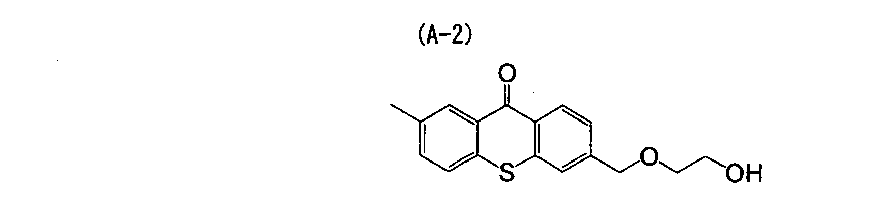

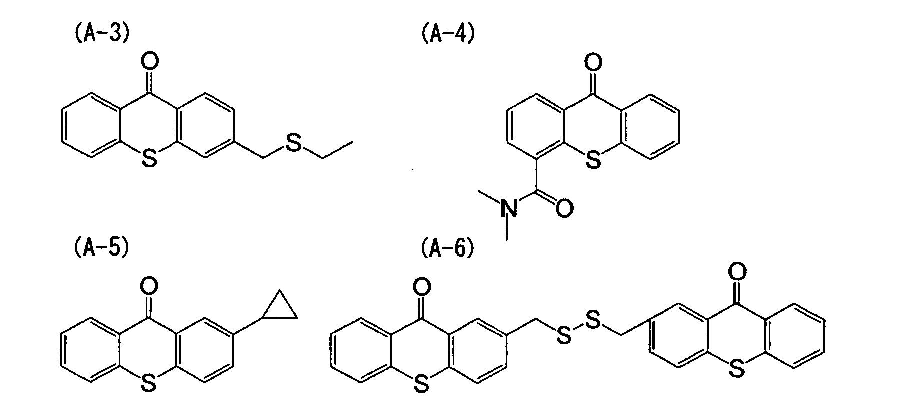

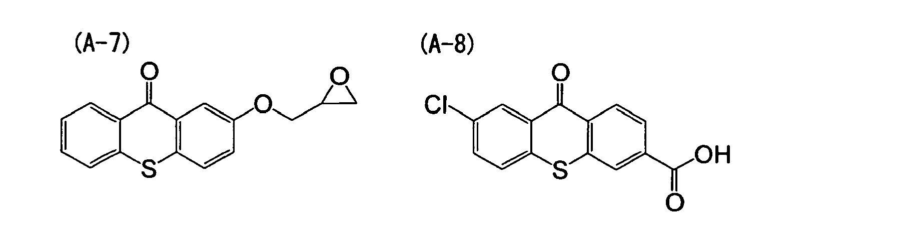

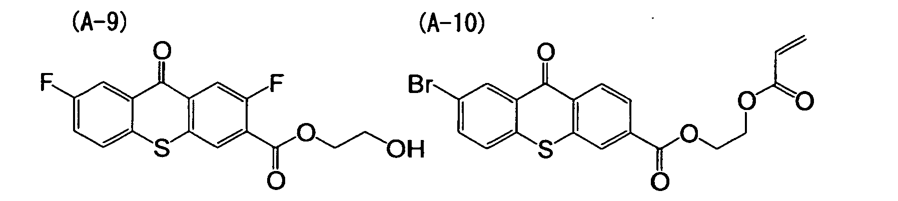

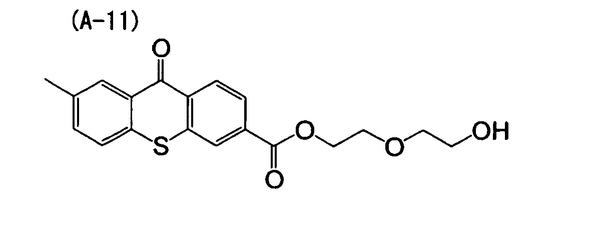

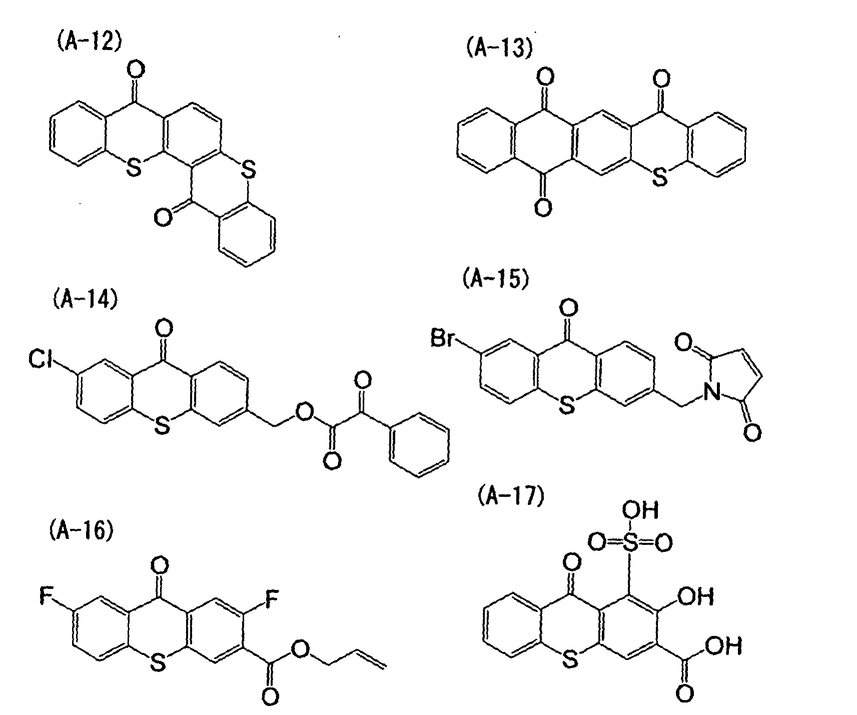

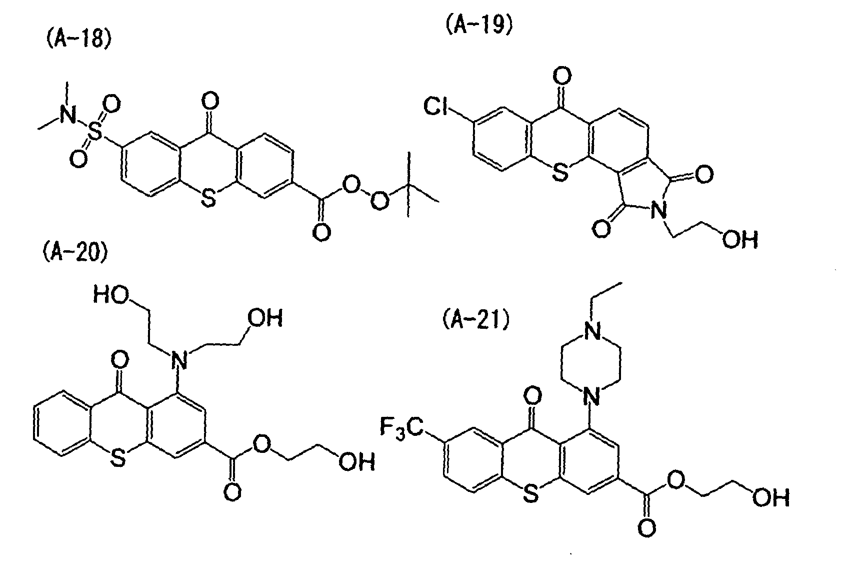

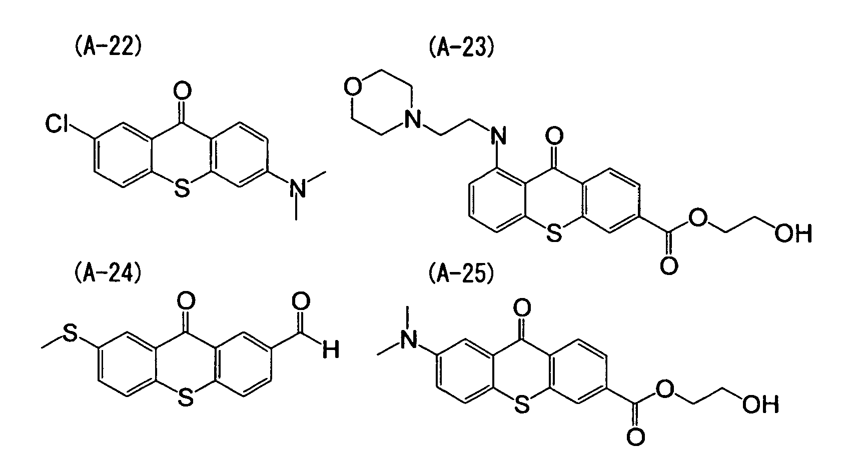

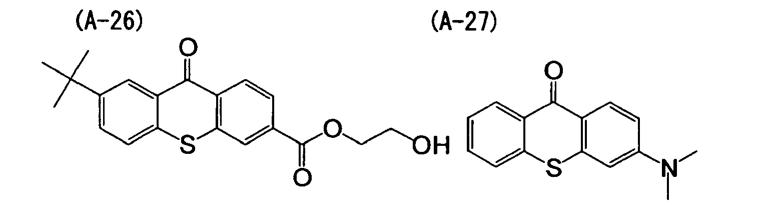

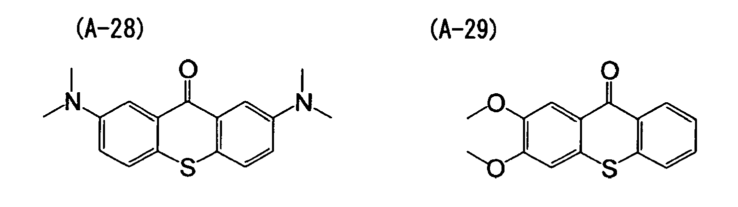

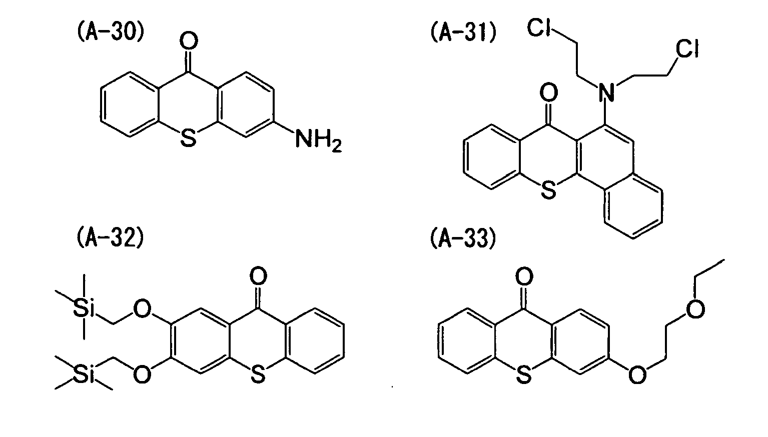

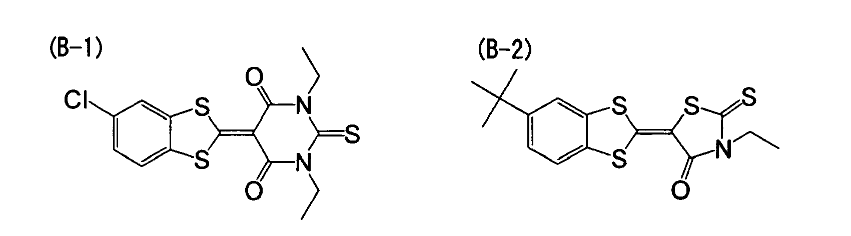

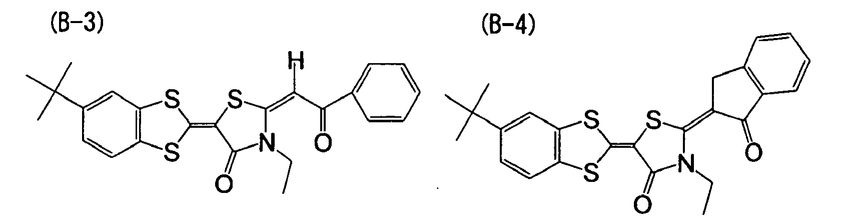

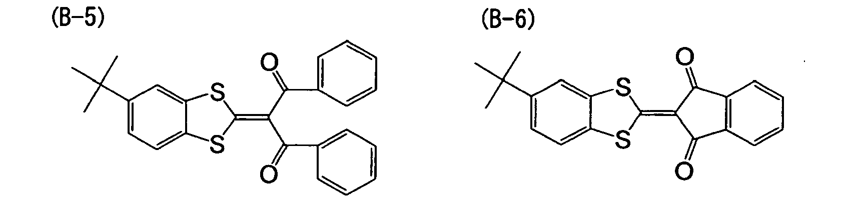

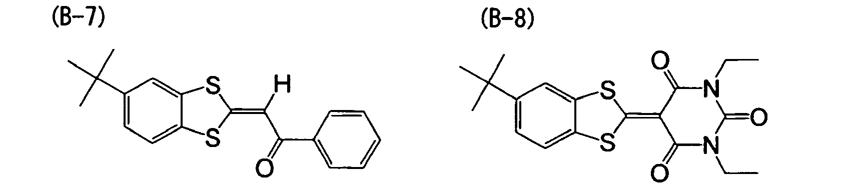

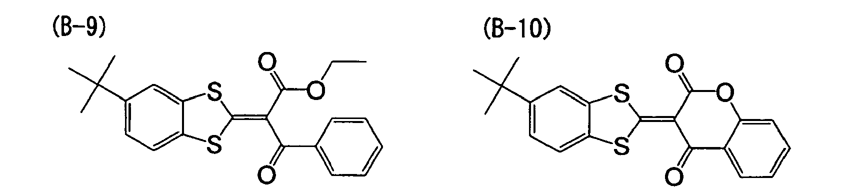

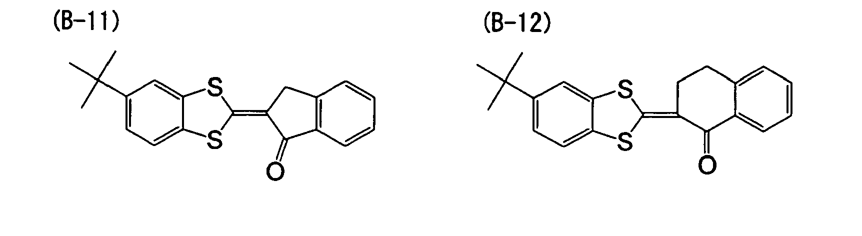

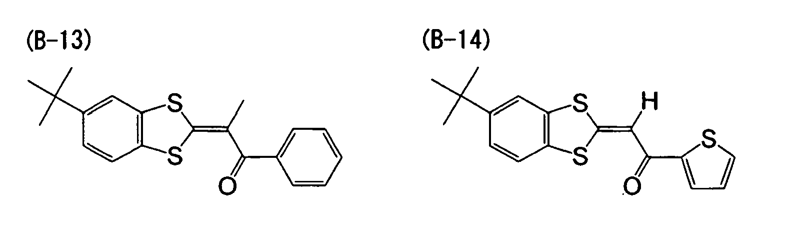

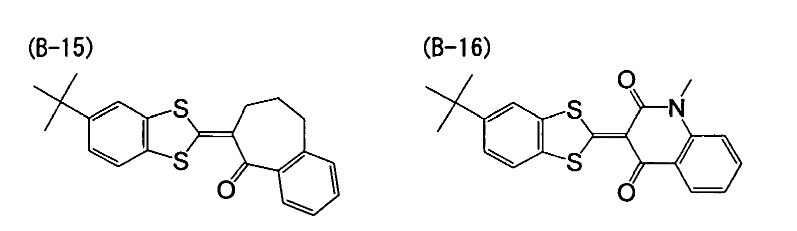

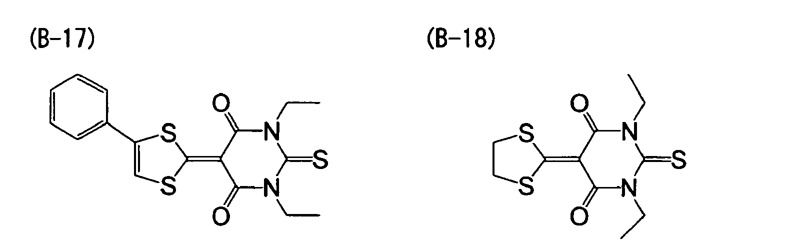

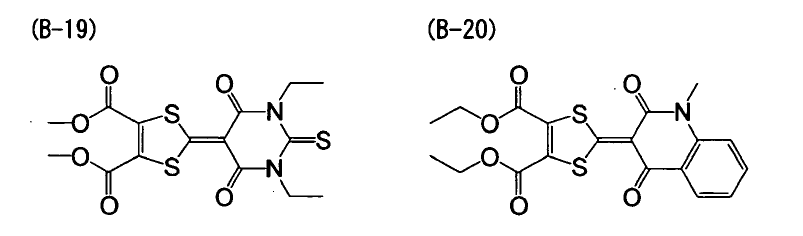

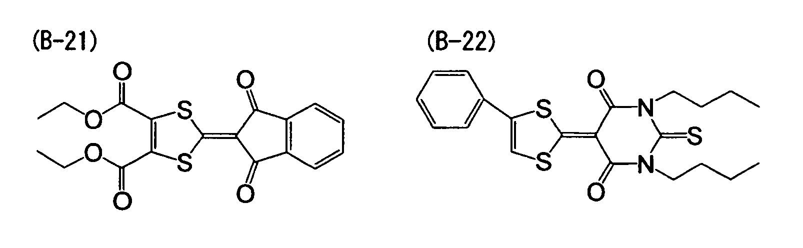

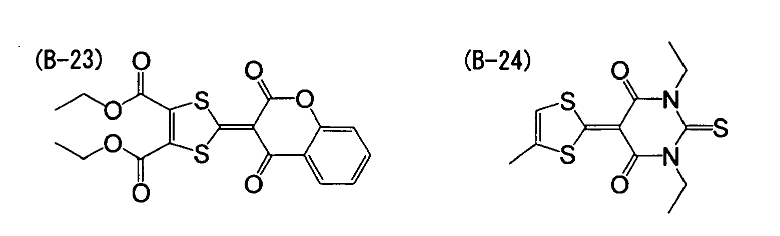

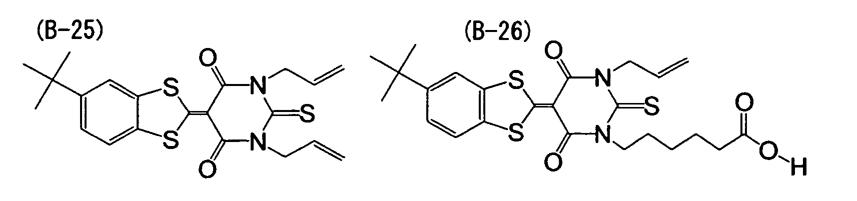

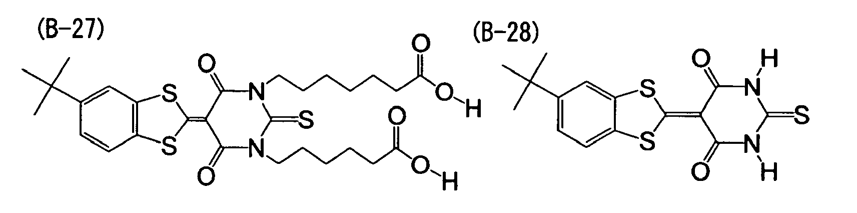

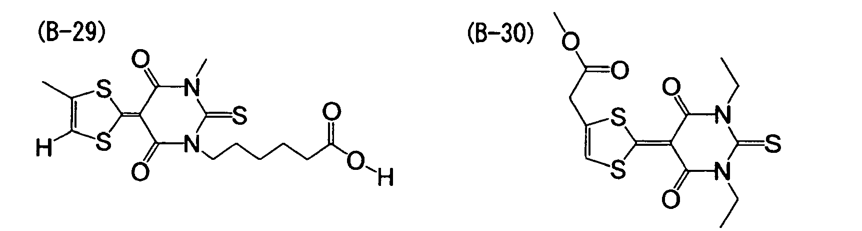

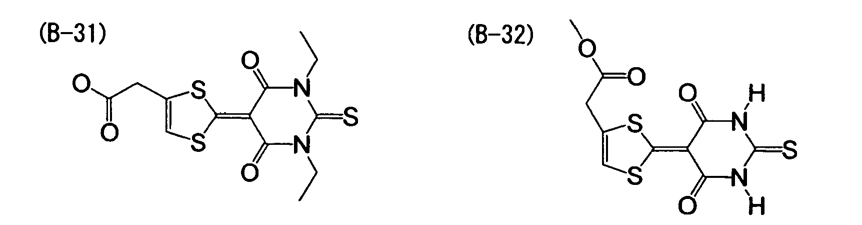

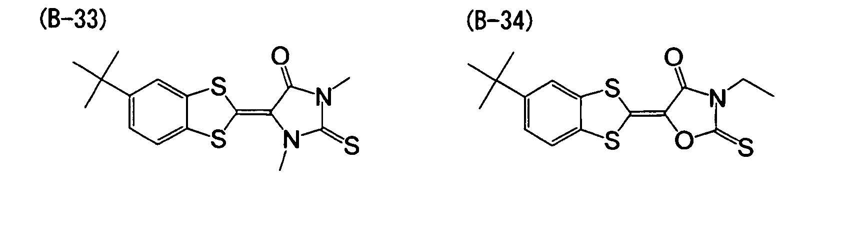

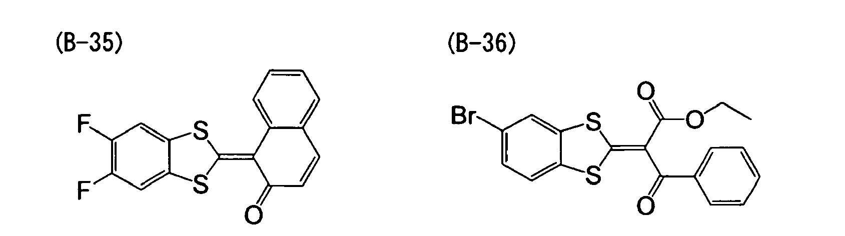

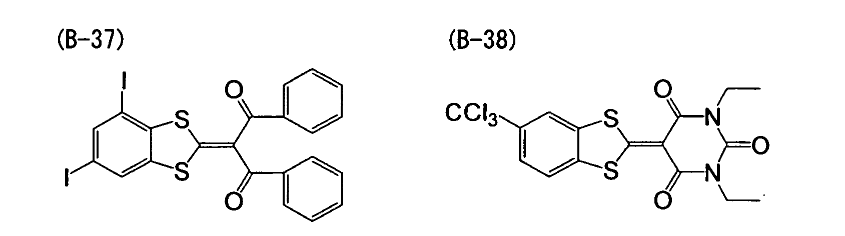

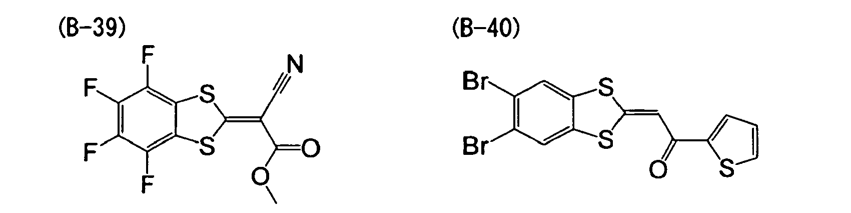

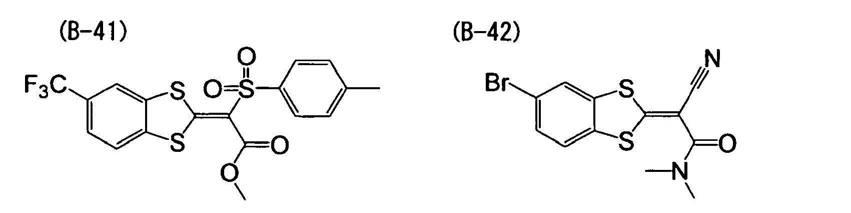

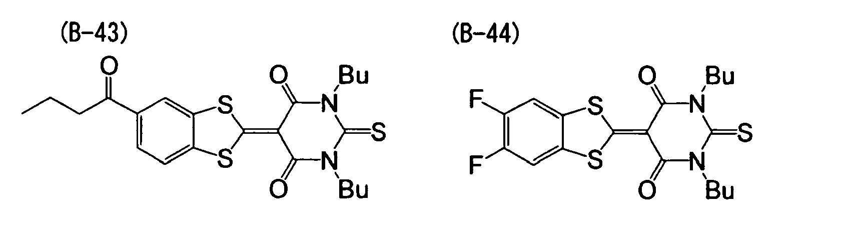

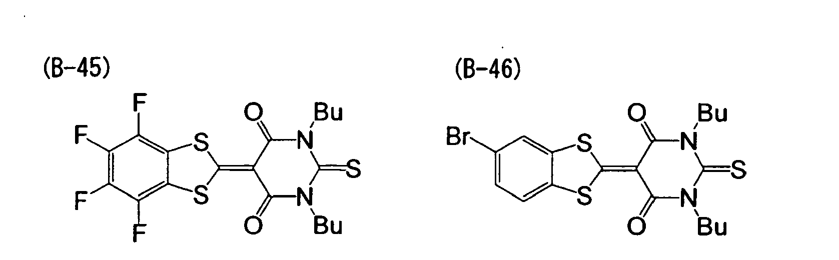

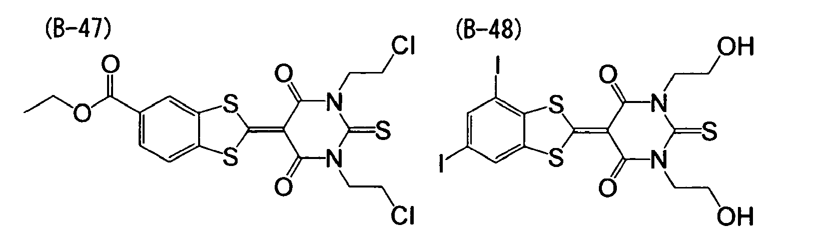

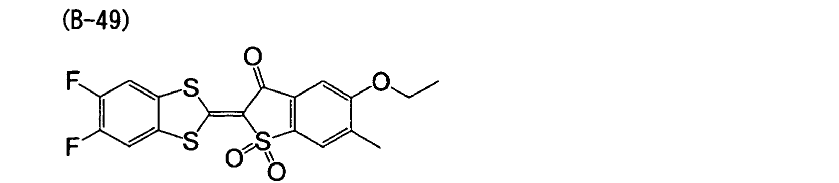

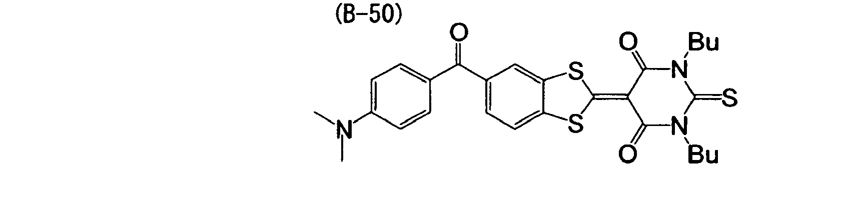

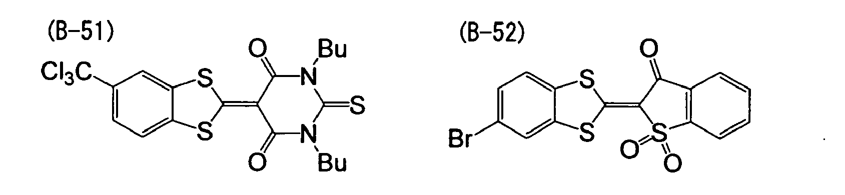

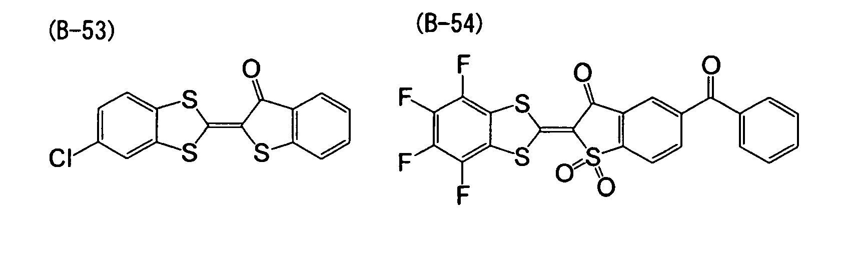

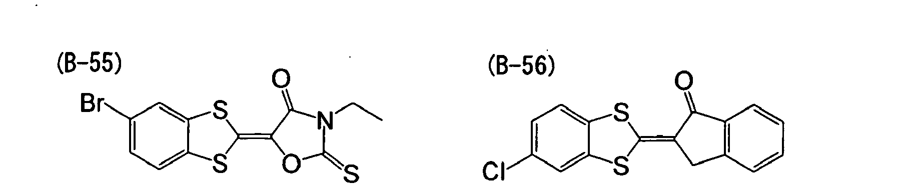

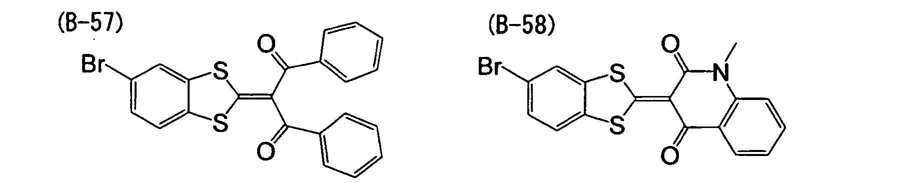

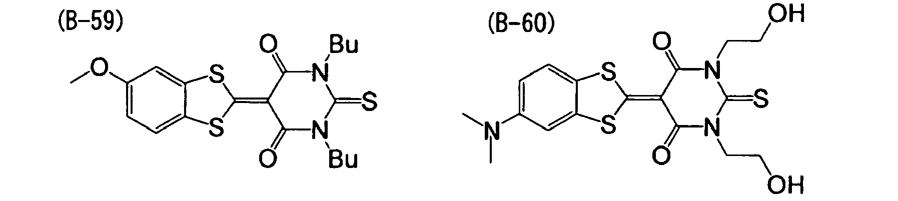

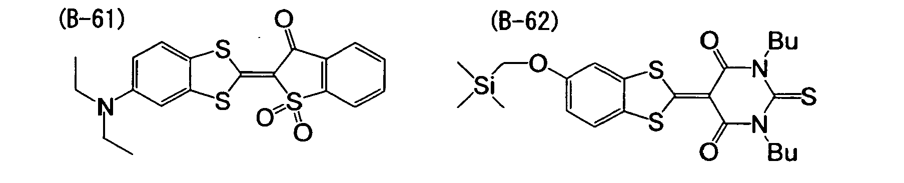

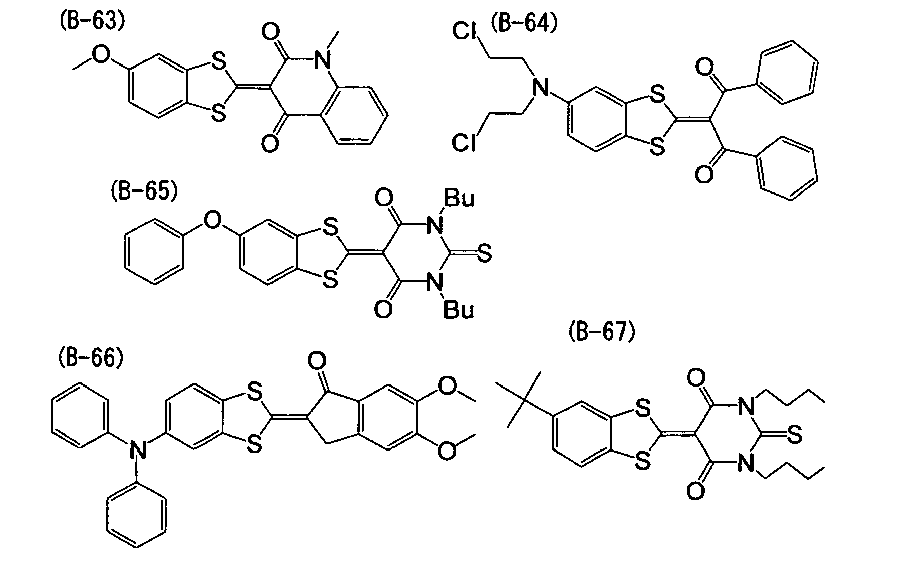

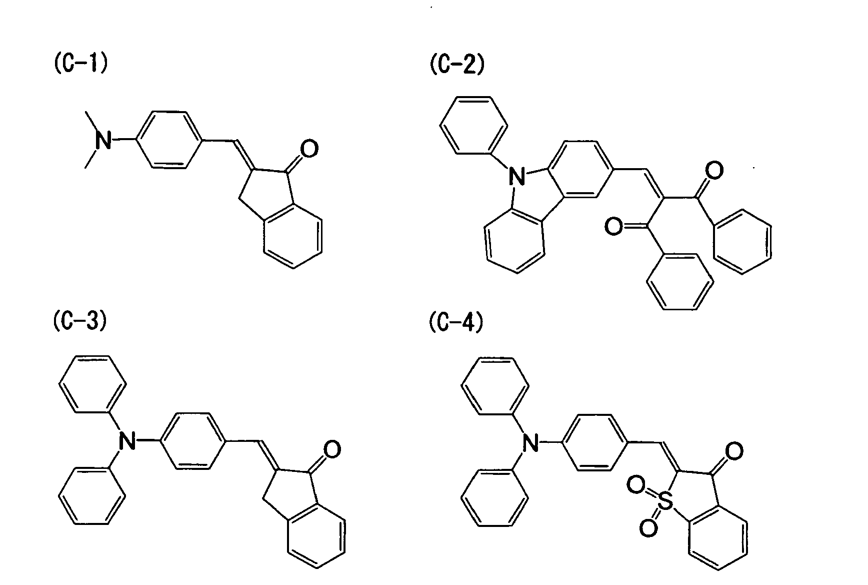

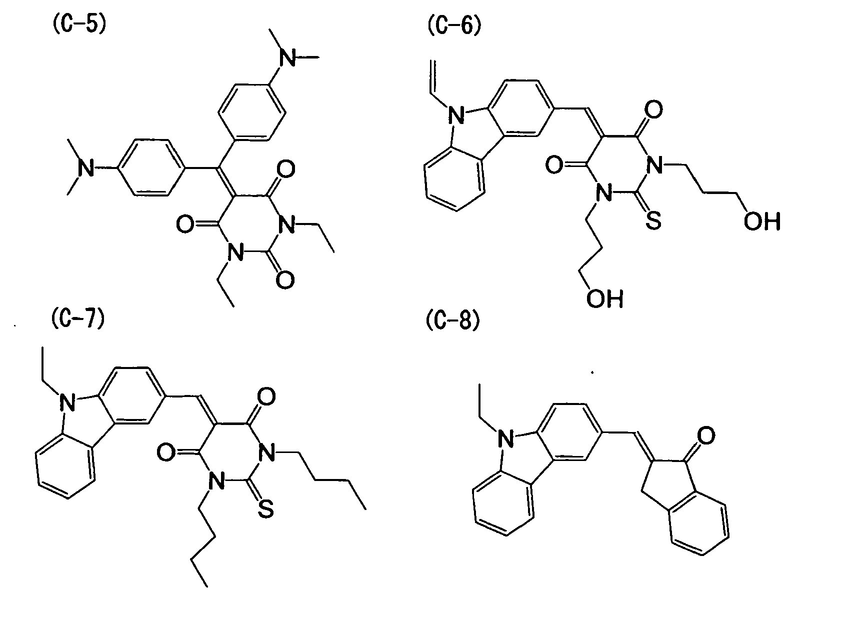

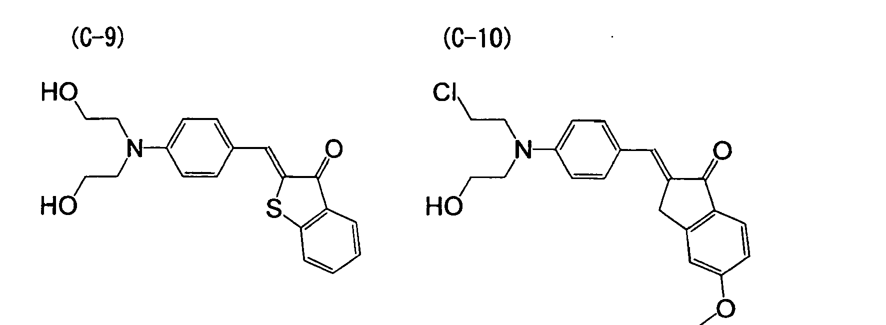

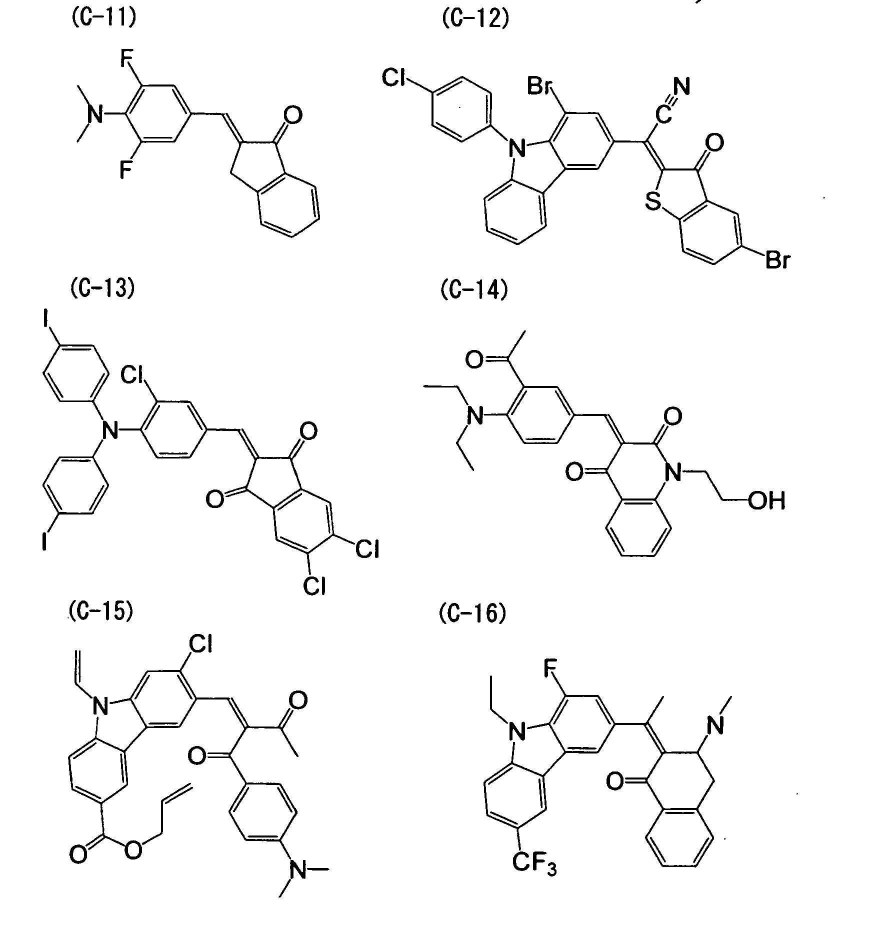

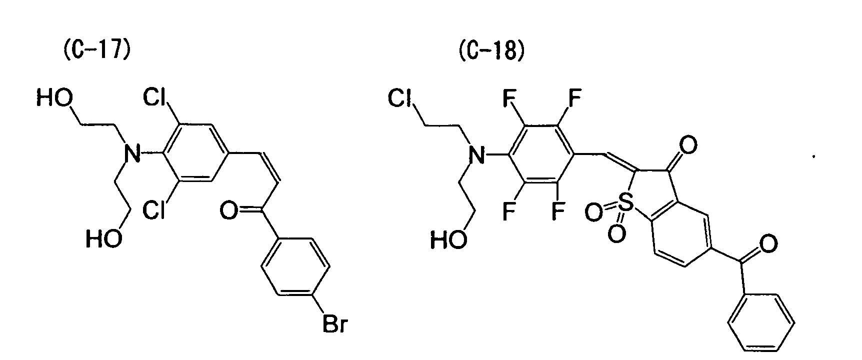

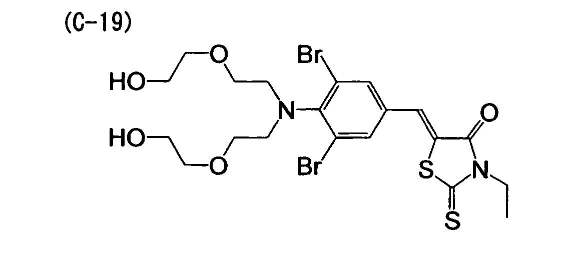

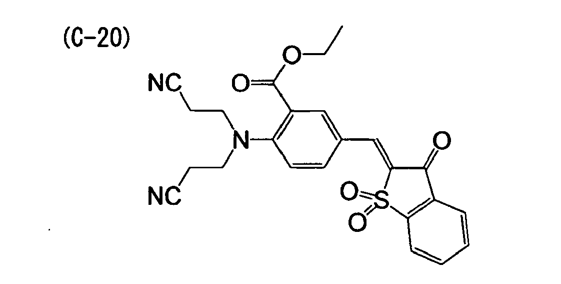

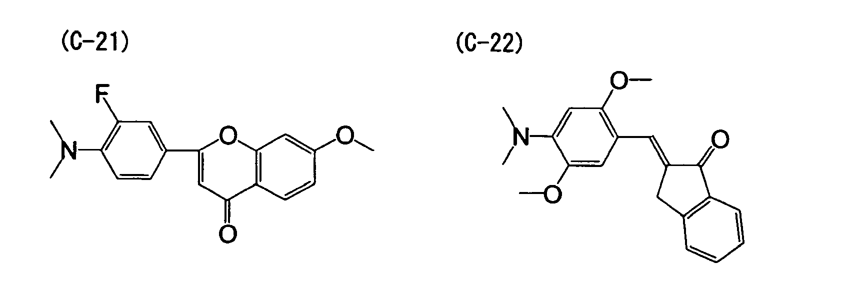

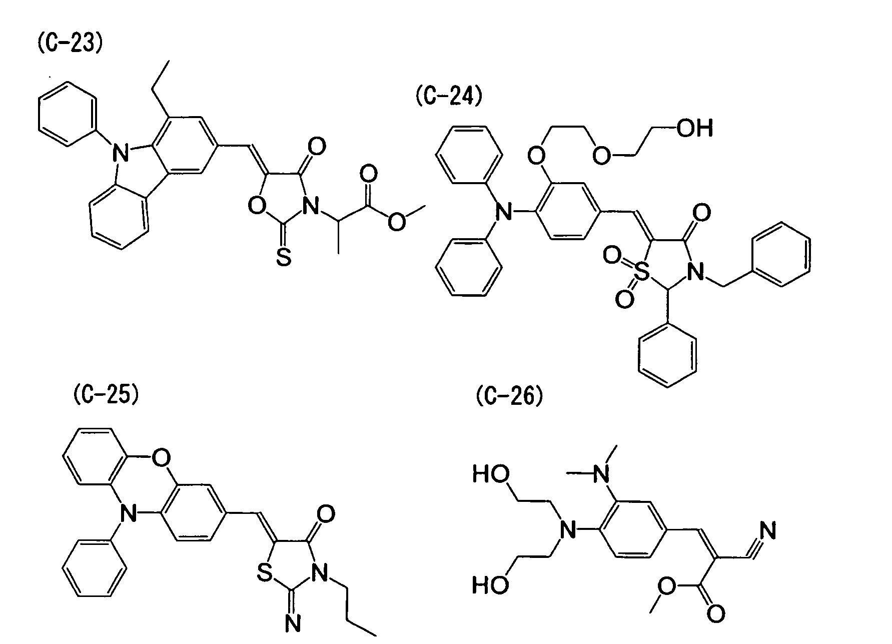

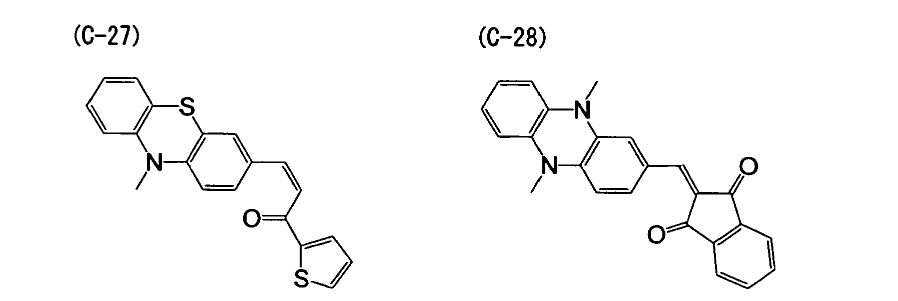

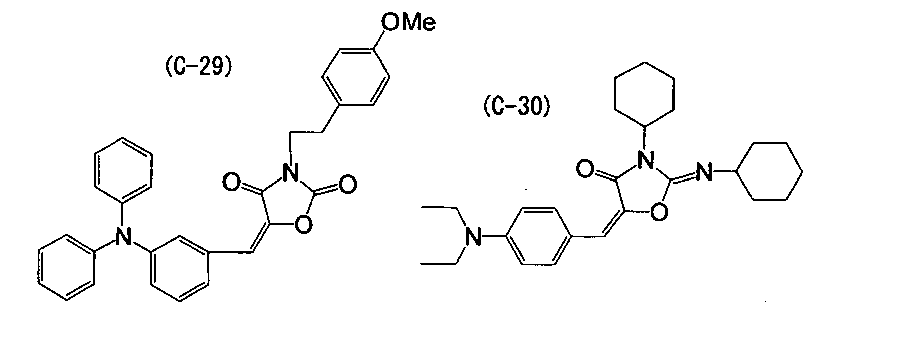

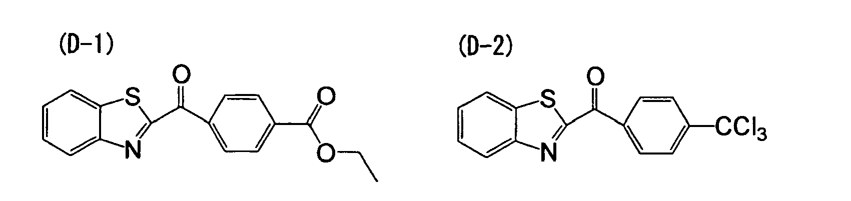

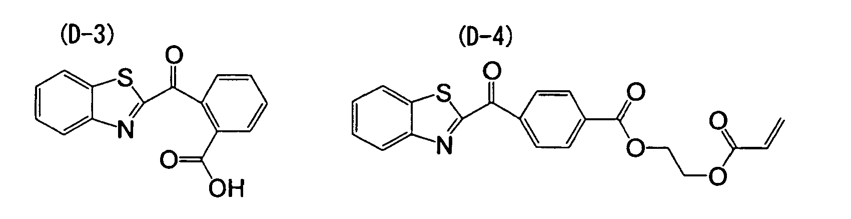

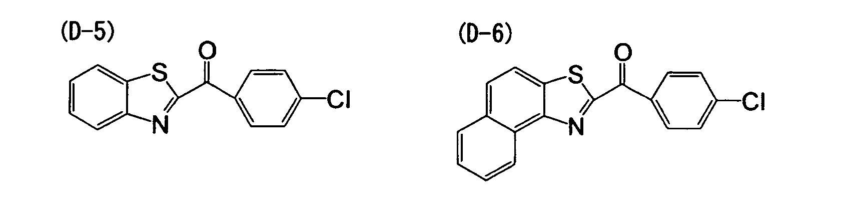

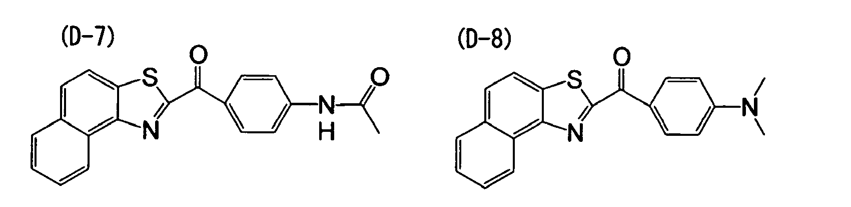

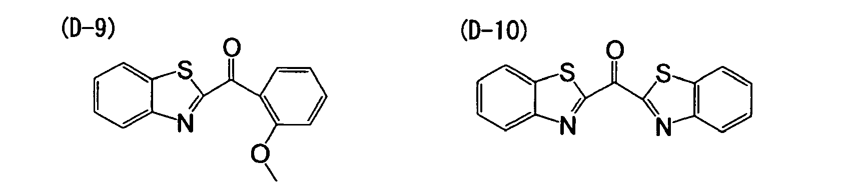

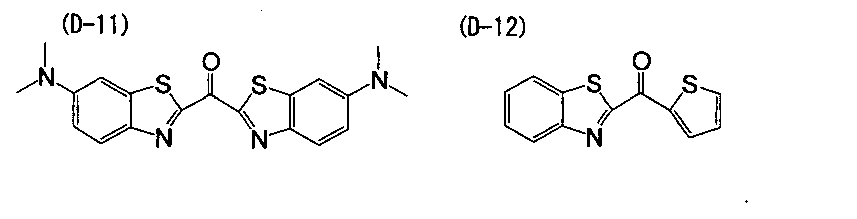

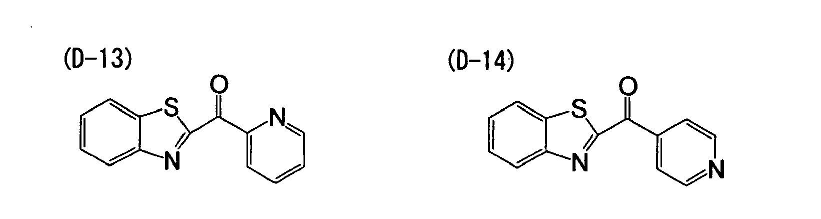

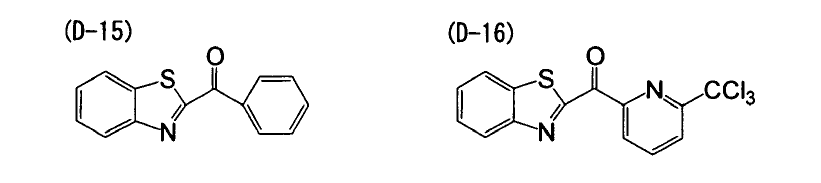

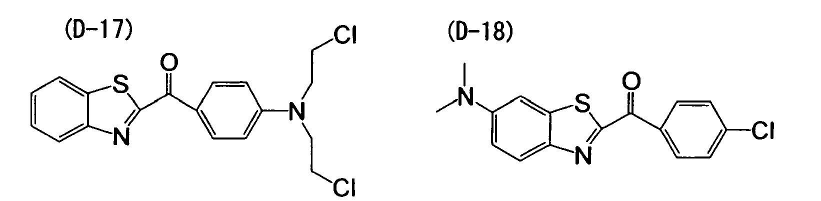

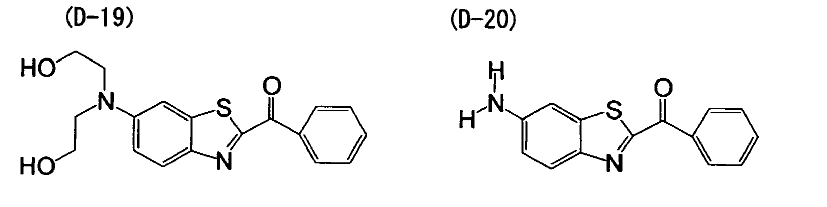

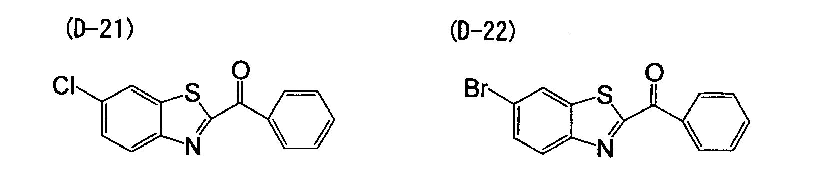

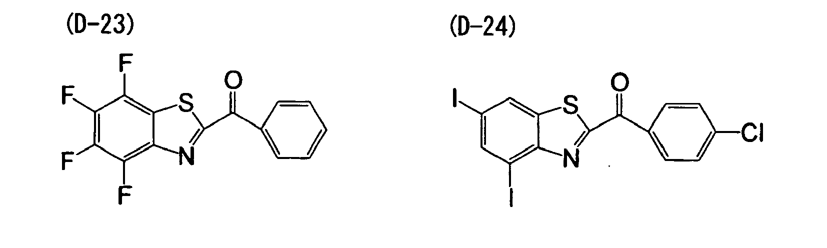

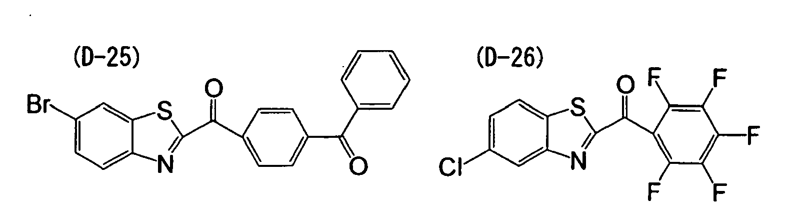

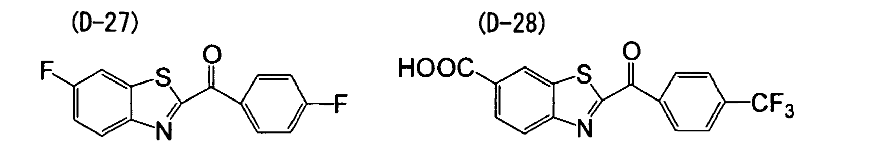

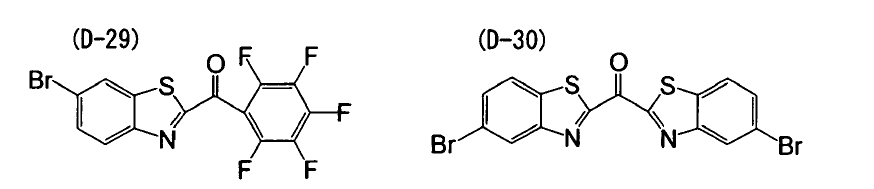

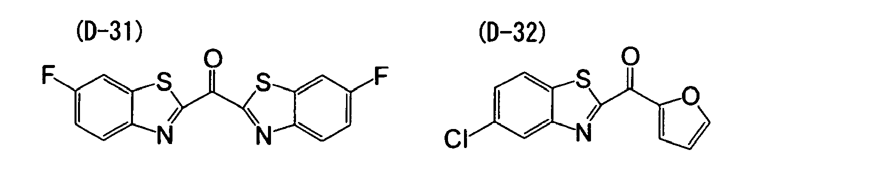

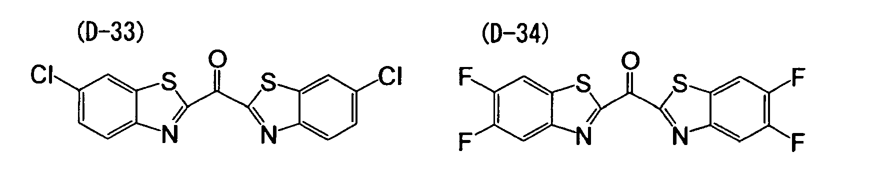

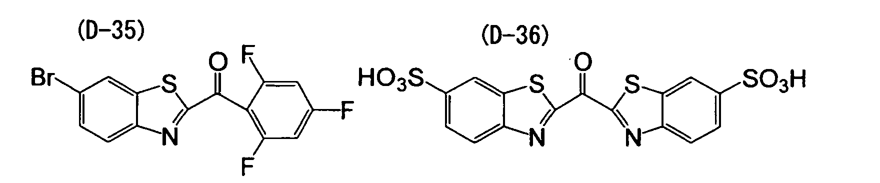

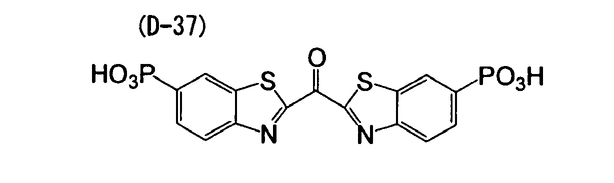

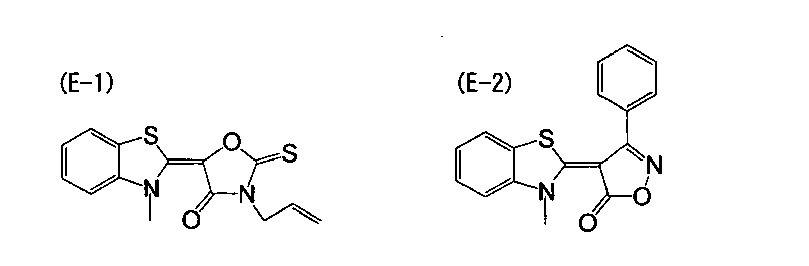

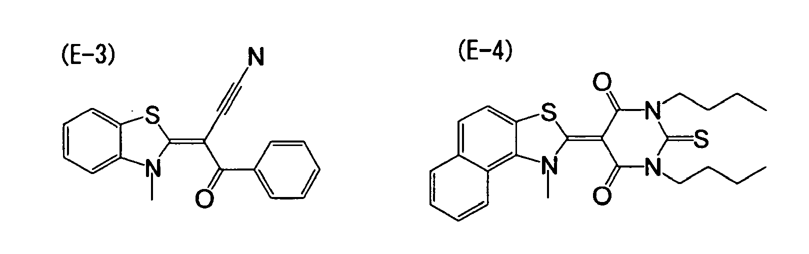

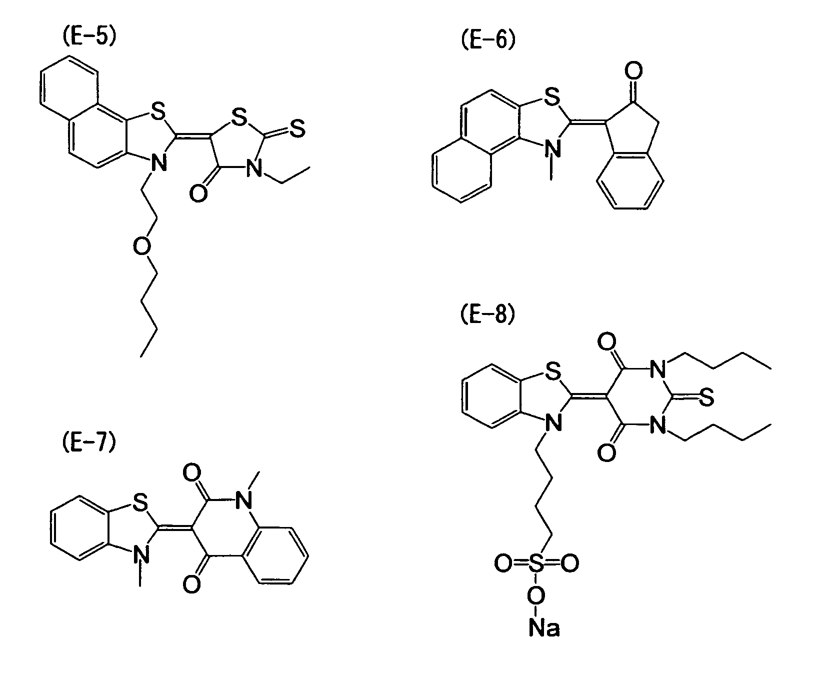

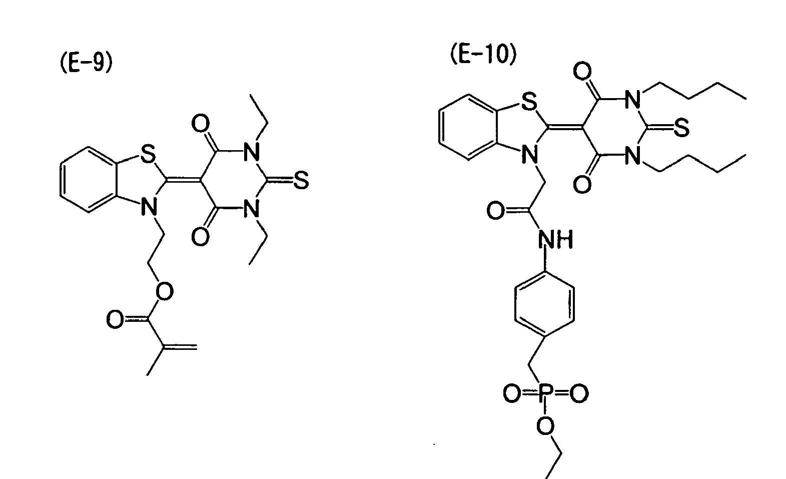

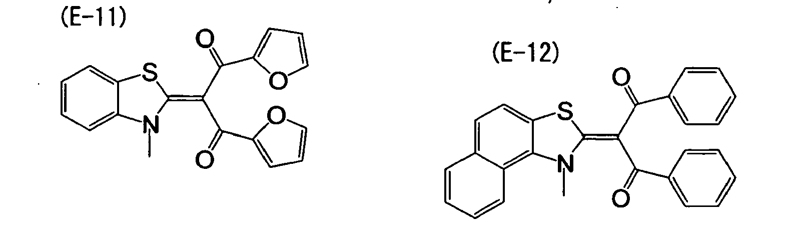

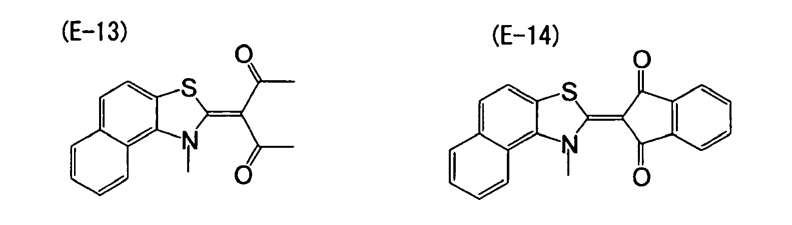

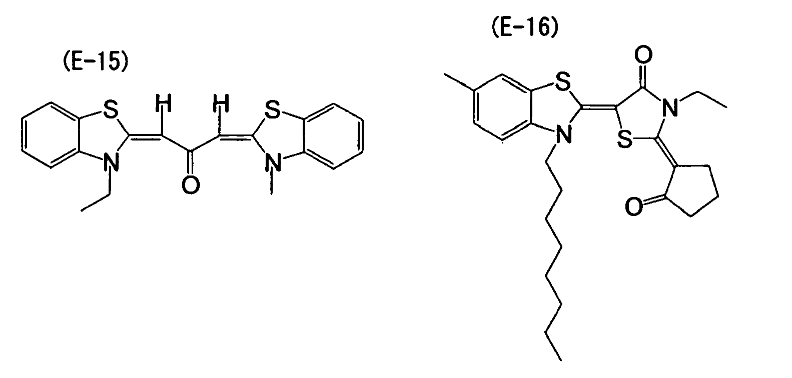

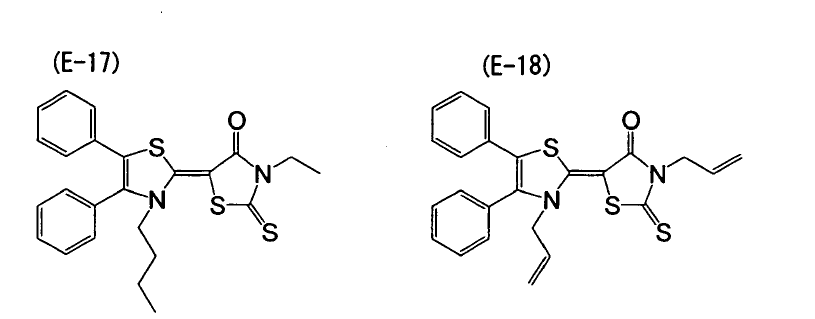

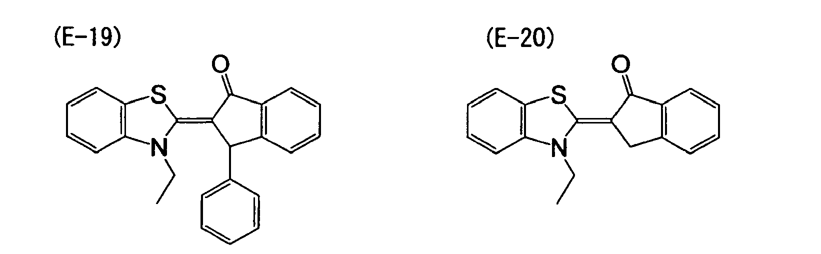

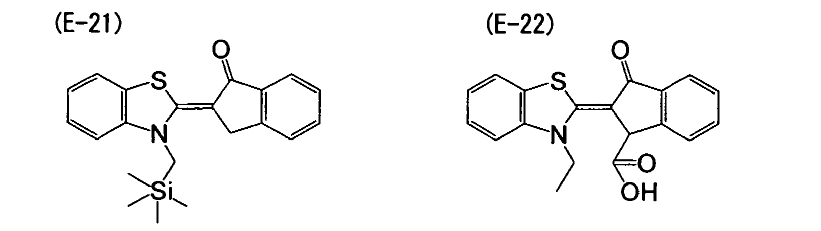

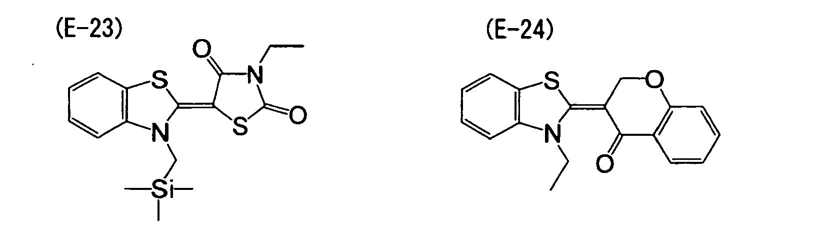

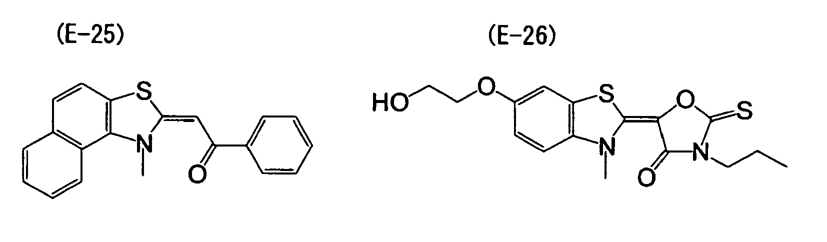

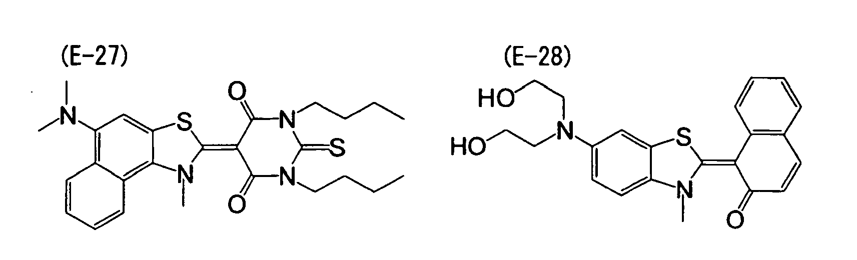

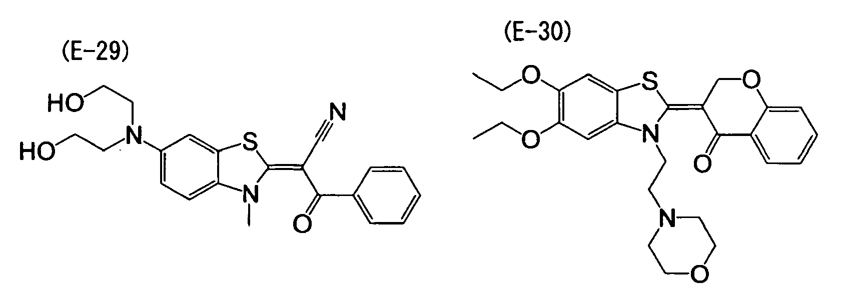

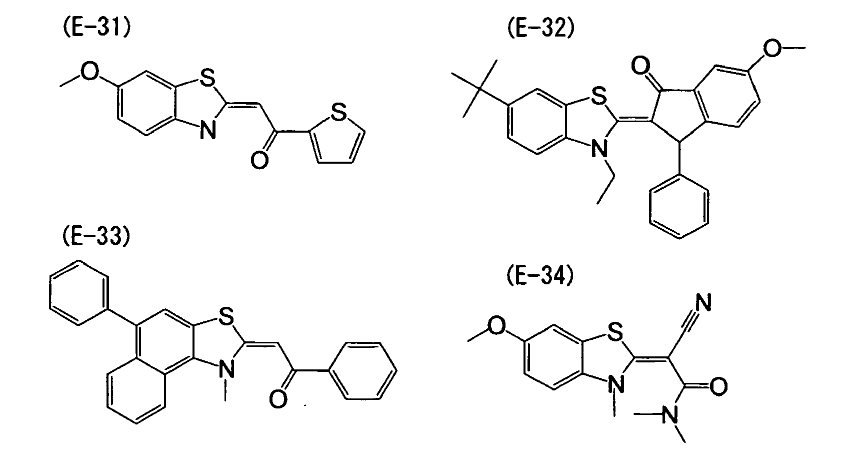

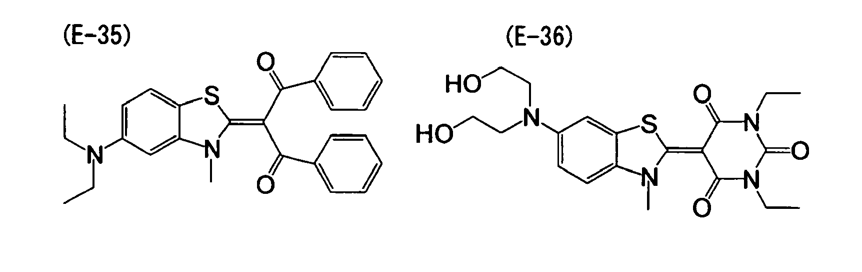

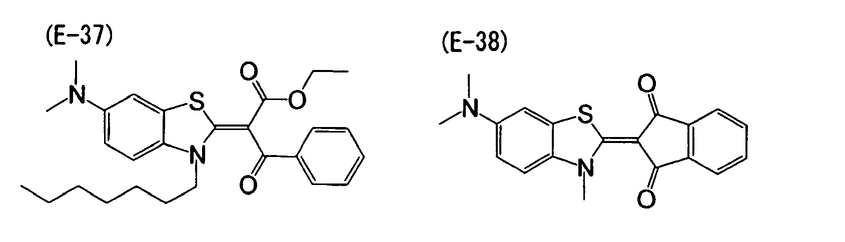

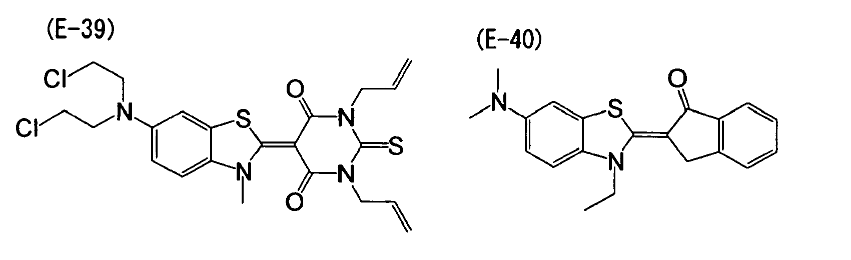

The sensitizing colorants having structures represented by the formulae (1) to (14) above can be easily synthesized by using a known synthesis method and its related synthesis method. A more specific synthesis method is shown below.

The sensitizing colorants having structures represented by the formulae (2), (6), (8), (12) and (14) above can be synthesized by referring to methods described by F. M. Hamer et al. in "The Cyanine Dyes and Related Compounds", pp. 511-611 (1964) and methods described by KAI ARNE JENSEN and LARSHENRIKSEN in ACTA CHEMICA SCANDINAVICA, Vol. 22, pp. 1107-1128 (1968), and in JP Patent No. 2552550.

The sensitizing colorants having structures represented by the formulae (3), (9) and (13) can be synthesized by referring to JP-B No. 59-28329, and the sensitizing colorants having structures represented by the formulae (4) and (10) can be synthesized by referring to JP-B No. 2-30321.

The sensitizing colorants having structures represented by the formulae (6) and (14) can be synthesized by referring to methods described in JP-A No. 2-244050 and JP-B No. 6-97339.

The sensitizing colorants in the invention can be further subjected to various chemical modifications for improving the properties of the ink composition. For example, an addition-polymerizable compound structure (for example, an acryloyl group or a methacryloyl group) can be bound via a covalent bond, an ionic bond or a hydrogen bond to the sensitizing colorant in order to increase the strength of the ink after curing and suppress the unnecessary precipitation of the colorant from the ink after curing. Further, a titanocene compound described later or an other radical-generating part (for example, a reductive decomposition site of alkyl halide, onium, peroxide, biimidazole or the like and an oxidative cleavage site of borate, amine, trimethylsilyl, methyl, carboxymethyl, carbonyl, imine or the like) can be bound to the sensitizing colorant to significantly improve the sensitivity of the electron transfer initiation system particularly in a low-concentration state. Depending on the object, a method of polymerizing the sensitizing colorant can also be used.

From the viewpoint of the efficiency of light absorption upon light exposure, the promotion of initiator decomposition by increasing light permeability, and suppression of coloration of the ink, the content of the sensitizing colorant in the ink composition of the invention is in the range of 0.05 to 20 % by mass, preferably 0.1 to 15 % by mass, still more preferably 0.2 to 10 % by mass, based on the total solids content of the ink composition.

### (Oxidation potential)

The valueof oxidation potential (Eox) or of reduction potential of the sensitizing colorant in the invention can be easily determined by those skilled in the art. The measurement method is described in detail by P. Delahay: New Instrumental Methods in Electrochemistry, Interscience Publishers, 1954, A. J. Bard et al.,: Electrochemical Methods, John Wiley & Sons, 1980, and Akira Fujishima et al.,: "Denki Kagaku Sokuteiho" (Electrochemical Measurement Methods), Gihodo Shuppansha, 1984.

Measurement of the oxidation potential is specifically as follows: A test sample is dissolved in an amount of 1 × 10⁻² to 1 ×10⁻⁶ mol/L in a solvent such as dimethylformamide or acetonitrile containing a supporting electrolyte such as sodium perchlorate or ammonium tetrapropyl perchlorate, and the oxidation potential of the test compound is measured as a value relative to that of SCE (saturated calomel electrode) by cyclic voltammetry or in a direct-current polarographic apparatus, wherein an oxidation wave of the sample upon sweeping toward the oxidation side (higher side) with carbon (GC) as a working electrode and a rotating platinum electrode as a counter electrode is approximated by a straight line, and an intermediate potential value of a segment between a point at which the straight line and a residual electric current/potential straight line intersect and a point at which the straight line and a saturated electric current straight line (or a straight line parallel to an abscissa passing through a peak potential value) intersect is measured as a value relative to SCE. This value may be deviated by about several tens millivolts, due to the influence of a potential difference between liquids or the liquid resistance of the sample solution, but the reproducibility of the potential can be guaranteed by adding a standard sample (for example, hydroquinone). The supporting electrolyte and solvent used can be suitably selected depending on the oxidation potential and solubility of the test sample. The support electrolyte and solvent which can be used are described on pp. 101-118 in "Denki Kagaku Sokuteiho" (Electrochemical Measurement Methods) authored by Akira Fujishima et al., Gihodo Shuppansha, 1984.

The Eox value is indicative of easiness in transfer of an electron from the sample to the electrode, and a higher Eox value (higher oxidation potential) is indicative of difficult transfer of an electron from the sample to the electrode, in other words, difficult oxidation.

### (Electron donating initiator)

The electron donating initiator used in the combination (i) above is used without particular limitation insofar as it is oxidized to cause bond cleavage to generate an active species. Examples of such electron donating initiator are shown below.

Alkyl art complexes are considered to oxidatively cleave a carbon-heterobond to generate an active radical (as described in, for example, J. Am. Chem. Soc., 112, 6329 (1990)). Specifically, triaryl alkyl borates (particularly, acid-stable borates described in JP-A No. 9-188685, JP-A No. 9-188686 and JP-A No. 9-188710), for example, are preferably used.

Alkyl amine compounds are considered to oxidatively cleave a C-X bond on carbon adjacent to nitrogen, to generate an active radical (as described in, for example, J. Am. Chem. Soc., 116, 4211 (1994)). X is preferably a hydrogen atom, a carboxyl group, a trimethylsilyl group or a benzyl group. Specific examples include ethanolamines, N-phenyl glycine or derivatives thereof, and N-trimethyl silyl methyl aniline or derivatives thereof.

Sulfur- and tin-containing compounds which are the same as the above-described amines except that a nitrogen atom on the amines is replaced by a sulfur atom or a tin atom can generate an active radical by the same action. Compounds having an S-S bond are also known to be used for sensitization by cleavage of S-S.

α-Substituted methyl carbonyl compounds can generate an active radical by oxidative cleavage of a carbonyl-α-carbon bond. Compounds derived from these compounds by converting their carbonyl into oxime ether also exhibit the same action. Specific examples include 2-alkyl-1-[4-(alkylthio) phenyl]-2-morpholinopronone-1 or derivatives thereof, as well as oxime ethers obtained by reacting them with hydroxy amines and then etherifying their N-OH.

Sulfinates can reductively generate an active radical. Specific examples include sodium arylsulfinate etc.

### (Electron accepting initiator)

The electron accepting initiator used in the combination (ii) above is used without particular limitation insofar as it is reduced to cause bond cleavage to generate an active species. Examples of such electron accepting initiator are shown below.

Compounds having a carbon-halogen bond are considered to undergo reductive cleavage of the carbon-halogen bond to generate an active species (as described in, for example, Polymer Preprints, Jpn., 41(3), 542 (1992)). As the active species, a radical or an acid can be generated. Specific examples of the compounds that can be preferably used include not only halomethyl-s-triazines thereof but also halomethyl oxadiazoles which can be easily synthesized by those skilled in the art by synthesis methods described by M. P. Hutt, E. F. Elslager and L. M. Merbel in Journal of Heterocyclic Chemistry, 7, 511 (1970), and compounds described in German Patent Nos. 2641100, 3333450, 3021590 and 3021599.

Compounds having a nitrogen-nitrogen bond or a nitrogenous heterocycle-nitrogenous heterocycle bond undergo reductive cleavage of the bond (as described in, for example, J. Phys. Chem., 96, 207 (1992)). Specifically, hexaryl bi-imidazoles are preferably used. Their generated active species is a lophine radical, and these compounds, when used if necessary in combination with a hydrogen donor, initiate a radical chain reaction, and formation of an image by using oxidation reaction with the lophine radical is also known (as described in J. Imaging Sci. 30, 215 (1986)).

Compounds having an oxygen-oxygen bond are considered to undergo cleavage of the oxygen-oxygen bond to generate an active radical (as described in, for example, Polym. Adv. Technol., 1, 287 (1990)). Specifically, organic peroxide compounds are preferably used. As the active species, a radical can be generated.

Onium compounds are considered to reductively cleave a carbon-heterobond or an oxygen-nitrogen bond to generate an active species (as described in, for example, J. Photopolm. Sci. Technol., 3, 149 (1990)). Specific examples include iodonium salts described in European Patent No. 104143, USP No. 4,837,124, JP-A No. 2-150848 and JP-A 2-96514, sulfonium salts described in European Patent Nos. 370693, 233567, 297443, 297442, 279210 and 422570, USP No. 3,902,144, USP No. 4,933,377, USP No. 4,760,013, USP No. 4,734,444 and USP No. 2,833,827, diazonium salts (optionally substituted benzene diazonium etc.), diazonium salt resins (diazodiphenyl amine formaldehyde resin etc.) and pyridinium salts (N-alkoxy pyridinium salts etc.; for example those described in USP No. 4,743,528, JP-ANo. 63-138345, JP-ANo. 63-142345, JP-ANo. 63-142346, JP-B No. 46-42363 etc., specifically 1-methoxy-4-phenyl pyridinium, tetrafluoroborate etc.), and furthermore, compounds described in JP-B No. 52-147277, JP-B No. 52-14278 and JP-B No. 52-14279 are preferably used. They generate radicals or acids as the active species.

The onium compounds used preferably in the invention include iodonium salts, diazonium salts and sulfonium salts. The onium compounds used preferably in the invention are onium salts represented by the following formulae (I) to (III):

Formula (I) Ar¹¹-I⁺-Ar¹² (Z¹¹)⁻

Formula (II) Ar²¹-N⁺≡N (Z²¹)⁻

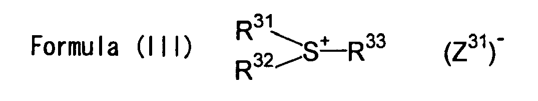

In the formula (I), Ar¹¹ and Ar¹² independently represent an optionally substituted aryl group containing 20 or less carbon atoms. When this aryl group has a substituent group, preferable examples of the substituent group include a halogen atom, a nitro group, an alkyl group containing 12 or less carbon atoms, an alkoxy group containing 12 or less carbon atoms, and an aryloxy group containing 12 or less carbon atoms. (Z¹¹)⁻ represents a counterion selected from the group consisting of a halogen ion, a perchlorate ion, a tetrafluoroborate ion, a hexafluorophosphate ion, and a sulfonate ion, and is preferably a perchlorate ion, a hexafluorophosphate ion or an aryl sulfonate ion.

In the formula (II), Ar²¹ represents an optionally substituted aryl group containing 20 or less carbon atoms. Preferable examples of its substituent group include a halogen atom, a nitro group, an alkyl group containing 12 or less carbon atoms, an alkoxy group containing 12 or less carbon atoms, an aryloxy group containing 12 or less carbon atoms, an alkylamino group containing 12 or less carbon atoms, a dialkylamino group containing 12 or less carbon atoms, an arylamino group containing 12 or less carbon atoms, and an diarylamino group containing 12 or less carbon atoms. (Z²¹)⁻ represents one of the same selection of counterions as (Z¹¹)⁻.

In the formula (III), R³¹, R³² and R³³ may be the same or different, and each represent an optionally substituted hydrocarbon group containing 20 or less carbon atoms. Preferable examples of its substituent group include a halogen atom, a nitro group, an alkyl group containing 12 or less carbon atoms, an alkoxy group containing 12 or less carbon atoms, and an aryloxy group containing 12 or less carbon atoms. (Z³¹)⁻ represents one of the same selection of counterions as (Z¹¹)⁻.

Specific examples of the onium salts ([OI-1] to [OI-12]) represented by the formula (I), the onium salts ([ON-1] to [ON-5]) represented by the formula (II) and the onium salts ([OS-1] to [OS-7]) represented by the formula (III), which can be preferably used in the invention, are shown below.

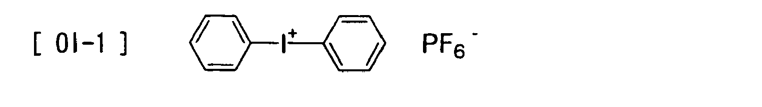

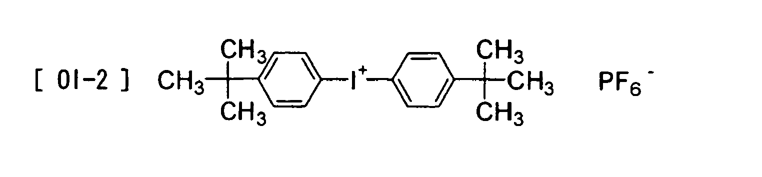

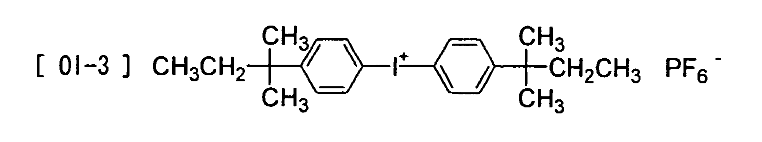

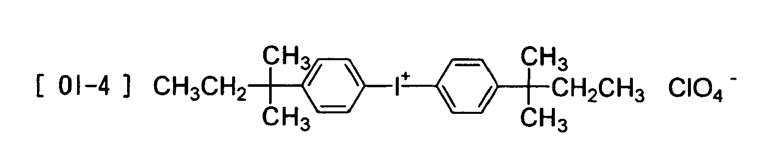

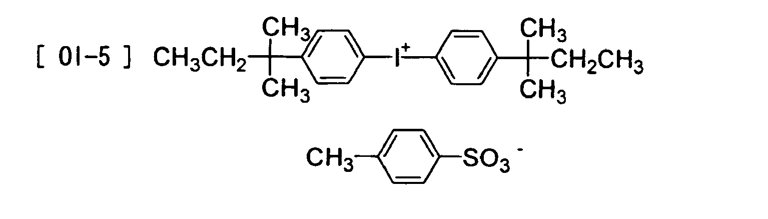

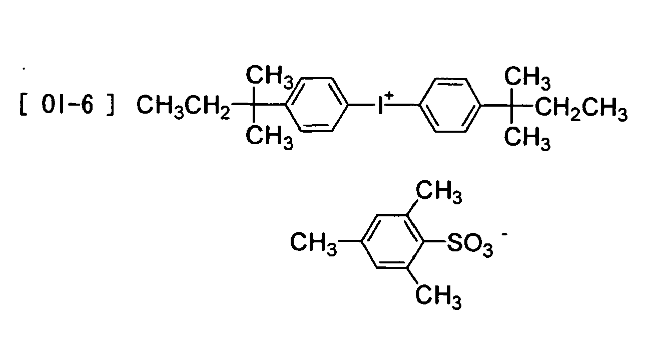

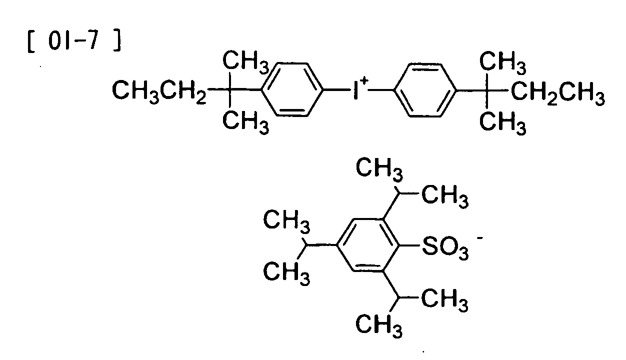

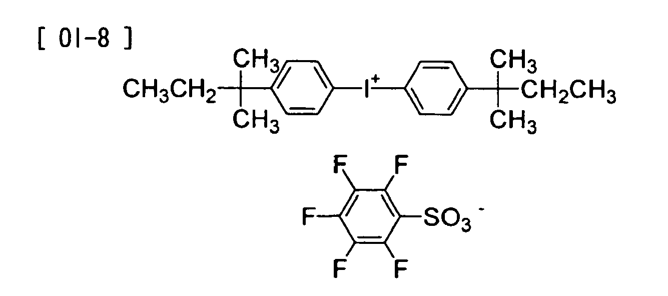

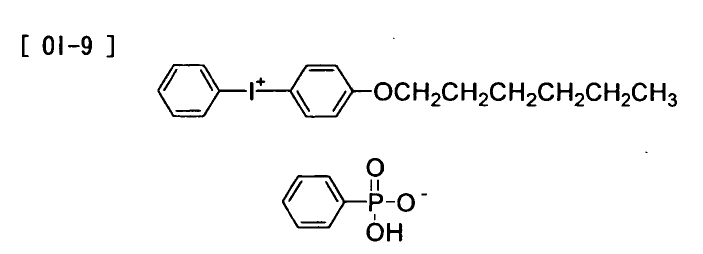

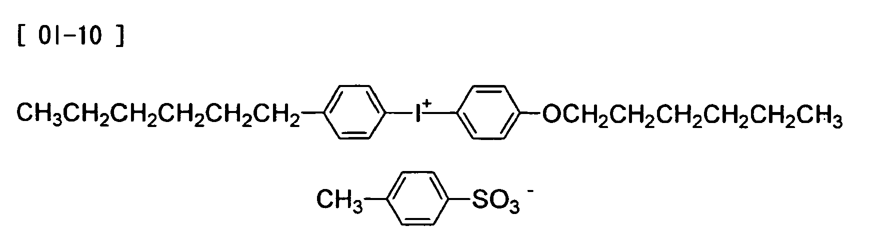

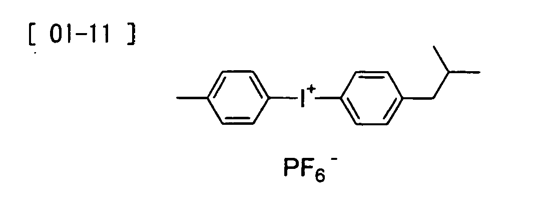

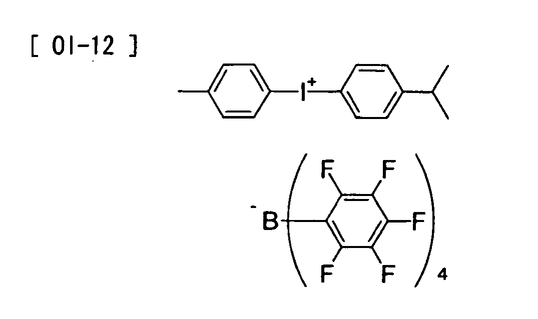

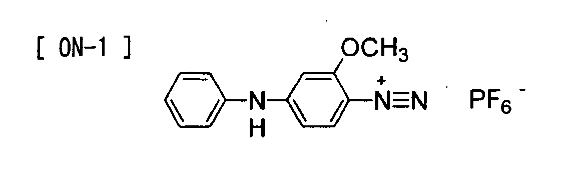

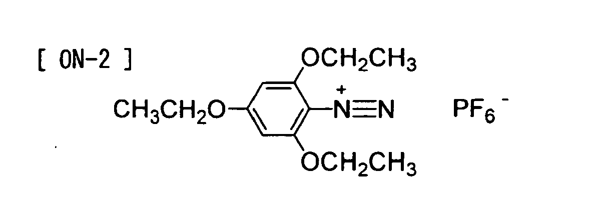

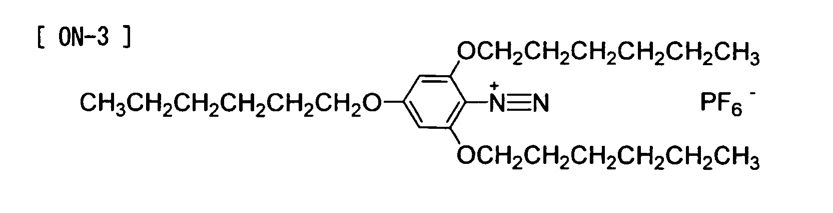

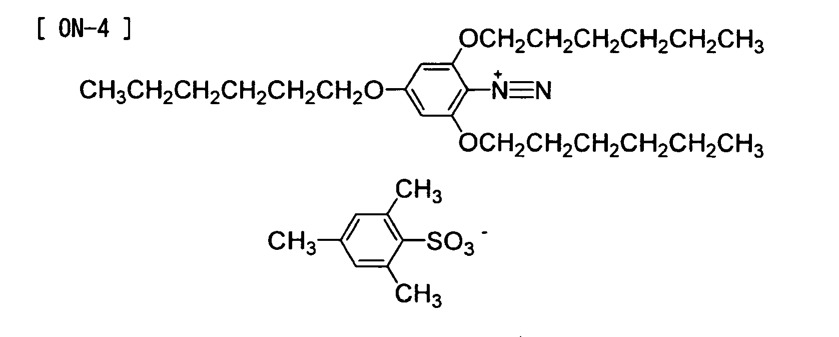

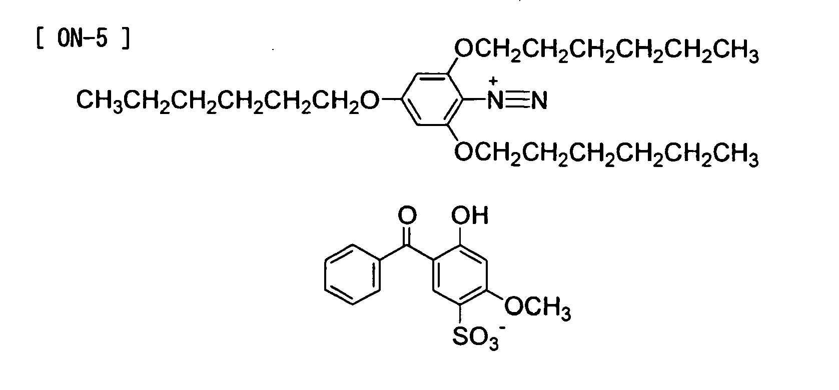

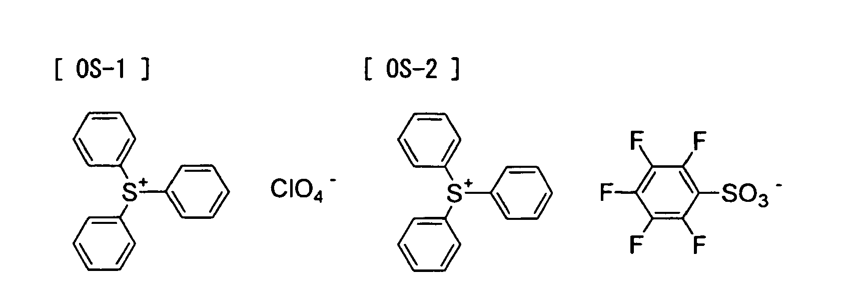

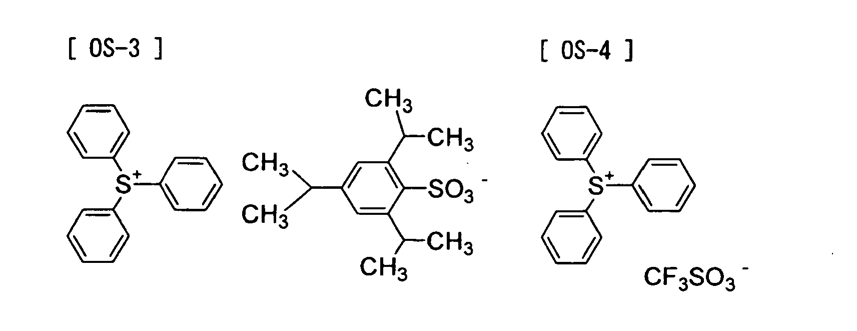

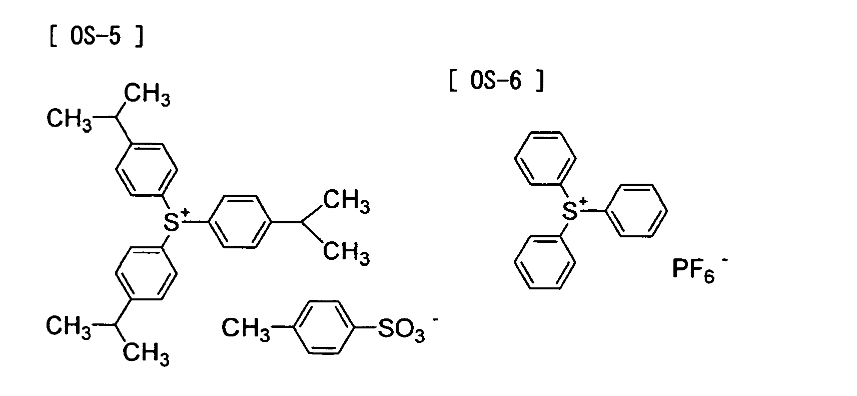

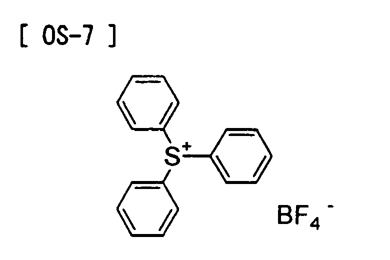

Active esters such as nitrobenzyl esters of sulfonic acid or carboxylic acid, esters of sulfonic acid or carboxylic acid and N-hydroxy compound (N-hydroxy phthalimide, oxime, etc.), pyrogallol sulfonate, naphthoquinonediazide-4-sulfonate etc. can be reductively decomposed. They can generate radicals and acids as the active species. Examples of the sulfonates include nitrobenzyl ester compounds described in EP Patent No. 290750, EP Patent No. 46083, EP Patent No. 156153, EP Patent No. 271851, EP Patent No. 388343, USP No. 3,901,710, USP No. 4,181,531, JP-ANo. 60-198538, and JP-ANo. 53-133022, iminosulfonate compounds described in EP Patent No. 199,672, EP Patent No. 84,515, EP Patent No. 199,672, EP Patent No. 44,115, EP Patent No. 101,122, USP No. 4,618,564, USP No. 4,371,605, USP No. 4,431,774, JP-A No. 64-18143, JP-A No. 2-245756 and JP-A No. 4-365048, and compounds described in JP-B No. 62-6223, JP-B No. 63-14340 and JP-A No. 59-174831, and mention can also be made of the following compounds:

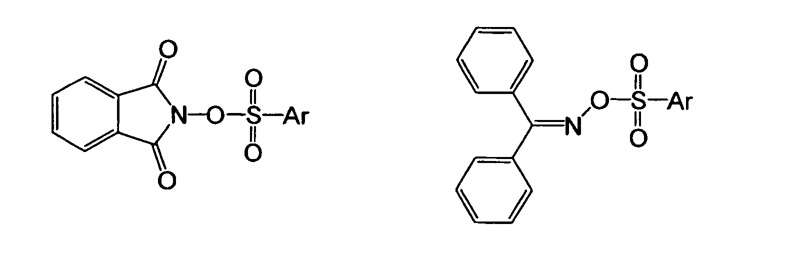

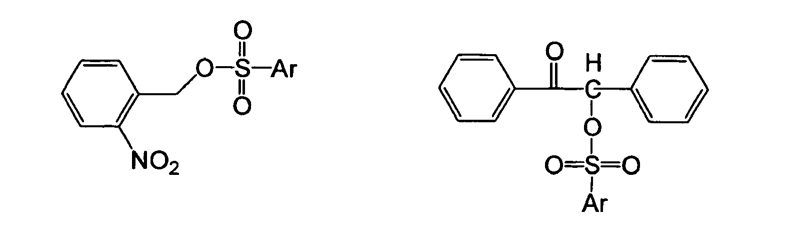

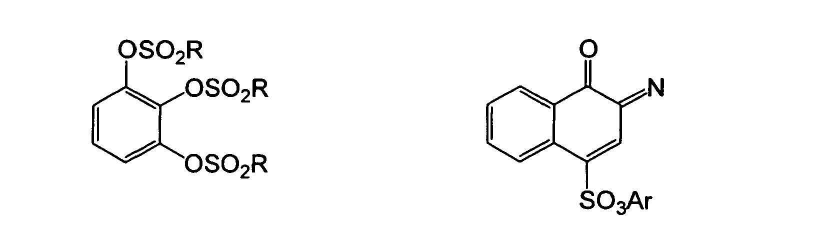

In the above compounds, Ar represents an optionally substituted aromatic or aliphatic group. R represents an alkyl group, a substituted alkyl group, an aryl group, or a substituted aryl group.

The active esters can also generate bases as the active species, and for example, the following compound group is known. In the following compound group, R represents an optionally substituted aliphatic or aromatic group.

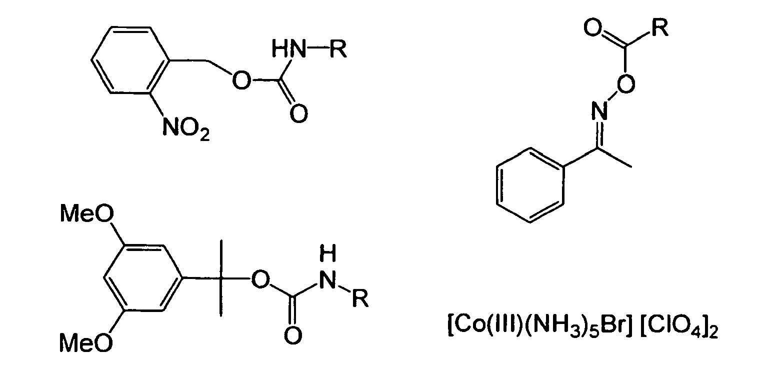

Ferrocene and iron-allene complexes can generate active radicals reductively. Specific examples are described in JP-A No. 1-304453 and JP-A No. 1-152109.

Disulfones can generate acids by reductive cleavage of S-S bond. For example, diphenyl disulfones described in JP-A No. 61-166544 are known.

From the viewpoint of initiation of polymerization reaction by light exposure and the strength of a coating after curing, the content of the electron transfer initiator in the ink composition of the invention is in a ratio of preferably 0.1 to 50 % by mass, more preferably 0.5 to 30 % by mass, still more preferably 1 to 20 % by mass, to the total solids content of the ink composition.

These electron transfer initiators may be used alone or as a mixture of two or more thereof.

### (Co-sensitizer)

A known compound having an action of improving sensitivity or suppressing the polymerization inhibition by oxygen can be further added as a co-sensitizer to the ink composition of the invention.

Examples of the co-sensitizer include amines, for example, compounds described by M. R. Sander et. al., in Journal of Polymer Society, Vol. 10, p. 3173 (1972), JP-B No. 44-20189, JP-ANo. 51-82102, JP-ANo. 52-134692, JP-A No. 59-138205, JP-ANo. 60-84305, JP-A No. 62-18537, JP-A No. 64-33104, and Research Disclosure, No. 33825, and specific examples include triethanol amine, ethyl p-dimethyl aminobenzoate, p-formyl dimethyl aniline, p-methyl thiodimethyl aniline, etc.

Other examples include thiols and sulfides, for example, thiol compounds described in JP-A No. 53-702, JP-B No. 55-500806 and JP-A No. 5-142772 and disulfide compounds described in JP-A No. 56-75643, and specific examples include 2-mercaptobenzothiazole, 2-mercaptobenzooxazole, 2-mercaptobenzoimidazole, 2-mercapto-4(3H)-quinazoline, β-mercaptonaphthalene, etc.

Further other examples include amino acid compounds (for example, N-phenyl glycine etc.), organometallic compounds (for example, tributyltin acetate etc.) described in JP-B No. 48-42965, hydrogen donors described in JP-B No. 55-34414, sulfur compounds (for example, trithiane etc.) described in JP-A No. 6-308727, phosphorus compounds (diethyl phosphite etc.) described in JP-A No. 6-250387, and Si-H or Ge-H compounds etc. described in Japanese Patent Application No. 6-191605.

When a co-sensitizer is used, the co-sensitizer is used in an amount of preferably 0.01 to 50 parts by mass, more preferably 0.02 to 20 parts by mass, most preferably 0.05 to 10 parts by mass, based on 1 part by weight of the polymerization initiator.

### [(b) Polymerizable compound]

The polymerizable compound (b) used in the invention is not particularly limited insofar as it is a compound to be cured by polymerization reaction caused by an active species generated from the electron transfer initiation system (a) described above, and (b-1) radical polymerizable compound and (b-2) cation polymerizable compound are used.

Hereinafter, the radical polymerizable compound (b-1) and the cation polymerizable compound (b-2) are described in detail.

### ((b-1) Radial polymerizable compound)

The radical polymerizable compound (b-1) is a compound having a radical-polymerizable ethylenically unsaturated bond, and may be any compound having at least one radical-polymerizable ethylenically unsaturated bond in its molecule, and chemical structures such as monomer, oligomer and polymer are contained therein. Such radical polymerizable compounds may be used alone or as a mixture of two or more thereof in an arbitrary ratio for improving the objective properties. As the radical polymerizable compound, a multifunctional compound having two or more functional groups is more preferable than a monofunctional compound. Use of two or more multifunctional compounds is more preferable for regulating performance such as reactivity, physical properties etc.

Examples of the radical polymerizable compound include radical polymerizable compounds such as unsaturated carboxylic acids including acrylic acid, methacrylic acid, itaconic acid, crotonic acid, isocrotonic acid and maleic acid or salts, esters, urethane, amides and anhydrides thereof, acrylonitrile, styrene, and various unsaturated polyesters, unsaturated polyethers, unsaturated polyamides and unsaturated urethane. Specific examples include acrylate derivatives such as 2-ethylhexyl acrylate, stearyl acrylate, 2-hydroxyethyl acrylate, butoxyethyl acrylate, carbitol acrylate, cyclohexyl acrylate, tetrahydrofurfuryl acrylate, benzyl acrylate, bis(4-acryloxypolyethoxyphenyl) propane, neopentyl glycol diacrylate, 1,6-hexane diol diacrylate, ethylene glycol diacrylate, diethylene glycol diacrylate, triethylene glycol diacrylate, tetraethylene glycol diacrylate, polyethylene glycol diacrylate, polypropylene glycol diacrylate, pentaerythritol triacrylate, pentaerythritol tetracrylate, dipentaerythritol tetracrylate, trimethylol propane triacrylate, tetramethylol methane tetraacrylate, oligoester acrylate, N-methylol acrylamide, diacetone acrylamide, epoxy acrylate and urethane acrylate, methacrylate derivatives such as methyl methacrylate, n-butyl methacrylate, 2-ethylhexyl methacrylate, lauryl methacrylate, allyl methacrylate, glycidyl methacrylate, benzyl methacrylate, dimethylaminomethyl methacrylate, 1,6-hexane diol dimethacrylate, ethylene glycol dimethacrylate, triethylene glycol dimethacrylate, polyethylene glycol dimethacrylate, polypropylene glycol dimethacrylate, trimethylol ethane trimethacrylate, trimethylol propane trimethacrylate and 2,2-bis(4-methacryloxypolyethoxyphenyl) propane, and allyl compound derivatives such as allyl glycidyl ether, diallyl phthalate and triallyl trimellitate, and more specifically, it is possible to employ commercial products described in "Kakyozai Handbook" (Crosslinking Agent Handbook) edited by Shinzo Yamashita and published by Taiseisha (1981), "UV·EB Kouka Handbook (Genryohen)" (UV-EB Curing Handbook (Starting Material)) edited by Kiyoshi Kato and published by Kobunshi Kankokai (1985), "UV·EB Kouka Gijyutsu No Oyo To Shijyo" (Application and Market of UV-EB Curing Technology), page 79, edited by Radotech Kenkyukai and published by CMC (1989), "Polyester Jushi Handbook" (Polyester Resin Handbook) authored by Eichiichiro Takiyama and published by The Nikkan Kogyo Shimbun, Ltd. (1988) etc., or radical polymerizable or crosslinking monomers, oligomers and polymers known in the art.

### ((b-2) Cation polymerizable compound)

As the cation polymerizable compound (b-2), a wide variety of known cation polymerizable monomers known as optical cation polymerizable monomers can be used. The cation polymerizable monomers include epoxy compounds, vinyl ether compounds and oxetane compounds described in, for example, JP-A No. 6-9714, JP-A No. 2001-31892, JP-A No. 2001-40068, JP-ANo. 2001-55507, JP-ANo. 2001-310938, JP-ANo. 2001-310937 and JP-A No. 2001-220526.

The epoxy compounds include aromatic epoxide, alicyclic epoxide and aliphatic epoxide.

The aromatic epoxide includes di- or polyglycidyl ether produced by reaction of a polyvalent phenol having at least one aromatic nucleus or its alkylene oxide adduct with epichlorohydrin, and examples thereof include di- or polyglycidyl ether of bisphenol A or its alkylene oxide adduct, di- or polyglycidyl ether of hydrogenated bisphenol A or its alkylene oxide adduct, and novolak epoxy resin. The alkylene oxide includes ethylene oxide and propylene oxide.

Preferable examples of the alicyclic epoxide include cyclohexane oxide- or cyclopentene oxide-containing compounds obtained by epoxylating a compound having at least one cycloalkane ring such as a cyclohexene or cyclopentene ring, with a suitable oxidizing agent such as hydrogen peroxide or peracid.

The aliphatic epoxide includes di- or polyglycidyl ethers of aliphatic polyvalent alcohol or its alkylene oxide adduct, and typical examples thereof include alkylene glycol diglycidyl ethers such as ethylene glycol diglycidyl ether, propylene glycol diglycidyl ether or 1,6-hexane diol diglycidyl ether, polyvalent alcohol polyglycidyl ethers such as di- or triglycidyl ethers of glycerin or its alkylene oxide adduct, and polyalkylene glycol diglycidyl ethers represented by diglycidyl ethers of polyethylene glycol or its alkylene oxide adduct, and diglycidyl ethers of polypropylene glycol or its alkylene oxide adduct. The alkylene oxide includes ethylene oxide and propylene oxide.

The epoxy compound is preferably the aromatic epoxide or alicyclic epoxide, particularly preferably the alicyclic epoxide, from the viewpoint of excellent curing rate.

The vinyl ether compound includes, for example, di- or trivinyl ether compounds such as ethylene glycol divinyl ether, diethylene glycol divinyl ether, triethylene glycol divinyl ether, propylene glycol divinyl ether, dipropylene glycol divinyl ether, butane diol divinyl ether, hexane diol divinyl ether, cyclohexane dimethanol divinyl ether, and trimethylol propane trivinyl ether, and monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexane dimethanol monovinyl ether, n-propyl vinyl ether, isopropyl vinyl ether, isopropenyl ether-O-propylene carbonate, dodecyl vinyl ether, diethylene glycol monovinyl ether, and octadecyl vinyl ether.

From the viewpoint of curing properties, adhesion to a recording medium and the surface hardness of an image formed, the vinyl ether compound is preferably the di-or trivinyl ether compound, particularly preferably the divinyl ether compound.

The oxetane compound in the invention refers to a compound having an oxetane ring, and known oxetane compounds described in JP-ANo. 2001-220526, JP-ANo. 2001-310937 and JP-A No. 2003-341217 can be arbitrarily selected for use.

The compound having an oxetane ring, which can be used in the ink composition of the invention, is preferably a compound having 1 to 4 oxetane rings in its structure. By using such a compound, the viscosity of the ink composition can be maintained in such a range as to be excellent in handling ability, and high adhesion of the ink after curing to a recording medium can be attained.

The compound having 1 to 2 oxetane rings in its molecule includes compounds represented by the following formulae (i) to (iii):

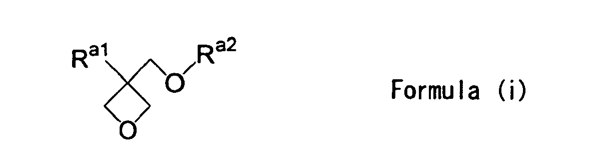

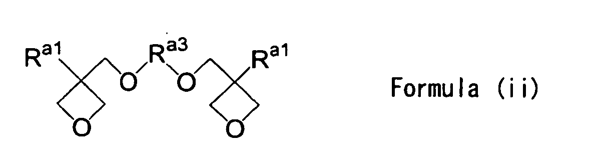

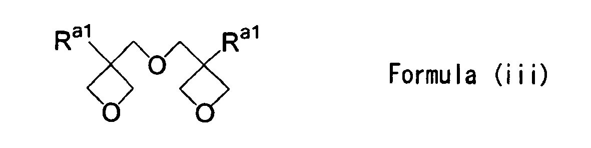

In the formulae (i) to (iii) above, R^{a1} represents a hydrogen atom, a C1 to C6 alkyl group, a C 1 to C6 fluoroalkyl group, an allyl group, an aryl group, a furyl group or a thienyl group. When there are two R^{a1}s in the molecule, they may be the same or different.

The alkyl group includes a methyl group, ethyl group, propyl group, butyl group etc. Preferable examples of the fluoroalkyl group include those groups derived from the above alkyl groups by replacing its hydrogen atom by a fluorine atom.

In the formula (i) above, R^{a2} represents a hydrogen atom, a C1 to C6 alkyl group, a C2 to C6 alkenyl group, a group having an aromatic ring, a C2 to C6 alkyl carbonyl group, a C2 to C6 alkoxy carbonyl group or a C2 to C6 N-alkyl carbamoyl group.

The alkyl group includes a methyl group, ethyl group, propyl group, butyl group etc.; the alkenyl group includes a 1-propenyl group, 2-propenyl group, 2-methyl-1-propenyl group, 2-methyl-2-propenyl group, 1-butenyl group, 2-butenyl group, 3-butenyl group etc.; and the group having an aromatic ring includes a phenyl group, benzyl group, fluorobenzyl group, methoxy benzyl group, phenoxy ethyl group etc.

The alkyl carbonyl group includes an ethyl carbonyl group, propyl carbonyl group, butyl carbonyl group etc.; the alkoxy carbonyl group includes an ethoxy carbonyl group, propoxy carbonyl group, butoxy carbonyl group etc.; and the N-alkyl carbamoyl group includes an ethyl carbamoyl group, propyl carbamoyl group, butyl carbamoyl group, pentyl carbamoyl group etc.

In the formula (ii) above, R^{a3} represents a linear or branched alkylene group, a linear or branched poly(alkyleneoxy) group, a linear or branched unsaturated hydrocarbon group, a carbonyl group, a carbonyl group-containing alkylene group, a carboxyl group-containing alkylene group, a carbamoyl group-containing alkylene group, or groups shown below.

The alkylene group includes, for example, an ethylene group, propylene group and butylene group, and the poly(alkyleneoxy) group includes a poly(ethyleneoxy) group, poly(propyleneoxy) group etc.

The unsaturated hydrocarbon group includes a propenylene group, methyl propenylene group, butenylene group etc.

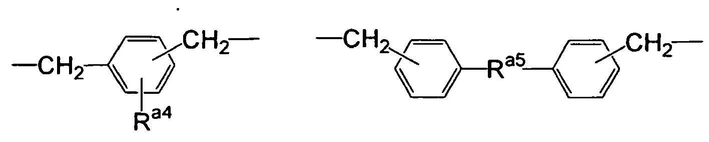

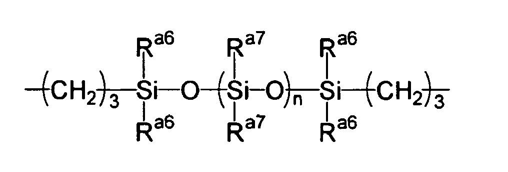

In the above polyvalent group, R^{a4} represents a hydrogen atom, a C1 to C4 alkyl group, a C1 to C4 alkoxy group, a halogen atom, a nitro group, a cyano group, a mercapto group, a lower alkyl carboxyl group, a carboxyl group or a carbamoyl group.

R^{a5} represents an oxygen atom, a sulfur atom, a methylene group, NH, SO, SO₂, C(CF₃)₂, or C(CH₃)₂.

R^{a6} represents a C1 to C4 alkyl group or an aryl group, and n is an integer of 0 to 2,000.

R^{a7} represents a C1 to C4 alkyl group, an aryl group or a monovalent group having the following structure:

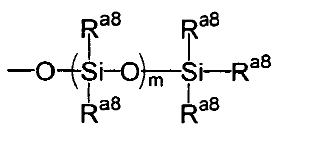

In the above monovalent group, R^{a8} represents a C1 to C4 alkyl group or an aryl group, and m is an integer of 0 to 100.

The compound having 3 to 4 oxetane rings includes compounds represented by the following formula (iv):

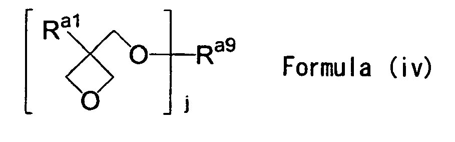

In the formula (iv), R^{a1} has the same meaning as that of R^{a1} in the formula (i) above. R^{a9} is a polyvalent linking group, and examples thereof include C1 to C12 branched alkylene groups such as groups represented by the following A to C, branched poly(alkyleneoxy) groups such as a group represented by the following D, and branched polysiloxy groups such as a group represented by the following E. j is 3 or 4.

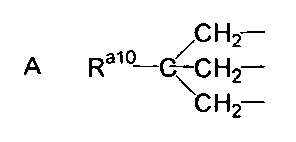

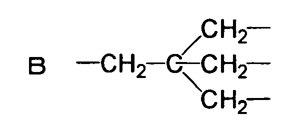

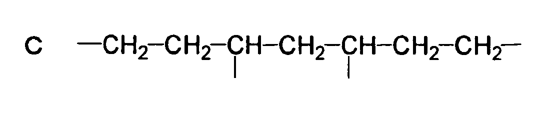

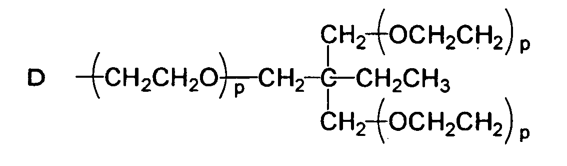

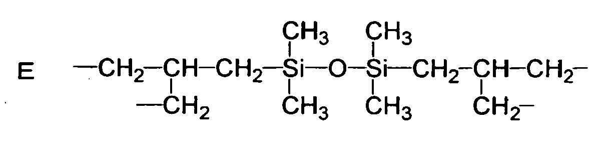

In the above-mentioned A, R^{a10} represents a methyl group, ethyl group or propyl group. In the above-mentioned D, p is an integer of 1 to 10.

Other examples of the oxetane compound that can be preferably used in the invention include compounds having oxetane rings in side chains, represented by the following formula (v):

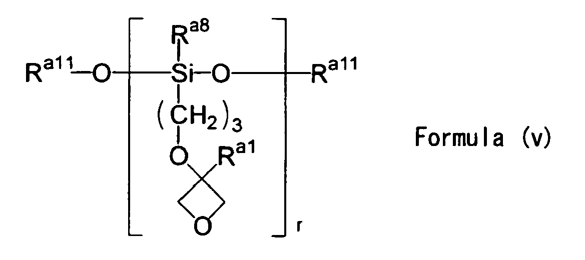

In the formula (v), R^{a8} has the same meaning as that of R^{a8} in the formula (iv) above. R^{a11} is a C1 to C4 alkyl group such as a methyl group, ethyl group, propyl group or butyl group, or a trialkylsilyl group, and r is 1 to 4.

Such compounds having oxetane rings are described in detail in columns [0048] to [0084] in JP-A No. 2003-341217 supra, and the compounds described therein can be preferably used in the invention as well.

Among the oxetane compounds used in the invention, a compound having one oxetane ring is preferably used from the viewpoint of the viscosity and stickiness of the ink composition.

In the ink composition of the invention, these polymerizable compounds may be used alone or as a mixture of two or more thereof, but from the viewpoint of effective suppression of shrinkage of the ink upon curing, at least one kind of oxetane compound is used preferably in combination with at least one kind of compound selected from the epoxy compound and the vinyl ether compound.

From the viewpoint of sensitivity based on polymerization reactivity and the viscosity of the ink composition, the content of the polymerizable compound (b) in the ink composition of the invention is in the range of preferably 98 to 50 % by mass, more preferably 95 to 60 % by mass, still more preferably 90 to 70 % by mass, based on the total solids content of the ink composition.

In the ink composition of the invention, various additives can be simultaneously used in addition to the essential ingredients described above. These arbitrary components are described.

### [(c) Colorant]

By adding the colorant (c) to the ink composition of the invention, a visible image can be formed. For example, when an image region on a planographic printing plate is formed, addition of the colorant is not always necessary, but from the viewpoint of inspection of the resulting planographic printing plate, the colorant is preferably used.

The colorant that can be used in the invention is not particularly limited, and a wide variety of known coloring materials (pigment, dye) can be suitably selected and used depending on applications. For example, when an image excellent in weatherability is to be formed, the pigment is preferable. As the dye, both a water-soluble dye and an oil-soluble dye can be used, but the oil-soluble dye is preferable.

### (Pigment)

The pigment is not particularly limited, and all organic pigments and inorganic pigments that are generally commercially available, or pigments dispersed in an insoluble resin as a dispersing medium, or pigments having a resin grafted onto their surfaces can be used. Resin particles stained with a dye can also be used.

These pigments include those described in "Ganryo No Jiten" edited by Seishiro Ito (published in 2000), W. Herbst, K. Hunger "Industrial Organic Pigments", JP-A No. 2002-12607, JP-A No. 2002-188025, JP-A No. 2003-26978 and JP-A No. 2003-342503.

Specific examples of the organic pigments and inorganic pigments that can be used in the invention include, for example, those showing a yellow color, for example monoazo pigments such as C. I. Pigment Yellow 1 (Fast Yellow G, etc.) and C. I. Pigment Yellow 74, disazo pigments such as C. I. Pigment Yellow 12 (Disazo Yellow AAA, etc.) and C. I. Pigment Yellow 17, non-benzidine azo pigments such as C. I. Pigment Yellow 180, azo lake pigments such as C. I. Pigment Yellow 100 (Tartrazine Yellow Lake, etc.), condensed azo pigments such as C. I. Pigment Yellow 95 (Condensed Azo Yellow GR, etc.), acidic dye lake pigments such as C. I. Pigment Yellow 115 (Quinoline Yellow Lake, etc.), basic dye lake pigments such as C. I. Pigment Yellow 18 (Thioflavin Lake, etc.), anthraquinone pigments such as Flavanthrone Yellow (Y-24), isoindolinone pigments such as Isoindolinone Yellow 3RLT (Y-110), quinophthalone pigments such as Quinophthalone Yellow (Y-138), isoindoline pigments such as Isoindoline Yellow (Y-139), nitroso pigments such as C.I. Pigment Yellow 153 (Nickel Nitroso Yellow, etc.), and metal complex salt azomethine pigments such as C. I. Pigment Yellow 117 (Copper Azomethine Yellow, etc.).

Pigments showing a red or magenta color include monoazo pigments such as C. I. Pigment Red 3 (Toluidine Red, etc.), disazo pigments such as C. I. Pigment Red 38 (Pyrazolone Red B, etc.), azo lake pigments such as C. I. Pigment Red 53:1 (Lake Red C, etc.) and C. I. Pigment Red 57:1 (Brilliant Carmine 6B), condensed azo pigments such as C. I. Pigment Red 144 (Condensed Azo Red BR, etc.), acidic dye lake pigments such as C. I. Pigment Red 174 (Phloxine B Lake, etc.), basic dye lake pigments such as C. I. Pigment Red 81 (Rhodamine 6G' Lake, etc.), anthraquinone pigments such as C. I. Pigment Red 177 (Dianthraquinonyl Red, etc.), thioindigo pigments such as C. I. Pigment Red 88 (Thioindigo Bordeaux, etc.), perinone pigments such as C. I. Pigment Red 194 (Perinone Red, etc.), perylene pigments such as C. I. Pigment Red 149 (Perylene Scarlet, etc.), quinacridone pigments such as C. I. Pigment Violet 19 (unsubstituted quinacridone) and C. I. Pigment Red 122 (Quinacridone Magenta, etc.), isoindolinone pigments such as C. I. Pigment Red 180 (Isoindolinone Red 2BLT, etc.), and Alizarine lake pigments such as C. I. Pigment Red 83 (Madder Lake, etc.).

Pigments showing a blue or cyan color include disazo pigments such as C. I. Pigment Blue 25 (Dianisidine Blue, etc.), phthalocyanine pigments such as C. I. Pigment Blue 15 (Phthalocyanine Blue, etc.), acidic dye lake pigments such as C. I. Pigment Blue 24 (Peacock Blue Lake, etc.), basic dye lake pigments such as C. I. Pigment Blue 1 (Victoria Pure Blue BO Lake, etc.), anthraquinone pigments such as C. I. Pigment Blue 60 (Indanthrone Blue, etc.), and alkali blue pigments such as C. I. Pigment Blue 18 (Alkali Blue V-5:1).

Pigments showing a green color include phthalocyanine pigments such as C. I. Pigment Green 7 (Phthalocyanine Green) and C.I. Pigment Green 36 (Phthalocyanine Green), and azo metal complex pigments such as C. I. Pigment Green 8 (Nitroso Green).

Pigments showing an orange color include isoindoline pigments such as C. I. Pigment Orange 66 (Isoindoline Orange) and anthraquinone pigments such as C. I. Pigment Orange 51 (Dichloropyranthrone Orange).

Pigments showing a black color include carbon black, titanium black, aniline black etc.

Specific examples of white pigments that can be used in the invention include basic lead carbonate (2PbCO₃Pb(OH)₂ known as silver white), zinc oxide (ZnO known as zinc white), titanium oxide (TiO₂ known as titanium white), and strontium titanate (SrTiO₃ known as titanium strontium white).

Titanium oxide, as compared with other white pigments, has low specific gravity and high refractive index, is chemically and physically stable, and thus exhibits hiding power and coloring power as a pigment and is excellent in durability to acid, alkali or other environments. Accordingly, titanium oxide is preferably used as the white pigment. As a matter of course, other white pigments (which may be pigments other than the above-enumerated white pigments) may be used if necessary.

The pigment can be dispersed by using a dispersing apparatus such as a ball mill, sand mill, attritor, roll mill, jet mill, homogenizer, paint shaker, kneader, agitator, Henschel mixer, colloid mill, supersonic homogenizer, pearl mill and wet jet mill.

A dispersant can also be added in dispersing the pigment. The dispersant includes a hydroxyl group-containing carboxylate, a salt of a long-chain polyaminoamide and a high-molecular-weight acid ester, a salt of a high-molecular-weight polycarboxylic acid, a high-molecular-weight unsaturated acid ester, a polymeric copolymer, a modified polyacrylate, an aliphatic polyvalent carboxylic acid, a naphthalene sulfonic acid/formalin condensate, a polyoxyethylene alkyl phosphate, and a pigment derivative. Commercial polymer dispersants such as Solsperse series from Zeneca are also preferably used.

A synergist depending on various pigments can also be used as a dispersing agent. The dispersant and the dispersing agent are added preferably in an amount of 1 to 50 parts by mass based on 100 parts by mass of the pigment.

A solvent may be added as a dispersing medium for various ingredients such as the pigment in the ink composition, or the composition may be solvent-free using the polymerizable compound (b), that is, a low-molecular component, as a dispersing medium. The ink composition of the invention is preferably solvent-free because it is a radiation-curable ink which is cured after application to a recording medium. One reason for this is that when a solvent remains in the resulting cured ink image, there occurs deterioration in solvent resistance or a problem of VOC (volatile organic compound) in the remaining solvent. From this viewpoint, the dispersing medium is preferably the polymerizable compound (b), and particularly the cation polymerizable monomer having the lowest viscosity is selected from the viewpoint of dispersion suitability and improvement of the handling ability of the ink composition.

The average particle diameter of the pigment particles is preferably 0.08 to 0.5 µm, and the pigment, the dispersant and the dispersing medium are selected and dispersing conditions and filtering conditions are established such that the maximum particle diameter becomes 0.3 to 10 µm, preferably 0.3 to 3 µm. By controlling the particle diameter, clogging in a head nozzle can be prevented, and the storage stability, ink transparency and curing sensitivity of the ink can be maintained.

The colorant is added preferably in an amount of 1 to 10 % by mass, more preferably 2 to 8 % by mass, in terms of the solids content in the ink composition.

### (Dye)

Now, the dye that can be used preferably as the colorant (c) in the invention is described in detail.

The dye used can be selected from conventionally known compounds (dyes). Specifically, dyes described in paragraphs [0023] to [0089] in JP-A No. 2002-114930 can be mentioned.

The yellow dye includes, for example, aryl or heteryl azo dyes having phenols, naphthols, anilines, pyrazolones, pyridones, or open-chain active methylene compounds as the coupling component; azomethine dyes having open-chain active methylene compounds as the coupling component; methine dyes such as benzylidene dye and monomethine oxonol dye; quinone dyes such as naphthoquinone dye and anthraquinone dye, and other dyes include quinophthalone dyes, nitro/nitroso dyes, acridine dyes, acridinone dyes etc.

The magenta dye includes, for example, aryl or heteryl azo dyes having phenols, naphthols, anilines, pyrazolones, pyridones, pyrazolotriazoles, closed-ring active methylene compounds (for example, dimedone, barbituric acid, 4-hydroxy coumarin derivatives), or electron-excess heterocycles (for example, pyrrole, imidazole, thiophene, thiazole derivatives) as the coupling component; azomethine dyes having pyrazolones or pyrazolotriazoles as the coupling component; methine dyes such as arylidene dye, styryl dye, merocyanine dye and oxonol dye; carbonium dyes such as diphenylmethane dye, triphenylmethane dye and xanthene dye; quinone dyes such as naphthoquinone, anthraquinone and anthrapyridone; and condensed polycyclic dyes such as dioxazine dye.

The cyan dye includes, for example, azomethine dyes such as indoaniline dye and indophenol dye; polymethine dyes such as cyanine dye, oxonol dye and merocyanine dye; carbonium dyes such as diphenylmethane dye, triphenylmethane dye and xanthene dye; phthalocyanine dyes; anthraquinone dyes; aryl or heteryl azo dyes having phenols, naphthols, anilines, pyrrolopyrimidin-one or pyrrolotriazin-one derivatives as the coupling component; and indigo/thioindigo dyes.

These dyes may be those showing each color of yellow, magenta and cyan upon dissociation of a part of their chromophore, and the counter cation in this case may be an inorganic cation such as alkali metal or ammonium, an organic cation such as pyridinium and quaternary ammonium salt, or a cation polymer having a partial structure thereof.

The dye used in the invention is preferably oil-soluble. Specifically, the oil-soluble dye refers to a dye having a solubility of 1 g or less in water at 25°C (mass of the dye dissolved in 100 g water), preferably 0.5 g or less, more preferably 0.1 g or less. Accordingly, a water-insoluble oil-soluble dye is preferably used.

For the dye used in the invention, an oil-solubilizing group is preferably introduced into the nucleus of the above dye in order to dissolve it in a necessary amount in the ink composition.

The oil-solubilizing group includes a long-chain/branched alkyl group, a long-chain/branched alkoxy group, a long-chain/branched alkylthio group, a long-chain/branched alkylsulfonyl group, a long-chain/branched acyloxy group, a long-chain/branched alkoxycarbonyl group, a long-chain/branched acyl group, a long-chain/branched acylamino group, a long-chain/branched alkylsulfonylamino group, a long-chain/branched alkylaminosulfonyl group, and groups substituted with these long-chain/branched groups, such as an aryl group, aryloxy group, aryloxycarbonyl group, arylcarbonyloxy group, arylaminocarbonyl group, arylaminosulfonyl group and arylsulfonylamino group.

Dyes may be obtained from water-soluble dyes having carboxylic acid or sulfonic acid by introducing an oil-solubilizing group such as an alkoxycarbonyl group, aryloxycarbonyl group, alkylaminosulfonyl group, or arylaminosulfonyl group by using a long-chain/branched alcohol, amine, phenol or aniline derivative.

The melting point of the oil-soluble dye is preferably 200°C or less, more preferably 150°C or less, still more preferably 100°C or less. By using the oil-soluble dye having a low melting point, the colorant in the ink composition can be prevented from being precipitated as crystals, thus improving the storage stability of the ink composition.

For improving curing properties and resistance to fading particularly with oxidizing substances such as ozone, the oxidation potential is desirably higher. Therefore, the oxidation potential of the oil-soluble dye used in the invention is preferably higher than 1.0 V (vs SCE). The oxidation potential is preferably higher, and the oxidation potential is more preferably higher than 1.1 V (vs SCE), still more preferably higher than 1.15 V (vs SCE).

The yellow dyes are preferably compounds having the structure represented by formula (Y-I) shown in JP-A No. 2004-250483.

Particularly preferable dyes are dyes represented by formulae (Y-II) to (Y-IV) shown in paragraph [0034] in JP-A No. 2004-250483, and specific examples include compounds shown in paragraphs [0060] to [0071] in JP-A No. 2004-250483. The oil-soluble dye of formula (Y-I) shown in JP-A No. 2004-250483 supra may be used not only in yellow ink but also inks of any colors such as black ink and red ink.

The magenta dyes are preferably compounds having the structures represented by formulae (3) and (4) shown in JP-A No. 2002-114930, and specific examples include compounds shown in paragraphs [0054] to [0073] in JP-A No. 2002-114930.

The dyes are particularly preferably azo dyes represented by formulae (M-1) to (M-2) shown in paragraphs [0084] to [0122] in JP-A No. 2002-121414, and specific examples include compounds described in paragraphs [0123] to [0132] in JP-ANo. 2002-121414. The oil-soluble dyes of the formulae (3), (4) and (M-1) to (M-2) shown in JP-A No. 2002-121414 supra may be used not only in magenta ink but also in inks of any colors such as black ink and red ink.

The cyan dyes are preferably dyes represented by formulae (I) to (IV) in JP-A No. 2001-181547 and dyes represented by formula (IV-1) to (IV-4) shown in paragraphs [0063] to [0078] in JP-A No. 2002-121414, and specific examples include compounds described in paragraphs [0052] to [0066] in JP-A No. 2001-181547 and paragraphs [0079] to [0081] in JP-A No. 2002-121414.

The dyes are particularly preferably phthalocyanine dyes represented by formulae (C-I) and (C-II) shown in paragraphs [0133] to [0196] in JP-A No. 2002-121414, particularly preferably the phthalocyanine dyes represented by the formula (C-II). Specific examples include compounds described in paragraphs [0198] to [0201] in JP-A No. 2002-121414. The oil-soluble dyes of the formulae (I) to (IV), (IV-I) to (IV-4), (C-I) and (C-II) may be used not only in cyan ink but also in inks of any colors such as black ink and green ink.

The oxidation potential value (Eox) of the dye in the invention can be measured by the same method as for the oxidation potential of the sensitizing colorant described above.

In the range of the concentration of a measuring solvent and a phthalocyanine compound as a sample, the oxidation potential of the sample in a non-associated state is measured in the method of measuring the oxidation potential.

Specific examples of the dyes used preferably in the invention are shown below, but the dyes used in the invention are not limited to the following specific examples.

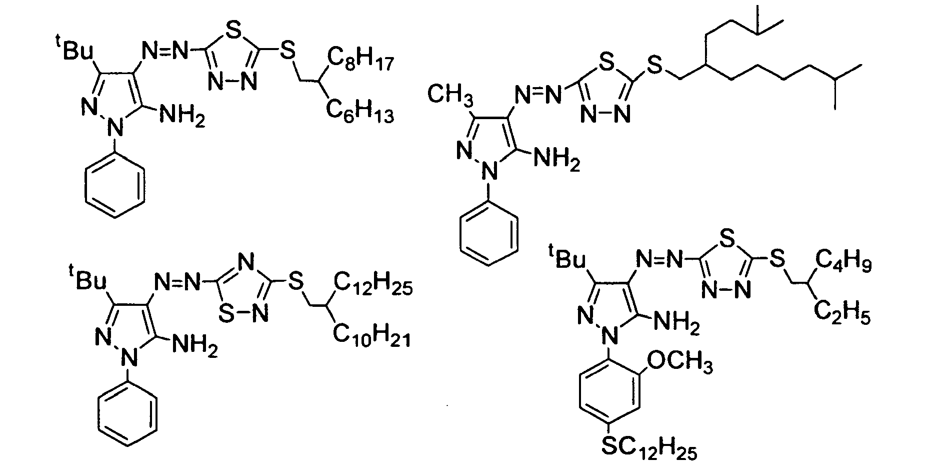

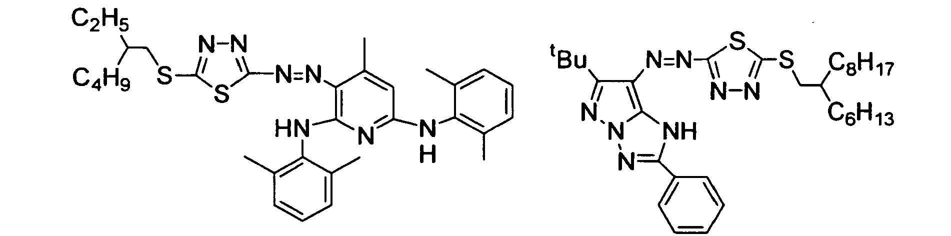

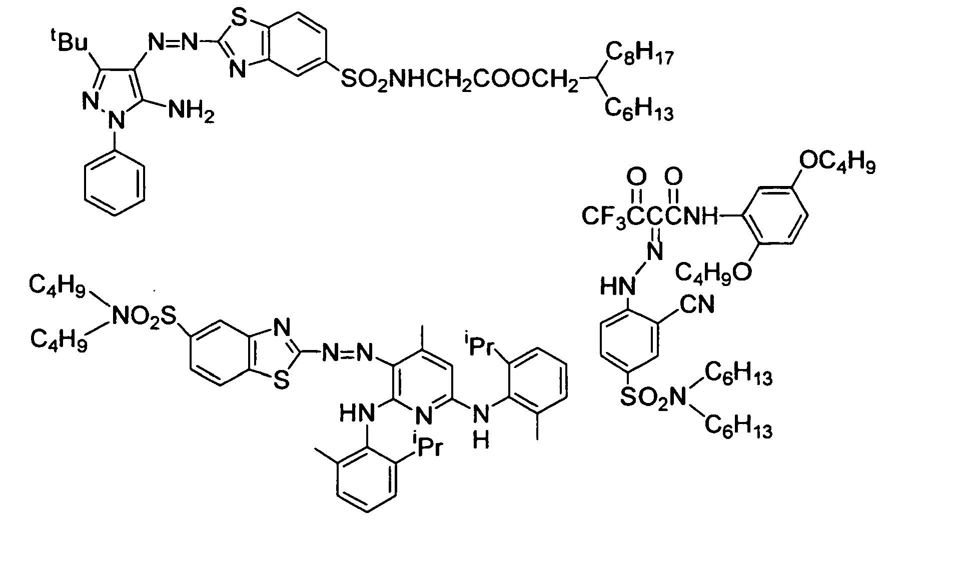

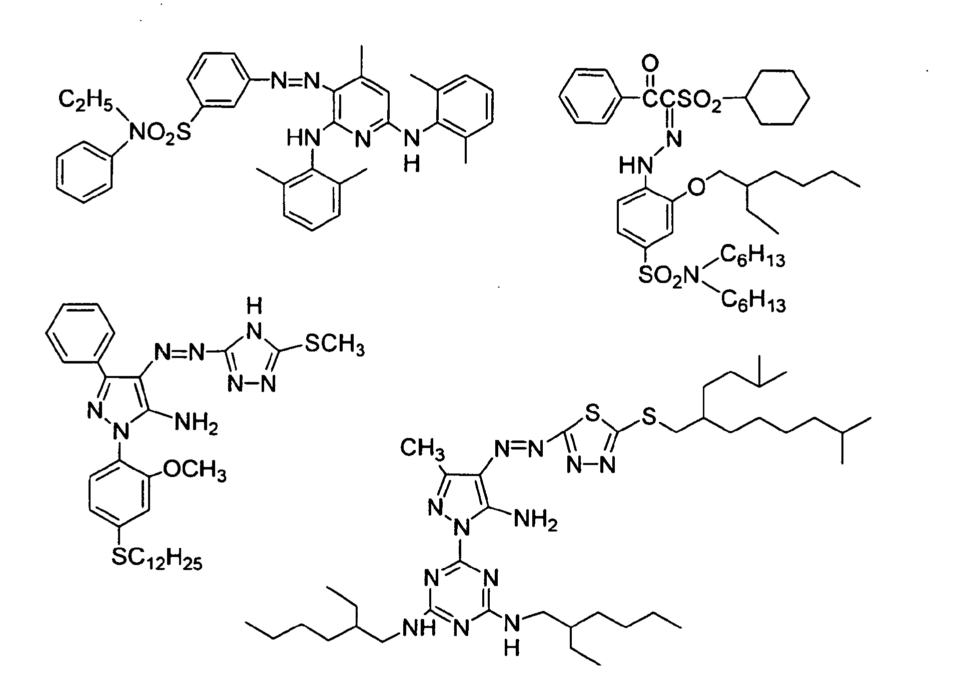

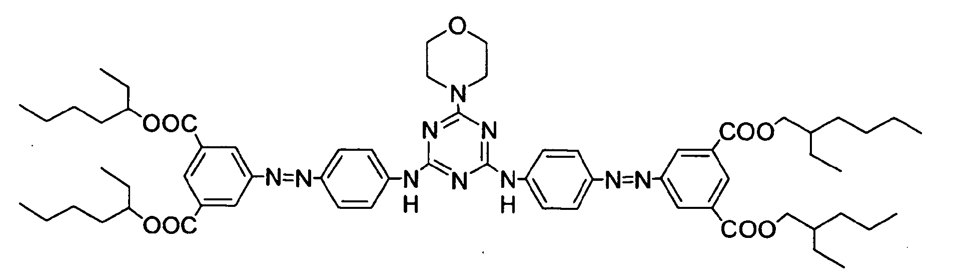

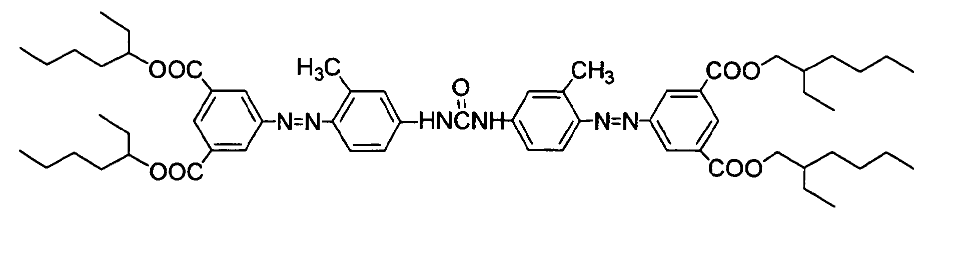

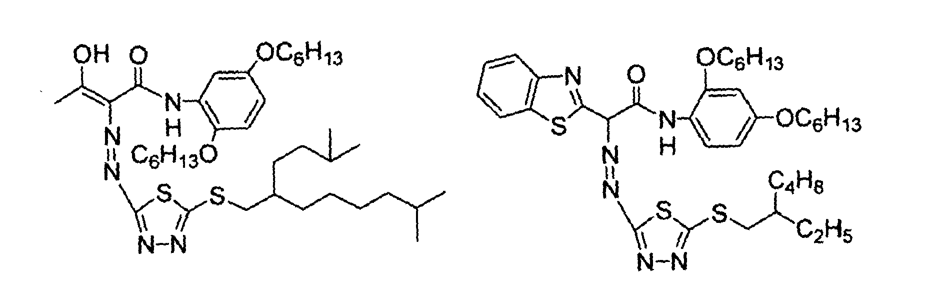

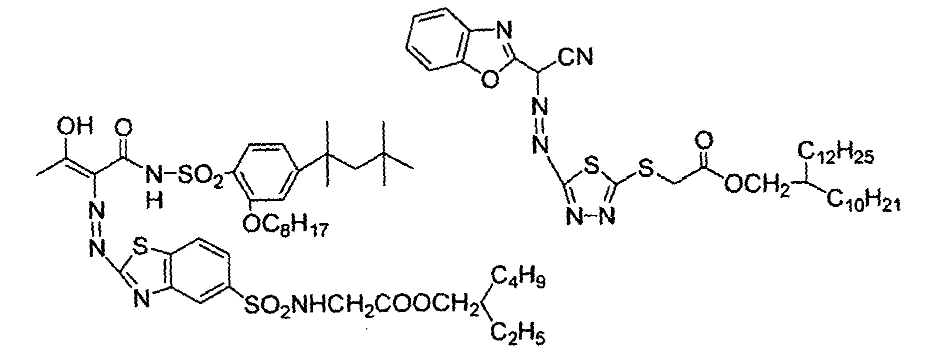

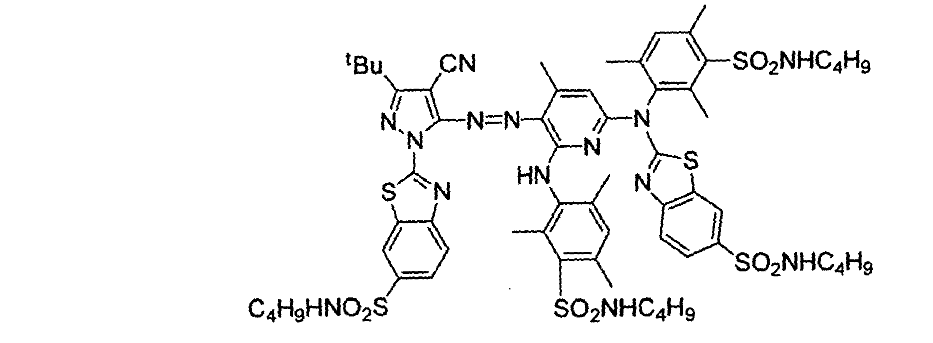

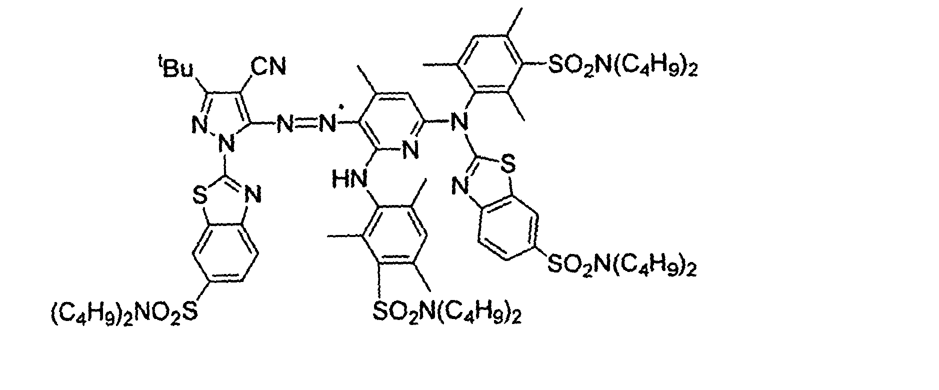

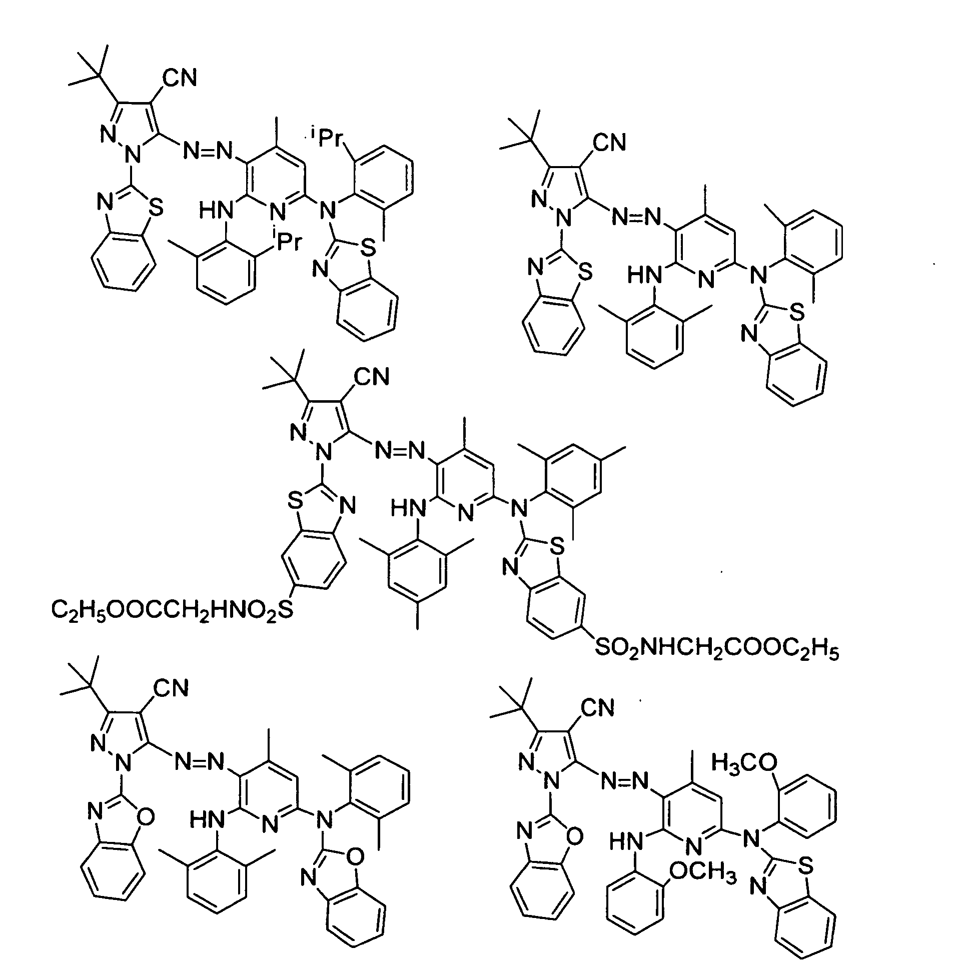

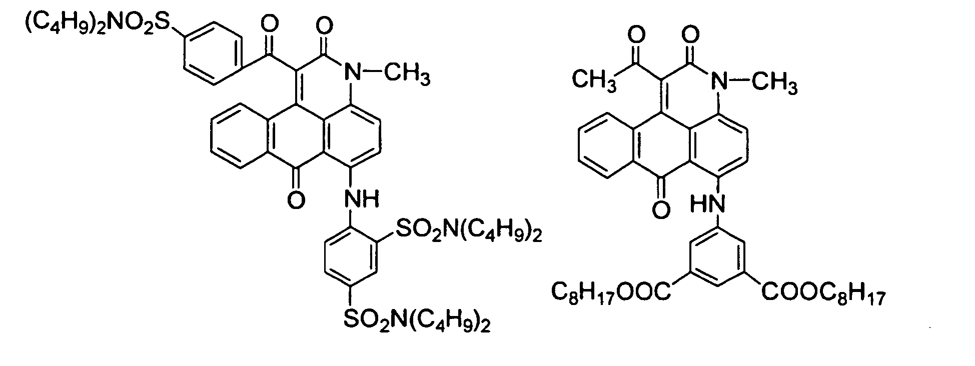

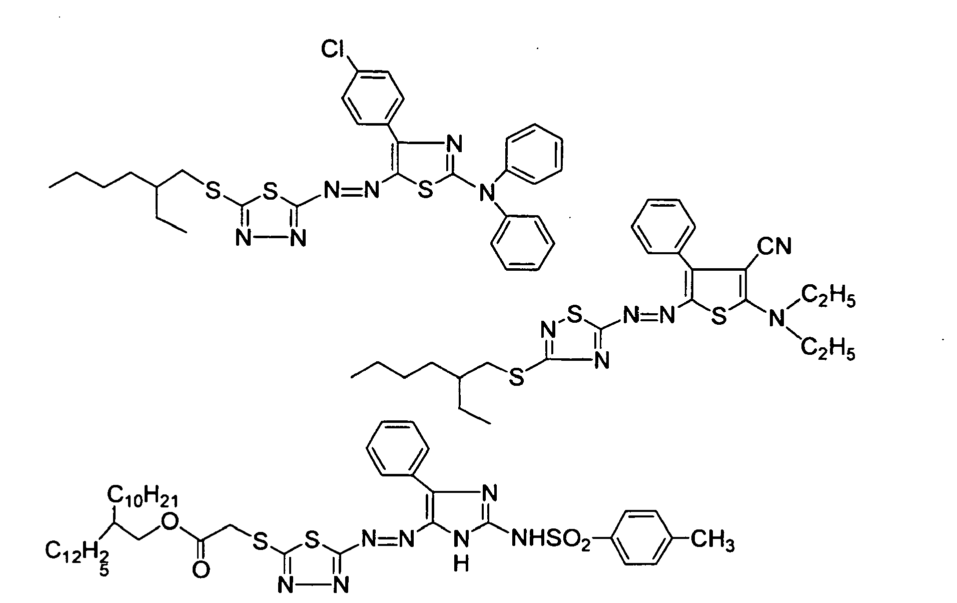

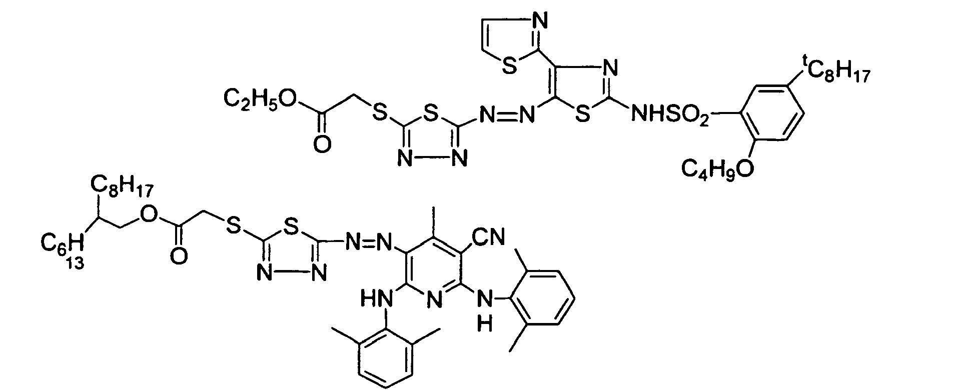

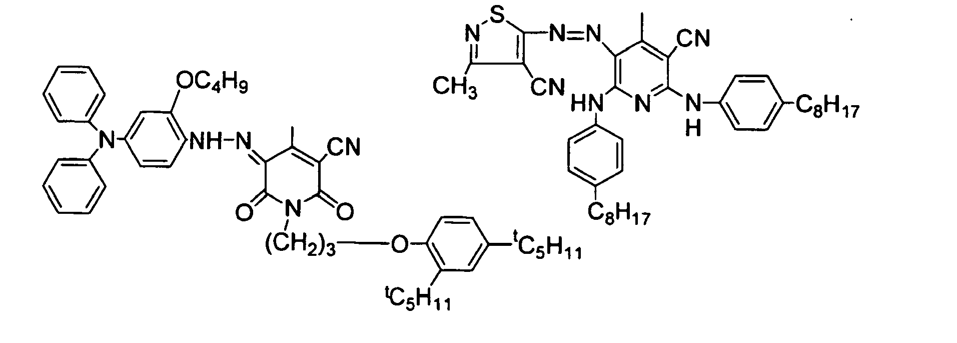

| | | | | |
|---|---|---|---|---|
| 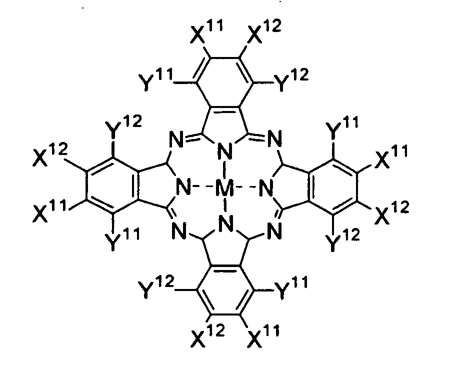 | | | | |

| Compound No. | M | X¹¹ | X¹² | Y¹¹,Y¹² |
|---|---|---|---|---|
| F-1 | Cu | 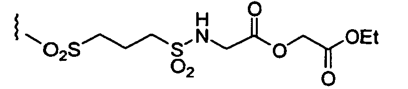 | H | H, H |
| F-2 | Cu | 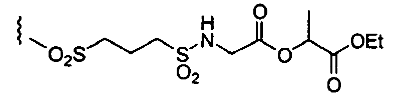 | H | H, H |
| F-3 | Cu | 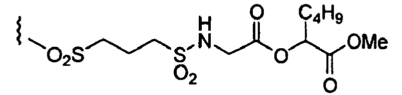 | H | H, H |
| F-4 | Cu | 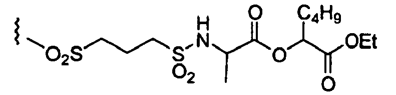 | H | H, H |
| F-5 | Cu | 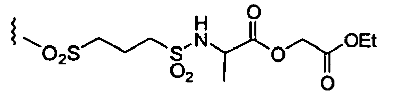 | H | H, H |
| F-6 | Cu | 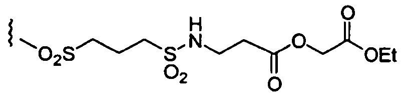 | H | H, H |
| F-7 | Cu | 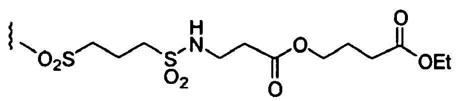 | H | H, H |
| F-8 | Cu | 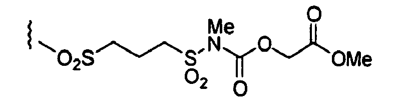 | H | H, H |
| F-9 | Cu | 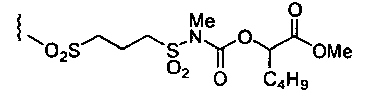 | H | H, H |
| F-10 | Cu | 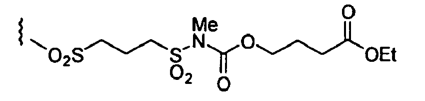 | H | H, H |
| F-11 | Cu | 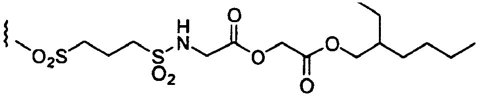 | H | H, H |
| F-12 | Cu | 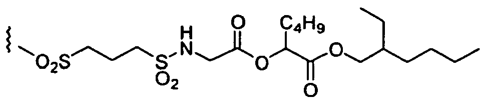 | H | H, H |
| F-13 | Cu | 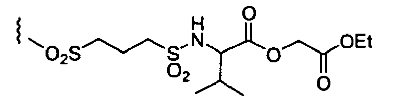 | H | H, H |
| F-14 | Cu | 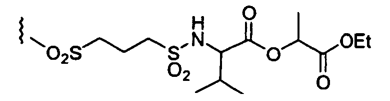 | H | H, H |
| F-15 | Cu | 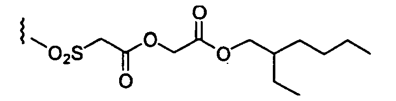 | H | H, H |
| F-16 | Cu | 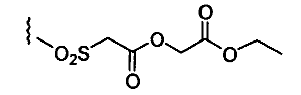 | H | H, H |
| F-17 | Cu | 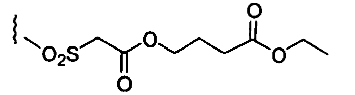 | H | H, H |
| F-18 | Cu | 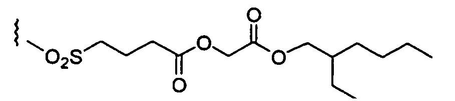 | H | H, H |
| F-19 | Cu | 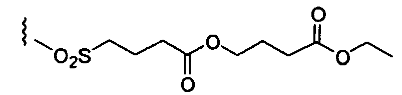 | H | H, H |
| F-20 | Cu | 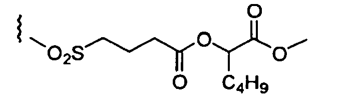 | H | H, H |
| F-21 | Cu | 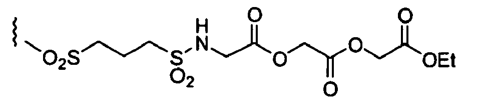 | H | H, H |
| F-22 | Cu | 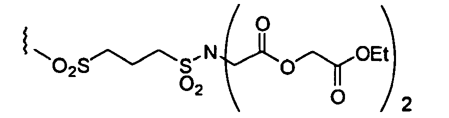 | H | H, H |
| F-23 | Cu | 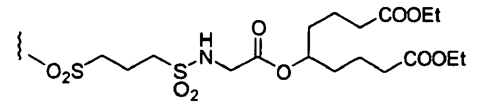 | H | H, H |
| F-24 | Cu | 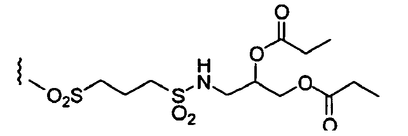 | H | H, H |
| F-25 | Cu | 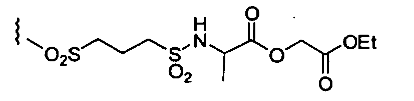 | H | H, Cl |
| F-26 | Cu | 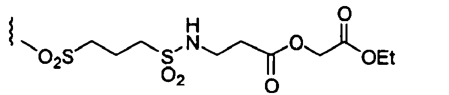 | H | H, Cl |
| F-27 | Cu | 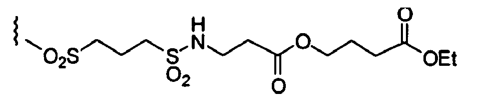 | H | H, Cl |
| F-28 | Cu | 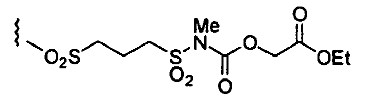 | H | H, Cl |
| F-29 | Cu | 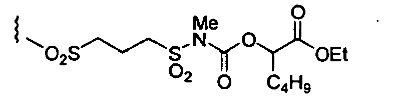 | H | H, Cl |
| F-30 | Cu | 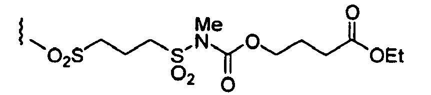 | H | H, Cl |

| | | | | |
|---|---|---|---|---|
| In (Y¹¹, Y¹²), the order of H and Cl may be changed. | | | | |

| | | | |
|---|---|---|---|
| 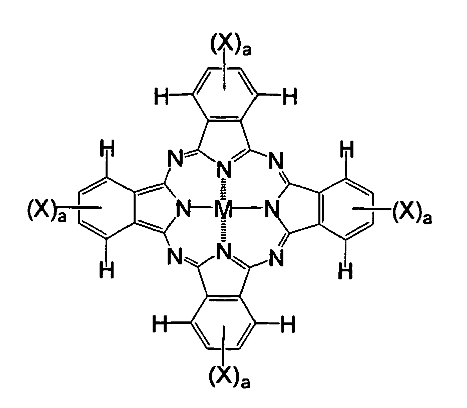 | | | |

| Compound No. | M | X | a |
|---|---|---|---|
| G-1 | Cu | 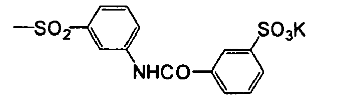 | 1 |
| G-2 | Cu | 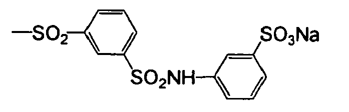 | 1 |
| G-3 | Cu | 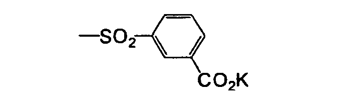 | 1 |
| G-4 | Ni | 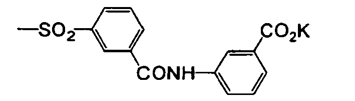 | 1 |
| G-5 | Cu | 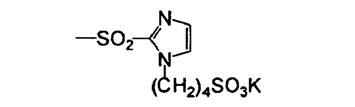 | 1 |
| G-6 | Cu | 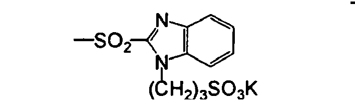 | 1 |
| G-7 | Cu | 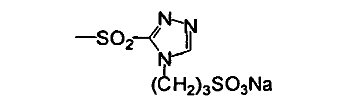 | 1 |
| G-8 | Cu | 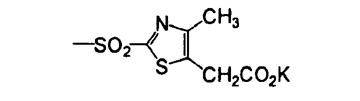 | 1 |
| G-9 | Cu | 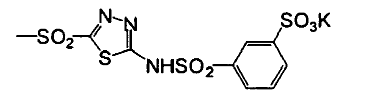 | 1 |
| G-10 | Cu | 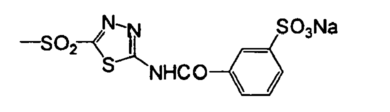 | 1 |
| G-11 | Cu | 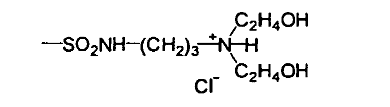 | 1 |
| G-12 | Cu | 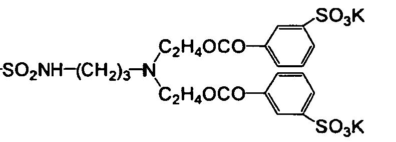 | 1 |
| G-13 | Cu | 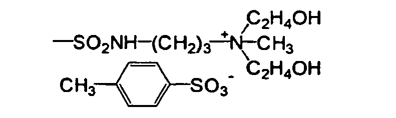 | 1 |
| G-14 | Cu | 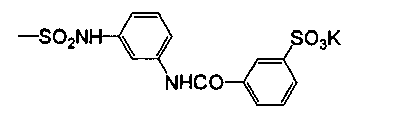 | 1 |
| G-15 | Cu | 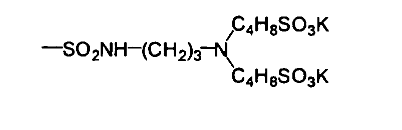 | 1 |
| G-16 | Ni | 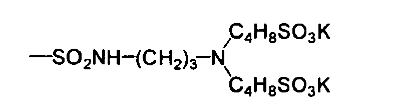 | 1 |
| G-17 | Zn | 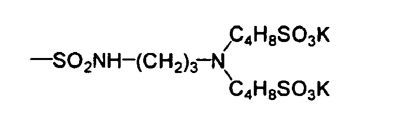 | 1 |
| G-18 | Cu | 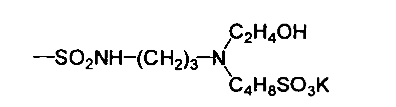 | 1 |
| G-19 | Cu | 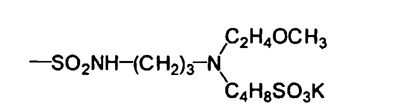 | 1 |
| G-20 | Cu | 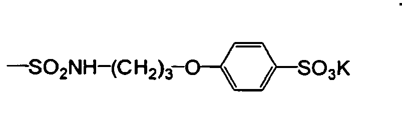 | 1 |

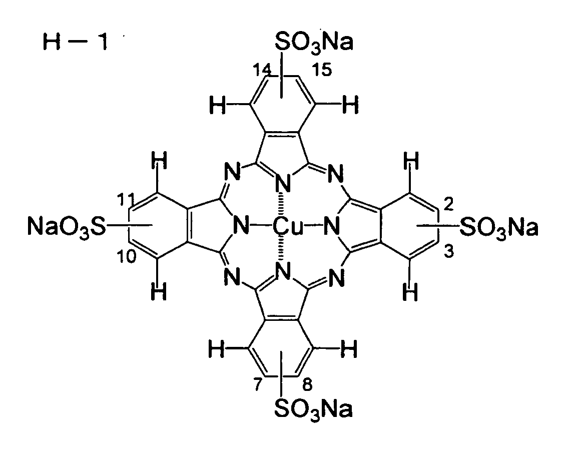

These colorants are added in an amount of preferably 0.5 to 20 % by mass, more preferably 1 to 15 % by mass, still more preferably 5 to 15 % by mass, based on the ink composition.

### [Other components]

Hereinafter, various additives used if necessary in the ink composition of the invention are described in detail.

### (Polymerization inhibitor)

For the purpose of improving storability, a polymerization inhibitor can be added to the ink composition of the invention. When the ink composition of the invention is applied to ink jet recording, the viscosity of the ink composition when discharged is desirably reduced by heating in the range of 40 to 80°C, and thus the polymerization inhibitor is preferably added to prevent a head from being clogged by thermal polymerization.

The polymerization inhibitor includes, for example, hydroquinone, benzoquinone, p-methoxy phenol, TEMPO, TEMPOL, Kuperon AI, etc.

The polymerization inhibitor is added at a concentration of 200 to 20,000 ppm based on the total amount of the ink composition of the invention.

### (UV absorber)

From the viewpoint of improvement in weatherability and prevention of fading in the resulting image, a UV absorber can be added to the ink composition of the invention.

As the UV absorber, use can be made of benzotriazole compounds described in JP-A No. 58-185677, JP-A No. 61-190537, JP-A No. 2-782, JP-A No. 5-197075 and JP-A No. 9-34057, benzophenone compounds described in JP-A No. 46-2784, JP-A No. 5-194483 and USP No. 3214463, cinnamic acid compounds described in JP-B No. 48-30492, JP-B No. 56-21141 and JP-A No. 10-88106, triazine compounds described in JP-A No. 4-298503, JP-A No. 8-53427, JP-A No. 8-239368, JP-A No. 10-182621 and Japanese Patent Application National Publication (Laid-Open) No. 8-501291, compounds described in Research Disclosure No. 24239, and compounds such as stilbene and benzoxazole compounds absorbing ultraviolet rays to emit fluorescence, that is, fluorescent brighteners.

The amount of the UV absorber added is selected suitably depending on the object, and is generally 0.01 to 10 % by mass in terms of solids content.

### (Antioxidant)

For improving stability, an antioxidant can be added to the ink composition of the invention. The antioxidants include those described in European Patent Laid-Open Nos. 223739, 309401, 309402, 310551, 310552 and 459416, German Patent Laid-Open No. 3435443, JP-A No. 54-48535, JP-A No. 62-262047, JP-A No. 63-113536, JP-A No. 63-163351, JP-A No. 2-262654, JP-A No. 2-71262, JP-A No. 3-121449, JP-A No. 5-61166, JP-A No. 5-119449, USP No. 4814262 and USP No. 4980275.

The amount of the antioxidant added is selected suitably depending on the object, and is generally 0.01 to 10 % by mass in terms of solids content.

### (Anti-fading agent)

Various organic or metal complex anti-fading agents can be used in the ink composition of the invention. The organic anti-fading agent includes hydroquinones, alkoxy phenols, dialkoxy phenols, phenols, anilines, amines, indanes, chromans, alkoxy anilines, and heterocyclic rings. The metal complex anti-fading agent includes a nickel complex and a zinc complex. Specifically, it is possible to employ compounds described in No. VII, items I to J, in Research Disclosure (RD) No. 17643, RD No. 15162, left column on page 650 in RD No. 18716, page 527 in RD No. 36544 and page 872 in RD No. 307105, and compounds described in patents cited RD No. 15162, and compounds of formulae and typical compounds described on pages 127-137 in JP-A 62-215272.

The amount of the anti-fading agent added is selected suitably depending on the object, and is generally 0.01 to 10 % by mass in terms of solids content.

### (Electroconductive salts)

For the purpose of regulating physical properties upon discharge, electroconductive salts such as potassium thiocyanate, lithium nitrate, ammonium thiocyanate, and dimethylamine hydrochloride can be added to the ink composition of the invention.

The amount of the electroconductive salt added is selected suitably depending on the object, and is generally 0.01 to 10 % by mass in terms of solids content.

### (Solvent)

The addition of a very small amount of an organic solvent to the ink composition of the invention is effective in improving adhesion to a recording medium.

The solvent includes, for example, ketone solvents such as acetone, methyl ethyl ketone and diethyl ketone, alcohol solvents such as methanol, ethanol, 2-propanol, 1-propanol, 1-butanol and tert-butanol, chlorine-based solvents such as chloroform and methylene chloride, aromatic solvents such as benzene and toluene, ester solvents such as ethyl acetate; butyl acetate and isopropyl acetate, ether solvents such as diethyl ether, tetrahydrofuran and dioxane, and glycol ether solvents such as ethylene glycol monomethyl ether and ethylene glycol dimethyl ether.

In this case, it is effective to add the solvent in such a range as not to cause problems in solvent resistance and VOC, and the amount of the solvent added is in the range of preferably 0.1 to 5 % by mass, more preferably 0.1 to 3 % by mass, based on the whole of the ink composition.

### (Polymer compound)

To regulate physical properties of a coating film, various polymer compounds can be added to the ink composition of the invention. The polymer compound that can be used in the invention includes an acrylic polymer, polyvinyl butyral resin, polyurethane resin, polyamide resin, polyester resin, epoxy resin, phenol resin, polycarbonate resin, polyvinyl butyral resin, polyvinyl formal resin, shellac, vinyl resin, acrylic resin, rubber-based resin, wax, and other natural resins. These may be used as a mixture of two or more thereof. Among these, a vinyl copolymer obtained by copolymerizing acrylic monomers is preferable. A copolymer containing "carboxyl group-containing monomer", "alkyl methacrylate" or "alkyl acrylate" as a structural unit is also preferably used in a copolymerization composition of a polymer binder.

The amount of the polymer compound added is selected suitably depending on the object, and is generally 0.01 to 10 % by mass in terms of solids content.

### (Surfactant)

A surfactant may be added to the ink composition of the invention. The surfactant includes surfactants described in JP-A No. 62-173463 and JP-A No. 62-183457. Examples of the surfactant include, for example, anionic surfactants such as dialkyl sulfosuccinates, alkyl naphthalene sulfonates and fatty acid salts, nonionic surfactants such as polyoxyethylene alkyl ethers, polyoxyethylene alkyl allyl ethers, acetylene glycols, and polyoxyethylene/polyoxypropylene block copolymers, and cationic surfactants such as alkyl amine salts and quaternary ammonium salts. In place of the surfactant, an organic fluoro compound may be used. The organic fluoro compound is preferably hydrophobic. The organic fluoro compound includes, for example, fluorine-based surfactants, oily fluorine-based compounds (for example, fluorine oil) and solid fluorine compound resin (for example, ethylene tetrafluoride resin), and such fluoro compounds include those described in JP-B No. 57-9053 (columns 8 to 17) and JP-A No. 62-135826.

The amount of the surfactant added is selected suitably depending on the object, and is generally 0.01 to 10 % by mass in terms of solids content.

If necessary, a leveling additive, a matting agent, wax for regulating physical properties of a coating film, and a tackifier regulating adhesion to a recording medium such as polyolefin and PET and not inhibiting polymerization can also be contained in the ink composition of the invention.

Specific examples of the tackifier include high-molecular-weight sticky polymers (copolymers consisting of, for example, esters of (meth)acrylic acid and C 1 to C20 alkyl group-containing alcohol, esters of (meth)acrylic acid and C3 to C 14 alicyclic alcohol, and esters of (meth)acrylic acid and C6 to C 14 aromatic alcohol) described on pages 5 to 6 in JP-ANo. 2001-49200, and low-molecular-weight tackifier resin having polymerizable unsaturated bonds.

### [Preferable physical properties of the ink composition]

When the ink composition of the invention is applied to ink jet recording, the ink viscosity at the temperature upon discharging is preferably 7 to 30 mPa·s, more preferably 7 to 20 mPa.s, in consideration of discharging properties. The compounding ratio is preferably regulated and determined such that the ink viscosity becomes to be in this range. The viscosity of the ink composition at room temperature (25 to 30°C) is 35 to 500 mPa·s, preferably 35 to 200 mPa·s. By allowing the viscosity to be set high at room temperature, penetration of the ink into a recording medium can be prevented even if the recording medium is porous, and uncured monomers can be reduced, the smell can be reduced, and bleeding of dots upon application of ink droplets can be prevented, and as a result, qualities of the resulting image can be improved. When the ink viscosity at 25 to 30°C is lower than 35 mPa.s, the effect of preventing bleeding is low, while when the viscosity is higher than 500 mPa.s, there arises a problem in delivery of the ink liquid.

The surface tension of the ink composition of the invention is preferably 20 to 30 mN/m, more preferably 23 to 28 mN/m. For use in recording on various recording mediums such as polyolefin, PET, coated paper and uncoated paper, the surface tension is preferably at least 20 mN/m from the viewpoint of bleeding and permeation, or up to 30 mN/m in respect of wetting properties.

The thus prepared ink composition of the invention is used preferably as ink for ink jet recording. Recording is carried out specifically by discharging the ink composition of the invention onto a recording medium by an ink jet printer and then curing the discharged ink composition by irradiation with radiation.

In a printed material obtained by this ink, its image part has been cured by irradiation with radiation such as UV light and is excellent in strength, and thus the ink composition can be used in various applications such as formation of an ink receiving layer (image part) of a planographic printing plate, in addition to formation of an image by the ink.

### [Ink jet recording method and ink jet recording apparatus]

Now, the ink jet recording method of the invention and an ink jet recording apparatus to which the recording method can be applied are described in detail.

The ink jet recording method of the invention comprises the steps consisting of discharging the ink composition of the invention through an ink jet printer onto a recording medium and curing the discharged ink composition by irradiation with active radiation.

In the ink jet recording method of the invention, the ink composition is preferably heated to 40 to 80°C to reduce the viscosity of the ink composition to 7 to 30 mPa·s prior to discharging, and this method can be used to realize high discharging ability.

Generally, the viscosity of the radiation-curing ink composition is higher than that of an aqueous ink, and thus its viscosity change upon change in temperature during printing is significant. The viscosity change of this ink composition significantly influences the size of liquid droplets and the speed of discharge of liquid droplets, to cause deterioration in qualities of an image, and thus the temperature of the ink composition during printing should be kept as constant as possible. The change in the temperature of the ink composition is regulated to be preferably within ±5°C, more preferably ±2°C, still more preferably ±1°C, relative to the predetermined temperature.

Now, conditions for irradiation with radiation in the ink jet recording method of the invention are described in detail.

A fundamental method of irradiation with radiation is disclosed in JP-A No. 60-132767. Specifically, a head unit discharging the ink composition, and light sources arranged in both sides of the head unit, are scanned in a shuttle system. Irradiation with radiation is carried out with a predetermined interval after discharge of the ink composition onto a recording medium.

Curing of the ink composition can be completed with a separate light source which is not driven. Specifically, WO 99/54415 discloses an irradiation method of using an optical fiber or a method wherein collimated light sources face a mirror surface arranged in the side of a head unit, to apply UV light onto a recording part (region where the ink composition was applied). In the invention, these irradiation methods can be used.

In the ink jet recording method of the invention, α-rays, γ-rays, X-rays, UV rays, visible light, infrared light and electron rays are used as the radiation. The peak wavelength of this active radiation is for example 200 to 600 nm, preferably 300 to 450 nm, more preferably 350 to 450 nm, depending on the absorption properties of the sensitizing colorant in the ink composition. The electron transfer initiation system (a) in the ink composition of the invention has sufficient sensitivity even toward low-power radiation. Accordingly, it is suitable that the irradiation energy of the radiation is for example up to 2,000 mJ/cm², preferably 10 to 2,000 mJ/cm², more preferably 20 to 1,000 mJ/cm², still more preferably 50 to 800 mJ/cm². It is suitable that the luminous intensity of the active radiation on a light-exposed surface (maximum luminous intensity on the surface of a recording medium) is for example 10 to 2,000 mW/cm², preferably 20 to 1,000 mW/cm².

In the ink jet recording method of the invention, the radiation is emitted particularly preferably from a light-emitting diode generating ultraviolet rays having an emission wavelength peak of 360 to 420 nm and a maximum luminous intensity of 10 to 1,000 mW/cm² on the surface of the recording medium.

It is suitable in the ink jet recording method of the invention that the radiation is applied for example for 0.01 to 120 seconds, preferably 0.1 to 90 seconds, to the ink composition discharged onto the recording medium.

It is desired in the ink jet recording method of the invention that the ink composition is heated to a predetermined temperature and the time from discharge of the ink composition onto a recording medium to irradiation with radiation is 0.01 to 0.5 second, preferably 0.01 to 0.3 second, more preferably 0.01 to 0.15 second. When the time from discharge of the ink composition onto a recording medium to irradiation with radiation is thus regulated to be very short, the discharged ink composition can be prevented from bleeding prior to curing. A porous recording material can be exposed to light before the ink composition permeates deeply to a region where the light does not reach, and thus the unreacted monomers can be prevented from remaining, and as a result, the smell can be reduced.

According to the ink jet recording method of the invention, an image can be formed with high sensitivity and simultaneously ink bleeding and smelling can be suppressed by using the ink composition of the invention as described above. As a result, the diameters of dots of the ink composition discharged can be kept constant on various recording mediums different in surface wetting properties, thus improving image qualities. The effect of the ink composition can be significant particularly when its viscosity at 25°C is 35 to 500 mPa·s.

From the foregoing, a printed material obtained by the ink jet recording method of the invention, that is, a printed material (printed material of the invention) prepared by discharging the ink composition of the invention through an ink jet printer onto a recording medium and then curing the ink composition by irradiation with radiation has excellent image qualities.

For obtaining a color image by using the ink jet recording method of the invention, color inks are laid in the order of low to high brightness thereby permitting the radiation to arrive easily at lower inks, and thus excellent curing sensitivity, reduction in residual monomers, reduction in the smell and improvement in adhesiveness can be expected. In irradiation with radiation, all colors can be simultaneously exposed to the light, but from the viewpoint of promoting curing, it is preferable that light exposure is repeatedly conducted for each of the colors.

The ink jet recording apparatus used in the invention is not particularly limited, and a commercial jet recording apparatus can be used. That is, a commercial ink jet recording apparatus can be used in recording on a recording medium in the invention.

As the ink jet recording apparatus, an apparatus including, for example, an ink feeding system, a temperature sensor and a radiation source is used.

The ink feeding system includes, for example, an original tank containing the ink jet recording ink of the invention, a feeding pipe, an ink feeding tank just before an ink jet head, a filter and a piezo-type ink jet head. The piezo-type ink jet head can be driven to jet 1 to 100 pl, preferably 8 to 30 pl, multi-size dot in a resolution of 320x320 to 4,000x4,000 dpi, preferably 400x400 to 2,400x2,400 dpi, more preferably 1,200x1,200 dpi. As used in the invention, the term "dpi" is indicative of the number of dots per 2.54 cm.

For the radiation-curable ink such as in the ink composition of the invention, the ink composition to be discharged is desirably kept at a constant temperature as described above, and therefore a zone from the ink feeding tank to the ink jet head is preferably thermally insulated and heated. The method of controlling the temperature is not particularly limited, and for example, a plurality of temperature sensors are arranged in the respective pipes so as to regulate heating depending on the flow rate of the ink and ambient temperature. The temperature sensor can be arranged in the vicinity of the ink feeding tank and a nozzle of the ink jet head. The head unit to be heated is preferably thermally insulated such that the main body of the apparatus does not undergo the influence of the temperature of air outside the apparatus. For reducing the warming-up time of the printer required in heating or for reducing a loss in heat energy, it is preferable that the head unit to be heated is thermally insulated from the other site, and the heat capacity of the heated unit as a whole is reduced.

As the radiation source, a mercury lamp, a gas/solid laser etc. are mainly used, and a mercury lamp or a metal halide lamp is widely used for UV-curing ink jet. From the viewpoint of environmental protection at present, however, a mercury-free device is strongly desired, so substitution of GaN-based semiconductor UV emitting device for the mercury lamp is industrially and environmentally very useful. LED (UV-LED) and LD (UV-LD) are small, long-lasting and highly efficient with low costs and expected as a light source for photosetting ink jet.

As described above, a light-emitting diode (LED) and a laser diode (LD) can be used as the radiation source. Particularly, when a UV-light source is necessary, UV-LED and UV-LD can be used. For example, UV-LED showing a main spectrum having a wavelength between 365 and 420 nm is marketed by Nichia Corporation. When a further shorter wavelength is necessary, LED capable of emitting radiation centered between 300 nm to 370 nm is disclosed in USP No. 6,084,250. Other UV-LEDs are also available and can emit radiation having a different UV range. In the invention, the radiation source is particularly preferably UV-LED, more preferably UV-LED having a peak wavelength between 350 and 420 nm.

### [Recording medium]

The recording medium to which the ink composition of the invention is applicable is not particularly limited, and usual paper such as uncoated paper and coated paper, various kinds of non-absorptive resin materials used in soft packages, or resin films formed therefrom can be used, and as various plastic films, mention can be made of, for example, PET film, OPS film, OPP film, ONy film, PVC film, PE film and TAC film. Other plastics that can be used as materials of the recording medium include polycarbonate, acrylic resin, ABS, polyacetal, PVA, rubber etc. Metal and glass can also be used as the recording medium.

When a material of less thermal shrinkage upon curing is selected in the ink composition of the invention, the cured ink composition is excellent in adhesion to a recording medium and thus advantageous in that a highly minute image can be formed on films such as PET film, OPS film, OPP film, ONy film and PVC film easily curled or deformed due to the curing shrinkage of the ink or due to heat generation during curing reaction.

### [Planographic printing plate]

As typical application of the ink composition of the invention, application thereof to a planographic printing plate can be mentioned.

This planographic printing plate is produced by discharging the ink composition of the invention through an ink jet recording apparatus or the like onto a hydrophilic support and then curing the ink composition by irradiation with radiation thereby forming a hydrophobic region. As a result, an imagewise hydrophobic ink-receiving region is formed on the surface of the hydrophilic support, and when ink and an aqueous component are supplied thereto, the hydrophilic component is retained on the region where the hydrophilic support is exposed, while the ink is retained on the hydrophobic region, and the printing plate can be subjected as such to a printing process.

The ink composition of the invention exhibits excellent curability upon irradiation with radiation, and thus the planographic printing plate of the invention using the same is excellent in printing durability and has an image part excellent in image qualities.

By using the ink jet recording method (ink jet recording apparatus) in forming an image part, a highly minute image on the planographic printing plate can be formed directly from digital data. With respect to the ink jet recording method (ink jet recording apparatus) in preparing the planographic printing plate, the above-described conditions in the ink jet recording method of the invention, and the ink jet recording apparatus, can be used.

As the ink composition used in producing the planographic printing plate, the ink composition of the invention can be used as it is.

### (Support)

The support used preferably in preparing the planographic printing plate of the invention is described.

The support used in the planographic printing plate of the invention is not particularly limited insofar as it is a dimensionally stable plate-shaped support. When the surface of a material constituting the support is hydrophilic, the material may be used as it is, or the surface of a plate-shaped material constituting the support may be subjected to hydrophilization treatment.

Examples of the material constituting the support include a paper, a paper laminated with plastics (e.g., polyethylene, polypropylene, polystyrene etc.), a metal plate (e.g., aluminum, zinc, copper etc.), plastic film (e.g., diacetate cellulose, triacetate cellulose, propionate cellulose, butyrate cellulose, acetate butyrate cellulose, nitrate cellulose, polyethylene terephthalate, polyethylene, polystyrene, polypropylene, polycarbonate, polyvinyl acetal etc.), and a paper or plastic film having the above-described metal laminated or vapor-deposited thereon. The support is preferably a polyester film or an aluminum plate. Especially, the aluminum plate is particularly preferable because it is excellent in dimensional stability and relatively inexpensive.

The aluminum plate is preferably a pure aluminum plate or an alloy plate based on aluminum containing a trace of different elements, or a laminate consisting of plastics laminated on a thin film of aluminum or an aluminum alloy. The different elements contained in the aluminum alloy include silicon, iron, manganese, copper, magnesium, chrome, zinc, bismuth, nickel, titanium etc. The content of the different elements in the alloy is preferably up to 10% by mass. A pure aluminum plate is preferable in the invention, but because production of absolutely pure aluminum is difficult by refining techniques, aluminum may contain a trace of different elements. The composition of the aluminum plate is not limited, and any aluminum plates made of known and conventionally used material can be used as necessary.

The thickness of the support is preferably 0.1 to 0.6 mm, more preferably 0.15 to 0.4 mm.

Before use, the aluminum plate is subjected preferably to surface treatment such as roughening treatment or anodizing treatment. By surface treatment, hydrophilicity can be easily improved and the adhesion between the image recording layer and the support can be easily secured. Before the surface of the aluminum plate is roughened, degreasing treatment with, for example, a surfactant, an organic solvent or an aqueous alkali solution is conducted as necessary for removal of rolling oil on the surface thereof.

The treatment of roughening the surface of the aluminum plate is conducted in various methods such as a method of mechanical surface roughening, a method of surface roughening by electrochemical dissolution of the surface and a method of chemical surface roughening by chemically and selectively dissolving the surface.

The method of mechanical surface roughening can make use of known techniques such as ball grinding, brush grinding, blast grinding and buff grinding. A transfer method of transferring an embossed shape with an embossed roll may also be used in the stage of rolling aluminum.

The electrochemical roughening method includes a method of roughening the surface in a hydrochloric acid- or nitric acid-containing electrolyte by use of alternating current or direct current. A method of using a mixed acid as described in JP-A 54-63902 can also be mentioned.

The aluminum plate thus surface-roughened is subjected as necessary to alkali etching treatment with an aqueous solution of potassium hydroxide, sodium hydroxide etc. and then to neutralization treatment, which may be followed if necessary by anodizing treatment to improve abrasion resistance.

As the electrolyte for use in the anodizing treatment of the aluminum plate, various electrolytes for forming a porous oxide film can be used. Generally, sulfuric acid, hydrochloric acid, oxalic acid, chromic acid or a mixed acid thereof is used. The concentration of the electrolyte is determined suitably depending on the type of the electrolyte.

The conditions for the anodizing treatment are varied depending on the electrolyte used and cannot be generalized, but it is usually preferable that the concentration of the electrolyte is 1 to 80% by mass, the liquid temperature is 5 to 70°C, the current density is 5 to 60 A/dm², the voltage is 1 to 100 V, and the electrolysis time is 10 seconds to 5 minutes. The amount of the anodized film is preferably 1.0 to 5.0 g/m², more preferably 1.5 to 4.0 g/m². In this range, good printing durability and good scratch resistance of a non-image part on the planographic printing plate can be achieved.

The support used in the invention may be a substrate itself subjected to the surface treatment and having an anodized film as described above, but for the purpose of further improving adhesion to the top layer, hydrophilicity, stain resistance, thermal insulating properties etc., the treatment for enlarging micropores in the anodized film as described in JP-A 2001-253181 and JP-A 2001-322365, sealing treatment, and surface hydrophilization treatment by dipping the substrate in an aqueous solution containing a hydrophilic compound can be suitably selected and conducted. As a matter of course, the enlargement treatment and sealing treatment are not limited to those described above, and any known methods can be conducted.

### <Sealing treatment>

The sealing treatment that can be used in the invention includes not only sealing treatment with water vapor but also sealing treatment with an aqueous solution containing an inorganic fluorine compound such as single treatment with fluorozirconate and treatment with sodium fluoride, sealing with vapor to which lithium chloride was added, and sealing treatment with hot water.

Particularly, sealing treatment with an aqueous solution containing an inorganic fluorine compound, sealing treatment with water vapor and sealing treatment with hot water are preferable.

### <Hydrophilization treatment>

The hydrophilization treatment that is used in the invention includes an alkali metal silicate method described in USP No. 2,714,066, USP No. 3,181,461, USP No. 3,280,734 and USP No. 3,902,734. In this method, the support is dipped or electrolyzed in an aqueous solution of sodium silicate or the like. In addition, a method of treatment with potassium fluorozirconate as disclosed in JP-B 36-22063 or a method of treatment with polyvinyl phosphonic acid as disclosed in USP No. 3,276,868, USP No. 4,153,461, and USP No. 4,689,272 is mentioned.

The central line average roughness of the support of the invention is preferably 0.10 to 1.2 µm. In this range, excellent adhesion to the image-recording layer, excellent printing durability and excellent stain resistance can be achieved.

### EXAMPLES

Hereinafter, the present invention is described in more detail by reference to the Examples, but the invention is not limited to these examples.

### «Preparation of pigment dispersions»

According to a method described below, each pigment dispersion of yellow, magenta, cyan or black color was prepared. The pigment was dispersed under suitably regulated dispersing conditions with a known dispersing machine such that the average particle diameter of pigment particles became 0.3 µm or less. Then, the resulting dispersion was filtered under heating through a filter to prepare each pigment dispersion.

| | |
|---|---|
| (Yellow pigment dispersion 1) | |
| • C. I. Pigment Yellow 12 | 10 parts by mass |
| • Polymer dispersant (Solsperse series, produced by Zeneca) | 5 parts by mass |
| • Stearyl acrylate | 85 parts by mass |

| | |
|---|---|
| (Magenta pigment dispersion 1) | |
| • C. I. Pigment Red 57:1 | 15 parts by mass |
| • Polymer dispersant (Solsperse series, produced by Zeneca) | 5 parts by mass |
| • Stearyl acrylate | 80 parts by mass |

| | |
|---|---|
| (Cyan pigment dispersion 1) | |
| • C. I. Pigment Blue 15:3 | 20 parts by mass |
| • Polymer dispersant (Solsperse series, produced by Zeneca) | 5 parts by mass |
| • Stearyl acrylate | 75 parts by mass |

| | |
|---|---|
| (Black pigment dispersion 1) | |
| • C. I. Pigment Black 7 | 20 parts by mass |
| • Polymer dispersant (Solsperse series, produced by Zeneca) | 5 parts by mass |
| • Stearyl acrylate | 75 parts by mass |

### Example 1

### «Preparation of ink compositions»

Using each dispersion prepared as described above, an ink composition of each color was prepared according to a method described below. As the electron transfer initiation system (a) and the colorant (c) constituting the following ink composition, the electron transfer initiator, the sensitizing colorant and the coloring agent (dye) shown in a specific example described above are used, and a combination of alphabets and numbers referring to the specific example is shown below.

### (Yellow Ink 1: Example 1-1)

| | |
|---|---|
| • (a) Electron transfer initiation system | |
| Electron accepting initiator: OI-11 | 3 parts by mass |
| Sensitizing colorant: C-29 (oxidation potential 1.0 | V (vs SCE)) 1 part by mass |
| • (b) Polymerizable compounds | |
| Compound-a with the structure below | 50 parts by mass |
| Compound-b with the structure below | 50 parts by mass |
| • (c) Colorant (yellow pigment dispersion 1) | 5 parts by mass |
| • Ethyl ethanol amine | 1 part by mass |

### Compoumd-a

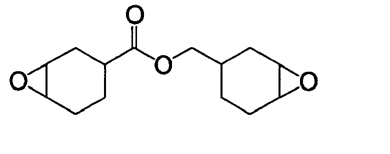

### Compound-b

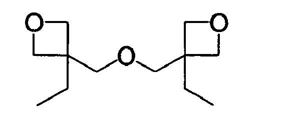

### (Yellow Ink 2: Example 1-2)

| | |
|---|---|
| • (a) Electron transfer initiation system | |
| Electron accepting initiator: Compound with the structure below (LD-5) | |
| | 3 parts by mass |
| Sensitizing colorant: C-29 (oxidation potential 1.0 V (vs SCE)) 1 part by mass | |
| • (b) Polymerizable compounds | |
| Compound-c with the structure below | 30 parts by mass |
| Compound-d with the structure below | 7 parts by mass |
| Stearyl acrylate | 50 parts by mass |
| • (c) Colorant (yellow pigment dispersion 1) | 5 parts by mass |
| • Co-sensitizer (compound-e with the structure below) | 3 parts by mass |
| • Polymerization inhibitor (Kuperon AI, produced by Wako Pure Chemical Industries, Ltd.) | |
| | 1 part by mass |

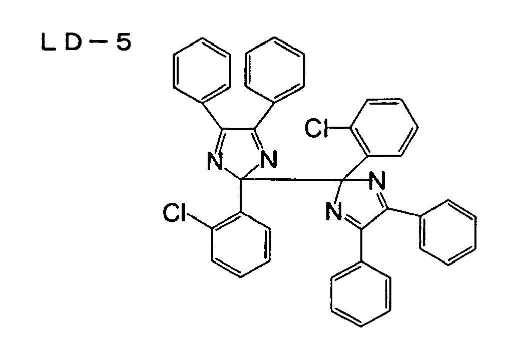

Compound-c:The ends of the condensed product (Mw=1,500) of two-functional urethane acrylate using the compound below 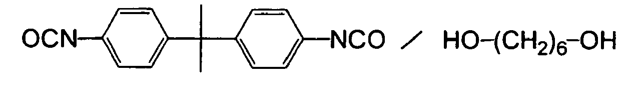 are capped by the compound below.

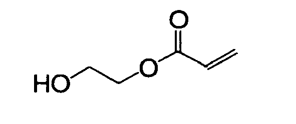

Compound-d:The ends of the condensed product (Mw=1, 500) of six-functional urethane acrylate using the compound below

OCN-(CH₂)₆-NCO / HO-(CH₂)₆-OH

are capped by the compound below.

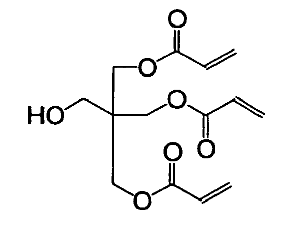

### Compound-e

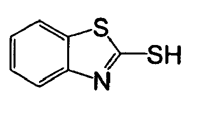

### (Yellow Ink 3: Example 1 -3)

| | |
|---|---|
| • (a) Electron transfer initiation system | |
| Electron accepting initiator: Compound with the structure above (LD-5) | 3 parts by mass |
| Sensitizing colorant: C-30 (oxidation potential 0.79 V (vs SCE)) | 1 part by mass |
| • (b) Polymerizable compounds | |
| ompound-c with the structure above | 30 parts by mass |
| Compound-d with the structure above | 7 parts by mass |
| Stearyl acrylate | 50 parts by mass |
| • (c) Colorant (yellow pigment dispersion 1) | 5 parts by mass |
| • Co-sensitizer (compound-e with the structure above) | 3 parts by mass |
| • Polymerization inhibitor (Kuperon AI, produced by Wako Pure Chemical Industries, Ltd.) | 1 part by mass |

### (Cyan Ink 1: Example 2-1)

| | |
|---|---|
| • (a) Electron transfer initiation system | |
| Electron accepting initiator: OS-6 | 3 parts by mass |
| Sensitizing colorant: C-29 (oxidation potential 1.0 V (vs SCE)) | 1 part by mass |
| • (b) Polymerizable compounds | |
| Compound-a with the structure above | 50 parts by mass |
| Compound-b with the structure above | 50 parts by mass |
| • (c) Colorant (cyan pigment dispersion 1) | 5 parts by mass |
| • Ethyl ethanol amine | 1 part by mass |

### (Cyan Ink 2: Example 2-2)

| | |
|---|---|
| • (a) Electron transfer initiation system | |
| Electron accepting initiator: CGI-784 | |
| ( manufactured by Ciba Specialty Chemicals) | |
| Sensitizing colorant: C-29 (oxidation potential 1.0 V (vs SCE)) | 1 part by mass |
| • (b) Polymerizable compounds | |
| Compound-c with the structure above | 30 parts by mass |
| Compound-d with the structure above | 10 parts by mass |
| Stearyl acrylate | 50 parts by mass |
| • (c) Colorant (cyan pigment dispersion 1) | 5 parts by mass |
| • Polymerization inhibitor (Kuperon AI, produced by Wako Pure Chemical Industries, Ltd.) | |
| | 1 part by mass |

### (Cyan Ink 3: Example 2-3)

| | |
|---|---|
| • (a) Electron transfer initiation system | |
| Electron accepting initiator: CGI-784 | 3 parts by mass |
| (manufactured by Ciba Specialty Chemicals) | |
| Sensitizing colorant: C-29 (oxidation potential 1.0 V (vs SCE)) | 1 part by mass |
| • (b) Polymerizable compounds | |
| Compound-c with the structure above | 30 parts by mass |
| Compound-d with the structure above | 10 parts by mass |
| Stearyl acrylate | 50 parts by mass |
| • (c) Colorant | |
| Dye G-12 (oxidation potential 1.28 V (vs SCE)) | |
| | 5 parts by mass |
| • Polymerization inhibitor (Kuperon AI, produced by Wako | Pure Chemical Industries, Ltd.) |
| | 1 part by mass |

### (Cyan Ink 4: Example 2-4)

| | |
|---|---|
| • (a) Electron transfer initiation system | |
| Electron accepting initiator: CGI-784 | 3 parts by mass |
| (manufactured by Ciba Specialty Chemicals) | |
| Sensitizing colorant: C-29 (oxidation potential 1.0 V (vs SCE)) | 1 part by mass |
| • (b) Polymerizable compounds | |
| Compound-c with the structure above | 30 parts by mass |
| Compound-d with the structure above | 10 parts by mass |
| Stearyl acrylate | 50 parts by mass |
| • (c) Colorant | |
| Dye H-1 (oxidation potential 0.83 V (vs SCE)) | 5 parts by mass |
| • Polymerization inhibitor (Kuperon AI, produced by Wako Pure Chemical Industries, Ltd.) | 1 part by mass |

### (Cyan Ink 5: Comparative Example 1)

| | |
|---|---|
| • (a) Initiation system | |
| Initiator: Irgacure 250 | 3 parts by mass |
| (manufactured by Ciba Specialty Chemicals) | |
| Sensitizing colorant: Dye 1 with the structure | below (oxidation potential 0.66 V |
| (vs SCE)) | 1 part by mass |
| • (b) Polymerizable compounds | |
| Compound-a with the structure above | 50 parts by mass |
| Compound-b with the structure above | 50 parts by mass |
| • (c) Colorant (cyan pigment dispersion 1) | 5 parts by mass |
| • Ethyl ethanol amine | 1 part by mass |

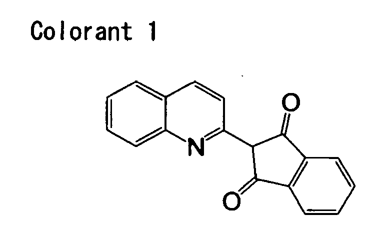

### (Cyan Ink 6: Comparative Example 2)

| | |
|---|---|
| • (a) Initiation system | |
| Initiator: CGI-784 | |
| (manufactured by Ciba Specialty Chemicals) | |
| Sensitizing colorant: Dye 1 with the structure above (oxidation potential 0.66 V (vs SCE)) | 1 part by mass |
| • (b) Polymerizable compounds | |
| Compound-c with the structure above | 30 parts by mass |
| Compound-d with the structure above | 10 parts by mass |
| Stearyl acrylate | 50 parts by mass |
| • (c) Colorant (cyan pigment dispersion 1) | 5 parts by weight |
| • Polymerization inhibitor (Kuperon AI, produced by Wako Pure Chemical Industries, Ltd.) | 1 part by mass |

### (Magenta Ink 1: Example 3-1)

| | |
|---|---|
| • (a) Electron transfer initiation system | |
| Electron accepting initiator: OI-11 | 3 parts by mass |
| ensitizing colorant: C-29 (oxidation potential 1.0 V (vs SCE)) | 1 part by mass |
| • (b) Polymerizable compounds | |
| ompound-a with the structure above | 50 parts by mass |
| Compound-b with the structure above | 50 parts by mass |
| • (c) Colorant (magenta pigment dispersion 1) | 5 parts by mass |
| • Ethyl ethanol amine | 1 part by mass |

### (Magenta Ink 2: Example 3-2)

| | |
|---|---|
| • (a) Electron transfer initiation system | |
| Electron accepting initiator: Compound with the structure above (LD-5) | 3 parts by mass |
| Sensitizing colorant: C-29 (oxidation potential 1.0 V (vs SCE)) | 1 part by mass |
| • (b) Polymerizable compounds | |
| Compound-c with the structure above | 30 parts by mass |
| Compound-d with the structure above | 7 parts by mass |
| Stearyl acrylate | 50 parts by mass |
| • (c) Colorant (magenta pigment dispersion 1) | 5 parts by mass |
| • Co-sensitizer (compound e with the structure above) | 3 parts by mass |
| • Polymerization inhibitor (Kuperon AI, produced by Wako Pure Chemical Industries, Ltd.) | 1 part by mass |

### (Magenta Ink 3: Example 3-3)

| | |
|---|---|
| • (a) Electron transfer initiation system | |
| Electron donating initiator: CGI-7460 | 3 parts by mass |
| (manufactured by Ciba Specialty Chemicals) Sensitizing colorant: B-16 (reduction potential -0.61 V (vs SCE)) | 1 part by mass |
| • (b) Polymerizable compounds | |
| Compound-c with the structure above | 30 parts by mass |
| Compound-d with the structure above | 10 parts by mass |
| Stearyl acrylate | 50 parts by mass |
| • (c) Colorant (magenta pigment dispersion 1) | 5 parts by mass |
| • Polymerization inhibitor (Kuperon AI, produced by Wako Pure Chemical Industries, Ltd.) | 1 part by weight |

### (Magenta Ink 4: Example 3-4)

| | |
|---|---|
| • (a) Electron transfer initiation system | |
| Electron accepting initiator: Compound-f with the structure below | 3 parts by mass |
| Sensitizing colorant: C-29 (oxidation potential 1.0 V (vs SCE)) | 1 part by mass |
| • (b) Polymerizable compounds | |
| Compound-c with the structure above | 30 parts by mass |
| Compound-d with the structure above | 10 parts by mass |
| Stearyl acrylate | 50 parts by mass |
| • (c) Colorant (magenta pigment dispersion 1) | 5 parts by mass |
| • Polymerization inhibitor (Kuperon AI, produced by Wako Pure Chemical Industries, Ltd.) | 1 part by mass |

### Compound-f

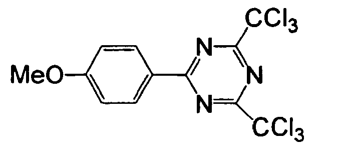

### (Magenta Ink 5: Comparative Example 3)

| | |
|---|---|
| • (a) Electron transfer initiation system | |
| Electron accepting initiator: OI-11 | 3 parts by mass |
| Sensitizing colorant: Dye 2 with the structure below (oxidation potential 1.7 V (vs SCE)) | 1 part by mass |
| • (b) Polymerizable compounds | |
| Compound-c with the structure above | 30 parts by mass |
| Compound-d with the structure above | 10 parts by mass |
| Stearyl acrylate | 50 parts by mass |
| • (c) Colorant (magenta pigment dispersion 1) | 5 parts by mass |
| • Polymerization inhibitor (Kuperon AI, produced by Wako Pure Chemical Industries, Ltd.) | 1 part by mass |

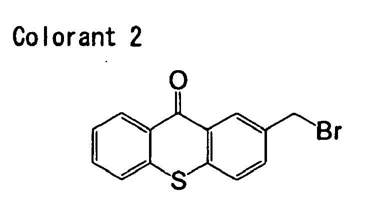

### (Magenta Ink 6: Comparative Example 4)

| | |
|---|---|
| • (a) Initiation system | |
| Initiator: Irgacure 369 (manufactured by Ciba Specialty Chemicals) | 5 parts by mass |
| • (b) Polymerizable compounds | |
| Compound-c with the structure above | 30 parts by mass |
| Compound-d with the structure above | 9 parts by mass |
| Stearyl acrylate | 50 parts by mass |
| • (c) Colorant (magenta pigment dispersion 1) | 5 parts by mass |
| • Polymerization inhibitor (Kuperon AI, produced by Wako Pure Chemical Industries, Ltd.) | 1 part by mass |

### (Magenta Ink 7: Comparative Example 5)

| | |
|---|---|
| • (a) Electron transfer initiation system | |
| Electron donating initiator: CGI-7460 (manufactured by Ciba Specialty Chemicals) | 4 parts by mass |
| Sensitizing colorant: Dye 3 with the structure (vs SCE)) below (reduction potential -1.09 V | 1 part by mass |
| • (b) Polymerizable compounds | |
| Compound-c with the structure above | 30 parts by mass |
| Compound-d with the structure above | 9 parts by mass |
| Stearyl acrylate | 50 parts by mass |
| • (c) Colorant (magenta pigment dispersion 1) | 5 parts by mass |
| • Polymerization inhibitor (Kuperon AI, produced by Wako Pure Chemical Industries, Ltd.) | 1 part by mass |

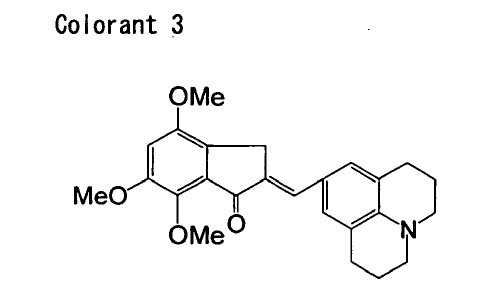

### (Black Ink 1: Example 4-1)

| | |
|---|---|
| • (a) Electron transfer initiation system | |
| Electron accepting initiator: OI-11 | 3 parts by mass |
| Sensitizing colorant: C-30 (oxidation potential 0.79 V (vs SCE)) | 1 part by mass |
| • (b) Polymerizable compounds | |
| Compound-a with the structure above | 50 parts by mass |
| Compound-b with the structure above | 50 parts by mass |
| • (c) Colorant (black pigment dispersion 1) | 5 parts by mass |
| • Ethyl ethanol amine | 1 part by mass |

### (Black Ink 2: Example 4-2)

| | |
|---|---|
| • (a) Electron transfer initiation system | |
| Electron accepting initiator: Compound with the structure above (LD-5) | 3 parts by mass |
| Sensitizing colorant: C-29 (oxidation potential 1.0 V (vs SCE)) | 1 part by mass |
| • (b) Polymerizable compounds | |
| Compound-c with the structure above | 30 parts by mass |
| Compound-d with the structure above | 10 parts by mass |
| Stearyl acrylate | 50 parts by mass |
| • (c) Colorant (black pigment dispersion 1) | 5 parts by mass |
| • Co-sensitizer (compound-e with the structure above) | 3 parts by mass |
| • Polymerization inhibitor (Kuperon AI, produced by Wako Pure Chemical Industries, Ltd.) | 1 part by mass |

The respective crude color compositions prepared above were filtered through a filter having an absolute filtration accuracy of 2 µm to give the respective color ink compositions.

In the ink compositions in the Examples and Comparative Examples above, the viscosity of the ink at the temperature upon ink discharge was in the range of 7 to 20 mPa·s.

### [Ink jet image recording]

The thus prepared ink compositions in the Examples and Comparative Examples were used in printing an image.

Printing an image was conducted by recording it on a support (recording medium) by using a commercial ink jet recording apparatus having a piezo-type ink jet nozzle.

As the used support (recording medium), a sandblasted aluminum support, a surface-treated, transparent biaxially oriented polypropylene film with printing suitability, a soft vinyl chloride sheet, a cast coated paper, and a commercial regenerated paper were used.

An ink feeding system of the ink jet recording apparatus was composed of an original tank, a feeding pipe, an ink feeding tank just before an ink jet head, a filter and a piezo-type ink jet head, and a zone from the ink feeding tank to the ink jet head was thermally insulated and heated. A temperature sensor was arranged in the vicinity of the ink feeding tank and a nozzle of the ink jet head respectively so that the temperature of the nozzle was regulated to be always 70°C ±2°C. The piezo-type ink jet head was driven to discharge 8 to 30 pl multi-size dot at a resolution of 720×720 dpi. After discharge of the ink, UV-LED light having a peak wavelength of 395 nm was collected at a luminous intensity of 100 mW/cm² on the surface of the recording medium, and the light exposure system, the main scanning speed and the discharge frequency were regulated such that irradiation was initiated 0.1 second after discharge of the ink onto the recording medium. The light exposure energy was applied for a variable exposure time. The "dpi" referred to in the invention is indicative of the number of dots per 2.54 cm.

The respective inks in the Examples and Comparative Examples were used, and each ink was discharged at ambient temperature (25°C) and irradiated with the above-mentioned UV-LED light.

### <Evaluation of the ink jet image>

Each of the formed images was evaluated for sensitivity necessary for curing, ink bleeding, adhesion and printing durability on the sandblasted aluminum support, storage stability, and light resistance, by methods described below.

### (Measurement of curing sensitivity)

The amount of exposure light energy (mJ/cm²) at which sticky feel disappeared on the surface of the image after irradiation with UV light was defined as curing sensitivity. A lower amount of the energy is indicative of higher sensitivity.

### (Evaluation of ink bleeding on the sandblasted aluminum support)

The image printed on the sandblasted aluminum support was evaluated for ink bleeding under the following criteria:
G1: No bleeding among adjacent dots.
G2: Slight bleeding of dots.
G3: Bleeding dots to blur the image evidently.

### (Evaluation of adhesion to the sandblasted aluminum support)

With respect to the printed image formed as described above, a sample having no cut on the printed surface, and a sample having 11 cuts at 1-mm intervals lengthwise and breadthwise respectively to form 100 crosscut squares each having a size of 1 mmx 1 mm on the printed surface according to JIS K5400, were prepared, and Cellotape (registered trademark) was stuck on each printed surface and released rapidly at an angle of 90°, and the state of the remaining printed image or the crosscut squares were evaluated under the following criteria:
G1: No release of the printed image is recognized in the crosscut test.
G2: Slight release of the ink is recognized in the crosscut test, but the release is hardly recognized unless the ink surface is cut.
G3: Release of the printed image with Cellotape (registered trademark) is recognized under both the conditions.

### (Evaluation of printing durability)

The image printed above on the sandblasted aluminum support was used as a printing plate for printing with Heidel KOR-D machine, and relative comparison among the respective ink compositions in respect of the number of compete prints was conducted (assuming that the number of complete prints in Example 1 was 100). A larger number is indicative of higher printing durability; that is, the ink composition is preferable.

### (Evaluation of storage stability)

The prepared ink was stored at 60°C for 3 days under 75% RH, and then the viscosity of the ink at the discharge temperature was measured, and the increase in the ink viscosity was expressed as the ratio of the viscosity after storage to the viscosity before storage. A ratio near 1.0 is indicative of excellent storage stability with less change in viscosity, and ink with a ratio of less than 1.5 was judged to be excellent in storage stability.
G1: The viscosity ratio is 1.0 or more to less than 1.5.
G2: The viscosity ratio is 1.5 or more to less than 2.0.
G3: The viscosity ratio is greater than 2.0.

### (Evaluation of light resistance)

The PET film on which the image was formed was irradiated for 3 days with xenon light (85000 1x) by using a weather meter (Atlas C. 165). The image before and after irradiation with xenon light was measured for reflection density with a reflection densitometer (X-Rite 310TR) to determine the degree of the remaining colorant. This degree of the remaining colorant was used as an indicator in evaluation of light resistance.

The degree of the remaining colorant was evaluated in 3 ranks wherein A was given when the degree was 80% or more, B was given when the degree was 70% or more to less than 80%, and C was given when the degree was less than 70%.

The evaluation results are shown in Table 1 below.

**Table 1**

| | | Curing rate (mJ/cm²) | Ink bleeding | Adhesiveness | Printing durability | Storage stability | Light resistance |
|---|---|---|---|---|---|---|---|
| Yellow Ink 1 | Example 1-1 | 100 | G1 | G1 | 100 | G1 | A |
| Yellow Ink 2 | Example 1-2 | 100 | G1 | G1 | 120 | G1 | A |
| Yellow Ink 3 | Example 1-3 | 90 | G1 | G1 | 150 | G1 | A |
| Cyan Ink 1 | Example 2-1 | 100 | G1 | G1 | 100 | G1 | A |
| Cyan Ink 2 | Example 2-2 | 100 | G1 | G1 | 100 | G1 | A |
| Cyan Ink 3 | Example 2-3 | 80 | G1 | G1 | 150 | G1 | A |
| Cyan Ink 4 | Example 2-4 | 120 | G1 | G1 | 90 | G1 | A |
| Cyan Ink 5 | Comparativ e Example 1 | 200 | G2 | G2 | 60 | G1 | B |
| Cyan Ink 6 | Comparativ e Example 2 | 200 | G2 | G2 | 60 | G2 | B |
| Magenta Ink 1 | Example 3-1 | 100 | G1 | G1 | 100 | G1 | A |
| Magenta Ink 2 | Example 3-2 | 90 | G1 | G1 | 120 | G1 | A |
| Magenta Ink 3 | Example 3-3 | 110 | G1 | G1 | 100 | G1 | A |
| Magenta Ink 4 | Example 3-4 | 120 | G1 | G1 | 100 | G1 | A |
| Magenta Ink 5 | Comparative Example 3 | 200 | G2 | G2 | 60 | G1 | B |
| Magenta Ink 6 | Comparative Example 4 | 300 | G3 | G3 | 50 | G3 | C |
| Magenta Ink 7 | Comparative Example 5 | 200 | G2 | G3 | 50 | G3 | B |
| Black Ink 1 | Example 4-1 | 100 | G1 | G1 | 100 | G1 | A |
| Black Ink 2 | Example 4-2 | 90 | G1 | G1 | 120 | G1 | A |

As can be seen from Table 1, any ink compositions in Examples 1-1 to 4-2 (ink compositions of the invention) are highly sensitive toward irradiation with radiation and are also excellent in storage stability. It can be understood that when these ink compositions are used to form images on an aluminum support, high-quality images in the absence of ink bleeding from dots can be formed, and the images are excellent in adhesion to the support. It is found that when the ink composition of the invention is used to produce a printing plate, the resulting printing plate exhibits excellent printing durability. In addition, the resulting images are found to be excellent in light resistance.

Evaluation of the ink bleeding and evaluation of the adhesiveness were also conducted in the same manner as above except that a surface-treated, transparent biaxially oriented polypropylene film with printing suitability, a soft vinyl chloride sheet, a cast coated paper and a commercial regenerated paper were used respectively in place of the aluminum support, and as a result it was found that the same results as in Table 1 can be obtained.

## Claims

1. An ink composition comprising:
a polymerizable compound; and
an electron transfer photo-initiation system having at least one of (i) a combination of an electron donating initiator and a sensitizing colorant having a reduction potential of -1.0V or more represented by any one of the formulae (1) to (4) and (ii) a combination of an electron accepting initiator and a sensitizing colorant having an oxidation potential of 1.6 V or less represented by any one of the formulae (1), (2), (3) and (6): 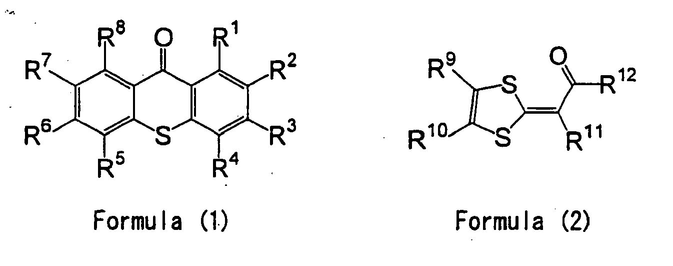 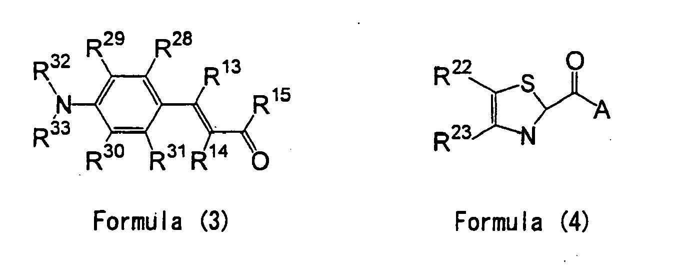 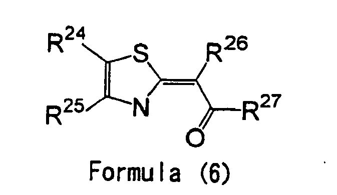
wherein R¹ to R¹⁵ and R²² to R³³ independently represent a monovalent nonmetallic atomic group, and A represents an optionally substituted aromatic ring or an optionally substituted heterocycle; adjacent groups out of R¹ to R¹⁵ and R²² to R³³ may be bound to each other to form a ring structure, and particularly R¹¹ and R¹², R¹³ to R¹⁵ or R²⁶ and R²⁷, may be bound to each other to form an acidic nucleus of the colorant.

2. The ink composition of claim 1, wherein the sensitizing colorant having a reduction potential of -1.0 V or more has a structure represented by any one of the following formulae (7) to (10): 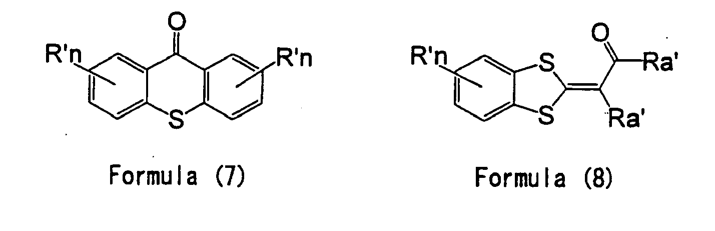 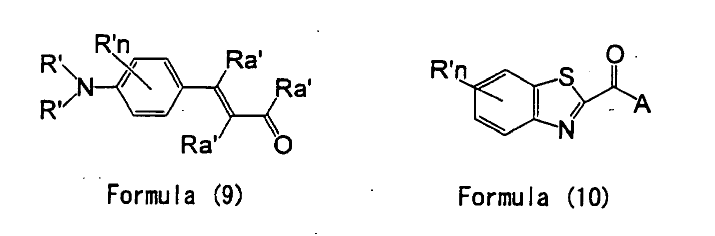 wherein R' and Ra' independently represent a monovalent nonmetallic atomic group, n represents 1 to 4, and A represents an aromatic ring which is allowed to have a substituent group or a heterocycle ring which is allowed to have a substituent group; and adjacent R' groups may be bound to each other to form a ring structure, and adjacent Ra' groups may be bound to each other to form an acidic nucleus of the colorant, provided that at least one of R' and Ra" is an electron attractive substituent group having a Hammett's rule σₚ value of greater than 0.05.

3. The ink composition of claim 1, which comprises the polymerizable compound and the electron transfer photo-initiation system having (ii) the combination of an electron accepting initiator and a sensitizing colorant having an oxidation potential of 1.6 V or less.

4. The ink composition of claim 3, wherein the sensitizing colorant having an oxidation potential of 1.6 V or less has a structure represented by any one of the following formulae (11) to (14): 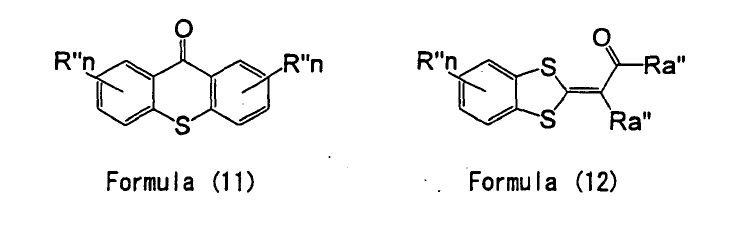 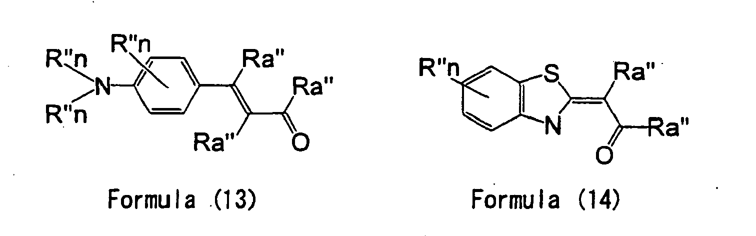 wherein R" and Ra" independently represent a monovalent nonmetallic atomic group, and n represents 1 to 4; and adjacent R" groups may be bound to each other to form a ring structure, and adjacent Ra" groups may be bound to each other to form an acidic nucleus of the colorant, provided that at least one of R" and Ra" is an electron donating substituent group having a Hammett's rule σₚ value of less than -0.1.

5. The ink composition of claim 3, wherein the electron accepting initiator is a compound selected from the group consisting of a compound having a carbon-halogen bond, a compound having a nitrogen-nitrogen bond or a nitrogenous heterocycle-nitrogenous heterocycle bond, an onium compound, an active ester compound, a ferrocene or iron-allene complex compound, and a disulfone compound.

6. The ink composition of claim 5, wherein the onium compound is an onium salt represented by any one of the following formulae (I) to (III):
Formula (I) Ar¹¹-I⁺-Ar¹² (Z¹¹)⁻
Formula (II) Ar²¹-N⁺≡N (Z²¹)⁻ 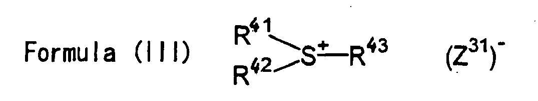
wherein Ar¹¹ and Ar¹² independently represent an aryl group containing 20 or less carbon atoms and which is allowed to have a substituent group, and (Z¹¹)⁻ represents a counterion selected from the group consisting of a halogen ion, a perchlorate ion, a tetrafluoroborate ion, a hexafluorophosphate ion, and a sulfonate ion;
wherein Ar²¹ represents an aryl group having 20 or less carbon atoms and which is allowed to have a substituent group, and (Z²¹)⁻ represents one of the same selection of counterions as (Z¹¹)⁻; and
wherein R⁴¹, R⁴² and R⁴³ may be the same or different, and each represent an aryl group having 20 or less carbon atoms and which is allowed to have a substituent group, and (Z³¹)⁻ represents one of the same selection of counterions as (Z¹¹)⁻.

7. The ink composition of claim 1, which further comprises a colorant.

8. The ink composition of claim 7, wherein the colorant is a pigment or an oil-soluble dye.

9. The ink composition of claim 8, wherein the oxidation potential of the oil-soluble dye is 1.0 V or more with respect to satured calomel electrode (SCE).

10. The ink composition of claim 1, which is for use in ink jet recording.

11. An ink jet recording method, comprising: discharging the ink composition of claim 1 through an ink jet printer onto a recording medium and curing the discharged ink composition by irradiation with radiation.

12. The ink jet recording method of claim 11, wherein the active radiation is emitted from a light-emitting diode generating ultraviolet rays having an emission wavelength peak between 360 and 420 nm and a maximum luminous intensity of 10 to 1,000 mW/cm² on the surface of the recording medium.

13. A printed material prepared by discharging the ink composition of claim 1 through an ink jet printer onto a recording medium and curing the discharged ink composition by irradiation with active radiation.

14. A method of producing a planographic printing plate, which comprises discharging the ink composition of claim 1 onto a hydrophilic support and then curing the ink composition by irradiation with radiation, thereby forming a hydrophobic region.

15. A planographic printing plate having a hydrophobic region formed by discharging the ink composition of claim 1 onto a hydrophilic support and then curing the ink composition by irradiation with radiation.

16. An ink composition according to Claim 1, wherein the polymerizable compound is a cation polymerizable compound.

## Patentansprüche

1. Tintenzusammensetzung, umfassend:
eine polymerisierbare Verbindung; und
ein Elektronentransfer-Fotoinitiationssystem, das zumindest eines aufweist von (i) einer Kombination eines elektronenspendenden Initiators und eines sensibilisierenden Färbemittels mit einem Reduktionspotential von -1,0 V oder größer, dargestellt durch irgendeine der Formeln (1) bis (4), und (ii) einer Kombination eines elektronenaufnehmenden Initiators und eines sensibilisierenden Färbemittels mit einem Oxidationspotential von 1,6 V oder kleiner, dargestellt durch irgendeine der Formeln (1), (2), (3) und (6): 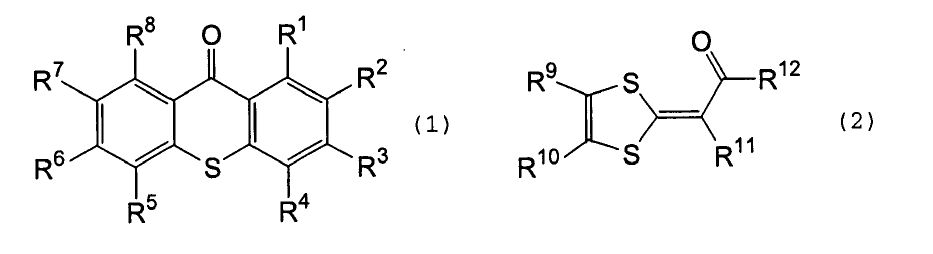 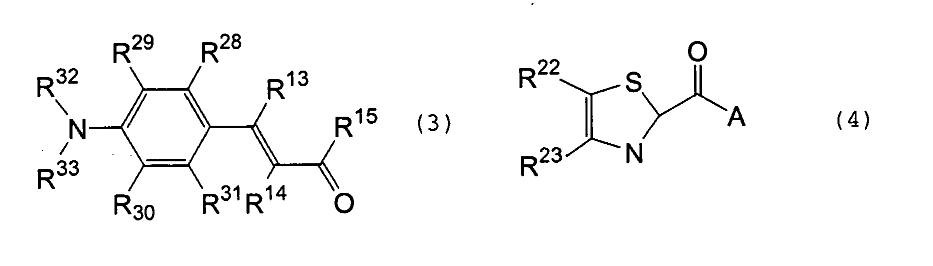 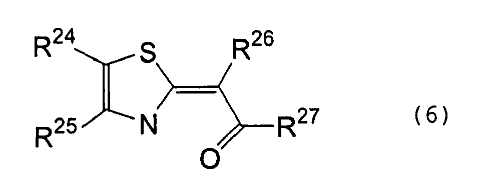
worin R¹ bis R¹⁵ und R²² bis R³³ unabhängig voneinander eine monovalente nichtmetallische atomare Gruppe darstellen und A einen gegebenenfalls substituierten aromatischen Ring oder einen gegebenenfalls substituierten Heterocyclus darstellt; die benachbarten Gruppen von R¹ bis R¹⁵ und R²² bis R³³ miteinander verbunden sein können, um eine Ringstruktur zu bilden, und insbesondere R¹¹ und R¹², R¹³ bis R¹⁵ oder R²⁶ und R²⁷ miteinander verbunden sein können, um einen sauren Kern des Färbemittels zu bilden.

2. Tintenzusammensetzung gemäß Anspruch 1, worin der sensibilisierende Färbestoff mit einem Reduktionspotential von -1,0 V oder größer eine durch irgendeine der folgenden Formeln (7) bis (10) dargestellte Struktur aufweist: 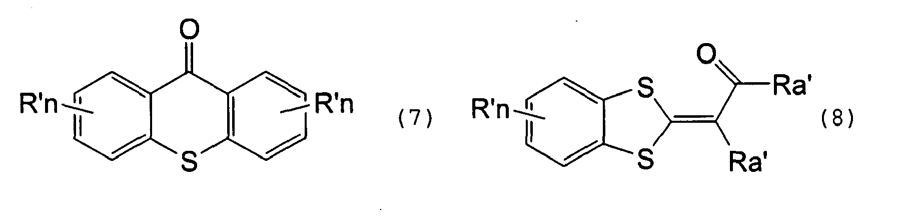 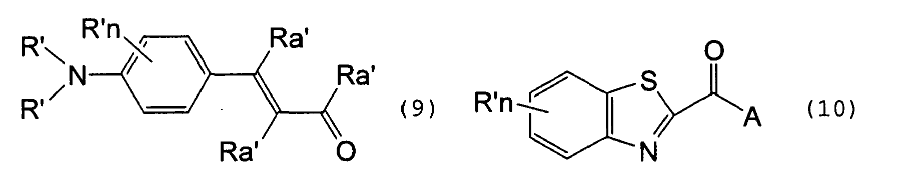 worin R' und Ra' unabhängig voneinander eine monovalente nichtmetallische atomare Gruppe darstellen, n 1 bis 4 darstellt und A einen aromatischen Ring, der eine Substituentengruppe aufweisen darf, oder einen heterocyclischen Ring, der eine Substituentengruppe aufweisen darf, darstellt; und benachbarte R'-Gruppen miteinander verbunden sein können, um eine Ringstruktur zu bilden, und benachbarte Ra'-Gruppen miteinander verbunden sein können, um einen sauren Kern des Färbemittels zu bilden, vorausgesetzt, daß zumindest eines von R' und Ra' eine elektronenziehende Substituentengruppe mit einem σₚ-Wert der Hammett-Regel von größer als 0,05 ist.

3. Tintenzusammensetzung gemäß Anspruch 1, die die polymerisierbare Verbindung und das Elektronentransfer-Fotoinitiationssystem mit (ii) der Kombination eines elektronenaufnehmenden Initiators und eines sensibilisierenden Färbemittels mit einem Oxidationspotential von 1,6 V oder kleiner umfaßt.

4. Tintenzusammensetzung gemäß Anspruch 3, worin das sensibilisierende Färbemittel mit einem Oxidationspotential-von 1,6 V oder kleiner eine durch irgendeine der folgenden Formeln (11) bis (14) dargestellte Struktur aufweist: 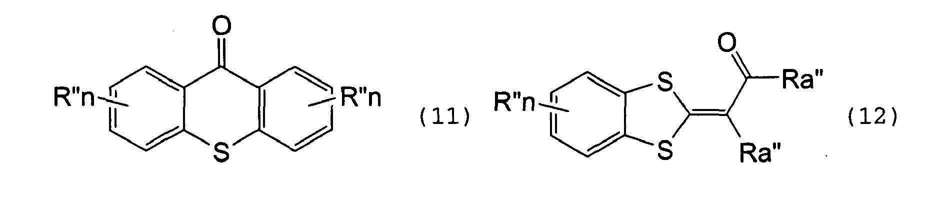 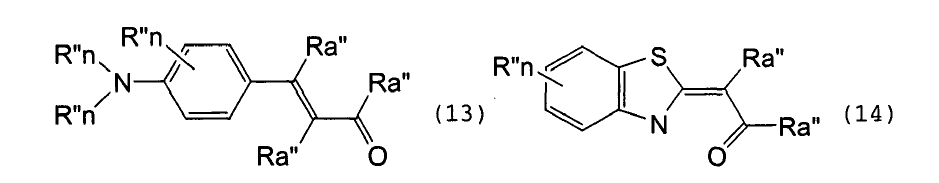 worin R" und Ra" unabhängig voneinander eine monovalente nichtmetallische atomare Gruppe darstellen und n 1 bis 4 darstellt; und benachbarte R"-Gruppen miteinander verbunden sein können, um eine Ringstruktur zu bilden, und benachbarte Ra"-Gruppen miteinander verbunden sein können, um einen sauren Kern des Färbemittels zu bilden, vorausgesetzt, daß zumindest eines von R" und Ra" eine elektronenspendende Substituentengruppe mit einem σₚ-Wert der Hammett-Regel von kleiner als -0,1 ist.

5. Tintenzusammensetzung gemäß Anspruch 3, worin der elektronenaufnehmende Initiator eine Verbindung ist, die ausgewählt ist aus der Gruppe bestehend aus Verbindungen mit einer Kohlenstoff-Halogen-Bindung, Verbindungen mit einer Stickstoff-Stickstoff-Bindung oder einer stickstoffhaltiger Heterocyclus-stickstoffhaltiger Heterocyclus-Bindung, Oniumverbindungen, aktiven Esterverbindungen, Ferrocen- oder Eisen-Allen-Komplexverbindungen und Disulfonverbindungen.

6. Tintenzusammensetzung gemäß Anspruch 5, worin die Oniumverbindung ein durch irgendeine der folgenden Formeln (I) bis (III) dargestelltes Oniumsalz ist:
Ar¹¹ -l⁺-Ar¹² (Z¹¹)⁻ (I)
Ar²¹-N⁺≡N (Z²¹)⁻ (II) 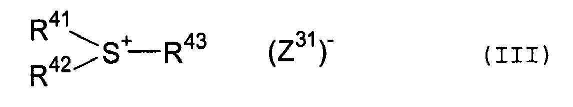
worin Ar¹¹ und Ar¹² unabhängig voneinander eine Arylgruppe darstellen, die 20 oder weniger Kohlenstoffatome umfaßt und die eine Substituentengruppe aufweisen darf, und (Z¹¹)- ein Gegenion darstellt, das ausgewählt ist aus der Gruppe bestehend aus Halogenionen, Perchlorationen, Tetrafluorborationen, Hexafluorphosphationen und Sulfonationen;
worin Ar²¹ eine Arylgruppe darstellt, die 20 oder weniger Kohlenstoffatome aufweist und die eine Substituentengruppe aufweisen darf, und (Z²¹)⁻ eines aus der gleichen Auswahl von Gegenionen wie (Z¹¹)⁻ darstellt; und
worin R⁴¹, R⁴² und R⁴³ gleich oder verschieden sein können und jeweils eine Arylgruppe darstellen, die 20 oder weniger Kohlenstoffatome aufweist und die eine Substituentengruppe aufweisen darf, und (Z³¹)⁻ eines aus der gleichen Auswahl von Gegenionen wie (Z¹¹)⁻ darstellt.

7. Tintenzusammensetzung gemäß Anspruch 1, die ferner ein Färbemittel umfaßt.

8. Tintenzusammensetzung gemäß Anspruch 7, worin das Färbemittel ein Pigment oder ein öllöslicher Farbstoff ist.

9. Tintenzusammensetzung gemäß Anspruch 8, worin das Oxidationspotential des öllöslichen Farbstoffs 1,0 V oder mehr in bezug auf eine gesättigte Kalomelelektrode (SCE) beträgt.

10. Tintenzusammensetzung gemäß Anspruch 1, die für die Verwendung bei der Tintenstrahlaufzeichnung ist.

11. Tintenstrahlaufzeichnungsverfahren, umfassend: Ausstoßen der Tintenzusammensetzung gemäß Anspruch 1 durch einen Tintenstrahldrucker auf ein Aufzeichnungsmedium und Härten der ausgestoßenen Tintenzusammensetzung durch Bestrahlung mit Strahlung.

12. Tintenstrahlaufzeichnungsverfahren gemäß Anspruch 11,
worin die aktive Strahlung von einer LED emittiert wird, die UV-Strahlen mit einer Emissionspeakwellenlänge zwischen 360 und 420 nm und einer maximalen Strahlungsintensität von 10 bis 1.000 mW/cm² auf der Oberfläche des Aufzeichnungsmediums generiert.

13. Drucksache/bedrucktes Material, hergestellt durch Ausstoßen der Tintenzusammensetzung gemäß Anspruch 1 durch einen Tintenstrahldrucker auf ein Aufzeichnungsmedium und Härten der ausgestoßenen Tintenzusammensetzung durch Bestrahlung mit aktiver Strahlung.

14. Verfahren zur Herstellung eines Flachdruckplatte, welches das Ausstoßen der Tintenzusammensetzung gemäß Anspruch 1 auf einen hydrophilen Träger und dann Härten der Tintenzusammensetzung durch Bestrahlung mit Strahlung umfaßt, wodurch ein hydrophober Bereich gebildet wird.

15. Flachdruckplatte mit einem hydrophoben Bereich, gebildet durch Ausstoßen der Tintenzusammensetzung gemäß Anspruch 1 auf einen hydrophilen Träger und dann Härten der Tintenzusammensetzung durch Bestrahlung mit Strahlung.

16. Tintenzusammensetzung gemäß Anspruch 1, worin die polymerisierbare Verbindung eine kationisch polymerisierbare Verbindung ist.

## Revendications

1. Composition d'encre comprenant :
un composé polymérisable ; et
un système photo-initiateur à transfert d'électrons possédant au moins l'une parmi (i) une combinaison d'un initiateur donneur d'électrons et d'un colorant sensibilisateur possédant un potentiel de réduction de -1,0 V ou plus, représenté par l'une quelconque des formules (1) à (4), et (ii) une combinaison d'un initiateur accepteur d'électrons et d'un colorant sensibilisateur possédant un potentiel d'oxydation de 1,6 V ou moins, représenté par l'une quelconque des formules (1), (2), (3) et (6) 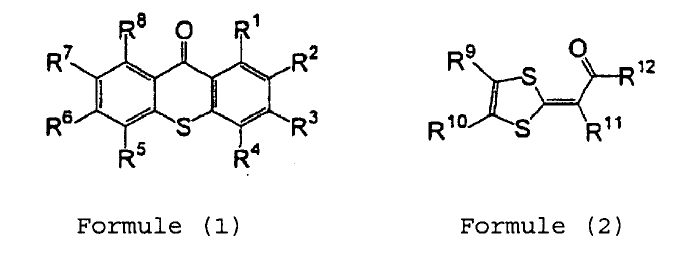 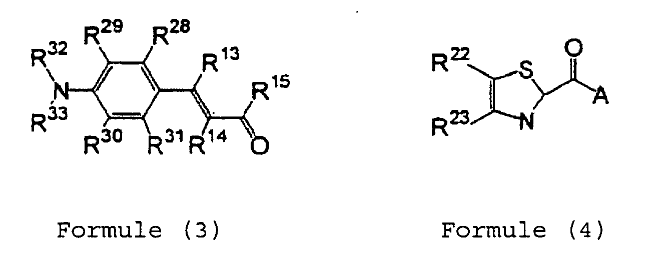 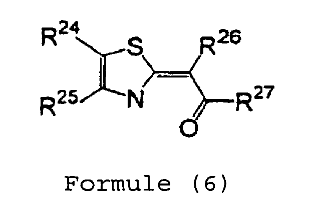 dans lesquelles R¹ à R¹⁵ et R²² à R³³ représentent indépendamment un groupement atomique non métallique, monovalent, et A représente un cycle aromatique éventuellement substitué ou un hétérocycle éventuellement substitué ; des groupements adjacents parmi R¹ à R¹⁵ et R²² à R³³ peuvent être liés les uns aux autres pour former une structure cyclique, et particulièrement R¹¹ et R¹², R¹³ à R¹⁵ ou R²⁶ et R²⁷ peuvent être liés les uns aux autres pour former un noyau acide du colorant.

2. Composition d'encre selon la revendication 1, dans laquelle le colorant sensibilisateur possédant un potentiel de réduction de - 1,0 V ou plus possède une structure représentée par l'une quelconque des formules (7) à (10) qui suivent : 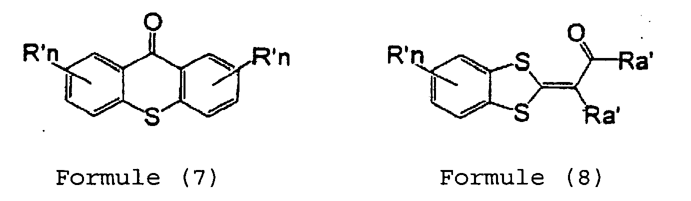 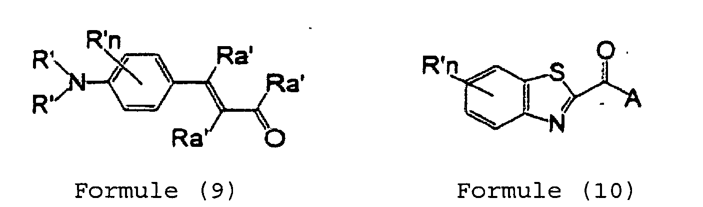 dans lesquelles R' et Ra' représentent indépendamment un groupement atomique non métallique, monovalent, n vaut 1 à 4, et A représente un cycle aromatique qui peut porter un groupement substituant, ou un noyau hétérocyclique qui peut porter un groupement substituant ; et des groupements R' adjacents peuvent être liés les uns aux autres pour former une structure cyclique, et des groupements Ra' adjacents peuvent être liés les uns aux autres pour former un noyau acide du colorant, à la condition qu'au moins l'un des R' et Ra' soit un groupement substituant attirant les électrons, possédant une valeur de σₚ de la loi de Hammett supérieure à 0,05.

3. Composition d'encre selon la revendication 1, qui comprend le composé polymérisable et le système photo-initiateur à transfert d'électrons possédant (ii) la combinaison d'un initiateur accepteur d'électrons et d'un colorant sensibilisateur possédant un potentiel d'oxydation de 1,6 V ou moins.

4. Composition d'encre selon la revendication 3, dans laquelle le colorant sensibilisateur possédant un potentiel d'oxydation de 1,6 V ou moins possède une structure représentée par l'une quelconque des formules (11) à (14) qui suivent : 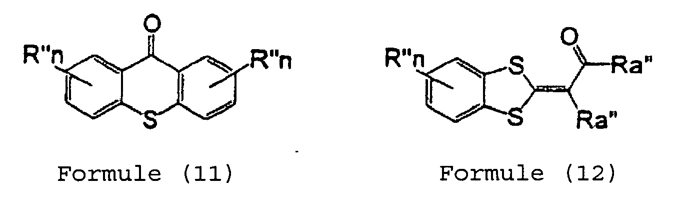 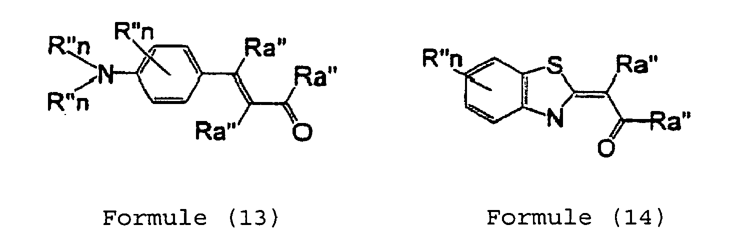 dans lesquelles R" et Ra" représentent indépendamment un groupement atomique non métallique, monovalent, et n vaut 1 à 4 ; et des groupements R" adjacents peuvent être liés les uns aux autres pour former une structure cyclique, et des groupements Ra" adjacents peuvent être liés les uns aux autres pour former un noyau acide du colorant, à la condition qu'au moins l'un des R" et Ra" soit un groupement substituant donneur d'électrons, possédant une valeur de σₚ de la loi de Hammett inférieure à - 0,1.

5. Composition d'encre selon la revendication 3, dans laquelle l'initiateur accepteur d'électrons est un composé choisi dans le groupe formé d'un composé présentent une liaison carbone-halogène, un composé présentant une liaison azote-azote ou une liaison hétérocycle azoté-hétérocycle azoté, un composé onium, un composé ester actif, un ferrocène ou un composé complexe fer-allène et un composé disulfone.

6. Composition d'encre selon la revendication 5, dans laquelle le composé onium est un sel onium représenté par l'une quelconque des formules (I) à (III) qui suivant
Formule (I) Ar¹¹-l⁺-Ar¹² (Z¹¹)⁻
Formule (II) Ar²¹-N⁺≡N (Z²¹)⁻ 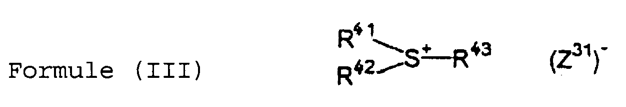
dans lesquelles Ar¹¹ et Ar¹² représentent indépendamment un groupement aryle contenant 20 atomes de carbone ou moins, et qui peut porter un groupement substituant, et (Z¹¹)⁻ représente un contre-ion choisi dans le groupe formé d'un ion halogène, un ion perchlorate, un ion tétrafluoroborate, un ion hexafluorophosphate et un ion sulfonate ;
dans lesquelles Ar²¹ représente un groupement aryle comptant 20 atomes de carbone ou moins, et qui peut porter un groupement substituant, et (Z²¹)⁻ représente l'un parmi le même choix de contre-ions que (Z¹¹)⁻ ; et
dans lesquelles R⁴¹, R⁴² et R⁴³ peuvent être identiques ou différents, et représentent chacun un groupement aryle comptant 20 atomes de carbone ou moins, et qui peut porter un groupement substituant, et (Z³¹)⁻ représente l'un parmi le même choix de contre-ions que (Z¹¹)⁻.

7. Composition d'encre selon la revendication 1, comprenant en outre un colorant.

8. Composition d'encre selon la revendication 7, dans laquelle le colorant est un pigment ou une matière colorante soluble dans l'huile.

9. Composition d'encre selon la revendication 8, dans laquelle le potentiel d'oxydation de la matière colorante soluble dans l'huile est de 1,0 V ou plus, par rapport à une électrode au calomel saturée (SCE).

10. Composition d'encre selon la revendication 1, à utiliser dans une impression à jet d'encre.

11. Procédé d'impression à jet d'encre, comprenant les étapes consistant à appliquer la composition d'encre de la revendication 1, par l'intermédiaire d'une imprimante à jet d'encre, sur un milieu d'impression, et à faire durcir la composition d'encre appliquée par irradiation par un rayonnement.

12. Procédé d'impression à jet d'encre selon la revendication 11, dans lequel le rayonnement actif est émis par une diode électroluminescente générant un rayonnement ultraviolet avec un pic d'émission à une longueur d'onde entre 360 et 420 nm, et une intensité lumineuse maximale de 10 à 1000 mW/cm² sur la surface du milieu d'impression.

13. Matériau imprimé préparé par application de la composition d'encre de la revendication 1, par l'intermédiaire d'une imprimante à jet d'encre, sur un milieu d'impression, et durcissement de la composition d'encre appliquée par irradiation par un rayonnement actif.

14. Procédé de production d'une plaque d'impression planographique, qui comprend les étapes consistant à appliquer la composition d'encre de la revendication 1 sur un support hydrophile, et à faire durcir ensuite la composition d'encre par irradiation par un rayonnement, formant ainsi une région hydrophobe.

15. Plaque d'impression planographique possédant une région hydrophobe formée par application de la composition d'encre de la revendication 1 sur un support hydrophile, et ensuite durcissement de la composition d'encre par irradiation par un rayonnement.

16. Composition d'encre selon la revendication 1, dans laquelle le composé polymérisable est un composé à polymérisation cationique.
